# EUROPEAN PATENT SPECIFICATION

(11) **EP 3 739 833 B1**
(45) Date of publication and mention of the grant of the patent: **28.09.2022**
(21) Application number: 18905660.9
(22) Date of filing: 12.02.2018
(51) Int. Cl.: H04L 27/26, H04L 5/00

(54) **DATA TRANSMISSION METHOD AND DEVICE**
DATENÜBERTRAGUNGSVERFAHREN UND -VORRICHTUNG
PROCÉDÉ ET DISPOSITIF DE TRANSMISSION DE DONNÉES

(43) Date of publication of application: 18.11.2020
(73) Proprietor: HUAWEI TECHNOLOGIES CO., LTD., Shenzhen, Guangdong 518129 (CN)
(72) Inventor: ZHENG, Juan, Shenzhen, Guangdong 518129 (CN); LI, Chaojun, Shenzhen, Guangdong 518129 (CN)
(74) Representative: Pfenning, Meinig & Partner mbB
(86) International application number: PCT/CN2018/076584
(87) International publication number: WO 2019/153369

(56) References cited:
- WO-A1-2015/000171
- CN-A- 106 464 642
- CN-A- 106 471 759
- US-A1- 2015 373 694
- HUAWEI ET AL: "On UL DMRS indication for 2/3-symbol sPUSCH", 3GPP DRAFT; R1-1706985, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Hangzhou, China; 20170515 - 20170519 14 May 2017 (2017-05-14), XP051272215, Retrieved from the Internet: URL:http://www.3gpp.org/ftp/Meetings_3GPP_ SYNC/RAN1/Docs/ [retrieved on 2017-05-14]
- ERICSSON: "On UL DMRS position for 2os TTI", 3GPP DRAFT; R1-1708859, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Hangzhou; 20170515 - 20170519 6 May 2017 (2017-05-06), XP051262726, Retrieved from the Internet: URL:http://www.3gpp.org/ftp/tsg_ran/WG1_RL 1/TSGR1_89/Docs/ [retrieved on 2017-05-06]
- HUAWEI: "Summary of email discussion [90b-LTE-16] on SPS details", 3GPP DRAFT; R1-1719958, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Reno, USA; 20171127 - 20171201 17 November 2017 (2017-11-17), XP051369210, Retrieved from the Internet: URL:http://www.3gpp.org/ftp/tsg%5Fran/WG1% 5FRL1/TSGR1%5F91/Docs/ [retrieved on 2017-11-17]
- HUAWEI: "Summary of email discussion [90b-LTE-16] on SPS details", 3GPP TSG RAN WG1 Meeting #91 R1-1719958, 1 December 2017 (2017-12-01), XP051369210,

## Description

### TECHNICAL FIELD

Embodiments of this application relate to the communications field, and in particular, to a data transmission method and a device.

### BACKGROUND

For a long term evolution (Long Term Evaluation, LTE) system, data transmission includes an uplink scheduling process and a downlink scheduling process. The LTE system is a centralized scheduling system. Therefore, in the uplink scheduling process, uplink data transmission is usually scheduled by a base station in a centralized manner. Specifically, when a terminal device needs to transmit uplink data, the terminal device first needs to send a scheduling request (Scheduling Request, SR) to the base station, to request an uplink transmission resource required for transmitting the uplink data. After receiving the SR, the base station may determine, based on the SR, whether to allocate the uplink transmission resource to the terminal device, and when determining to allocate the uplink transmission resource, send an uplink grant (Uplink Grant, UL grant) to the terminal device. The UL grant includes control information such as a specific indication of the uplink transmission resource allocated to the terminal device. After receiving the UL grant, the terminal device may make preparations for uplink data transmission based on the control information in the UL grant. After the preparations are completed, the terminal device may transmit the uplink data on the uplink transmission resource indicated by the control information. In addition, to enable the terminal device to learn of a status of receiving the transmitted uplink data on a base station side, the base station may further feed back hybrid automatic repeat request acknowledgement (Hybrid Auto Repeat Request Acknowledgement, HARQ-ACK) information to the terminal device, to indicate whether the uplink data is correctly received.

In addition, with development of mobile communications technologies, currently, regardless of a system further evolved based on the LTE system or a 5th generation mobile communications technology such as a new radio (New Radio, NR)-based system, one of key technologies is an ultra-reliable low-latency communication (Ultra-Reliability Low Latency Communication, URLLC) technology. This technology has requirements on a data transmission latency and data transmission reliability. For example, an LTE URLLC system further evolved based on the LTE system needs to meet at least the following: (1) Uplink data transmission reliability needs to reach 99.999% within 1 millisecond (ms). (2) Uplink data transmission reliability needs to reach 99.99% within 10 ms. However, if the uplink data is transmitted in the foregoing uplink scheduling process, a transmission latency greatly increases because the terminal device needs to first request the uplink grant from the base station. Based on this, an uplink grant free (UL grant free)-based uplink data transmission mechanism is proposed in the prior art. In this transmission mechanism, when the terminal device needs to transmit uplink data, the terminal device can directly transmit the uplink data without a need for an uplink grant from the base station. In this way, an uplink data transmission latency can be effectively ensured. In addition, in this transmission mechanism, because the terminal device does not need to send an SR and the base station does not need to send a UL grant for at least initial transmission, for initial transmission of the uplink data of the terminal device, data transmission reliability can be ensured only by ensuring reliability of the uplink data transmitted by the terminal device.

In the prior art, in the UL grant free-based uplink data transmission mechanism, an uplink data repeat transmission mechanism may be used. To be specific, the terminal device may repeatedly transmit a transport block (Transmission Block, TB) (a quantity of times of repeated transmission is greater than or equal to 1), to meet a data transmission reliability requirement in terms of a specific latency requirement. In addition, to improve transmission reliability through repeated transmission, the base station needs to accurately determine a location at which the terminal device transmits the uplink data, so as to correctly obtain the uplink data through demodulation. However, in the prior art, in the UL grant free-based uplink data transmission mechanism, no solution can be used to ensure that the base station can accurately determine the location at which the terminal device transmits the uplink data. Likewise, for downlink data transmission, if a scheduling free-based downlink data transmission mechanism is used to reduce a downlink data transmission latency, the terminal device needs to accurately determine a location at which the base station transmits downlink data, so as to correctly obtain the downlink data through demodulation. In the prior art, no solution can be used to ensure that the terminal device can accurately determine the location at which the base station sends the downlink data.
HUAWEI ET AL.: "On UL DMRS indication for 2/3-symbol sPUSCH", 3GPP DRAFT, R1-1706985, 14 May 2017, discloses that the UL DMRS is positioned after the associated sTTI in the case of DMRS sharing/multiplexing for 2/3-symbol sTTI.
ERICSSON: "On UL DMRS position for 2os TTI", 3GPP DRAFT, R1-1708859, 6 May 2017, discloses that for 2/3-symbol sPUSCH transmission patterns including both data and the associated RS.
HUAWEI: "Summary of email discussion [90b-LTE-16] on SPS details", 3GPP DRAFT, R1-1719958, 17 November 2017, discloses DMRS position patterns indicated by a UL grant scheduling sPUSCH in sTTI n.

### SUMMARY

The present invention is set out in the independent claims whereas preferred embodiments and further implementations are outlined in the dependent claims, description and figures.

### BRIEF DESCRIPTION OF DRAWINGS

FIG. 1 is a simplified schematic diagram of a communications system according to an embodiment of this application;
FIG. 2 is a schematic composition diagram of a network device according to an embodiment of this application;
FIG. 3 is a schematic composition diagram of a terminal device according to an embodiment of this application;
FIG. 4 is a schematic flowchart of a data transmission method according to an embodiment of this application;
FIG. 5 is a schematic diagram of a data transmission pattern set according to an embodiment of this application;
FIG. 6 is a schematic diagram of another data transmission pattern set according to an embodiment of this application;
FIG. 7 is a schematic diagram of another data transmission pattern set according to an embodiment of this application;
FIG. 8 is a schematic diagram of another data transmission pattern set according to an embodiment of this application;
FIG. 9 is a schematic diagram of another data transmission pattern set according to an embodiment of this application;
FIG. 10 is a schematic diagram of another data transmission pattern set according to an embodiment of this application;
FIG. 11 is a schematic diagram of another data transmission pattern set according to an embodiment of this application;
FIG. 12 is a schematic diagram of another data transmission pattern set according to an embodiment of this application;
FIG. 13 is a schematic diagram of another data transmission pattern set according to an embodiment of this application;
FIG. 14 is a schematic diagram of another data transmission pattern set according to an embodiment of this application;
FIG. 15 is a schematic diagram of another data transmission pattern set according to an embodiment of this application;
FIG. 16 is a schematic diagram of another data transmission pattern set according to an embodiment of this application;
FIG. 17 is a schematic diagram of another data transmission pattern set according to an embodiment of this application;
FIG. 18 is a schematic diagram of another data transmission pattern set according to an embodiment of this application;
FIG. 19 is a schematic diagram of another data transmission pattern set according to an embodiment of this application;
FIG. 20 is a schematic diagram of another data transmission pattern set according to an embodiment of this application;
FIG. 21 is a schematic diagram of another data transmission pattern set according to an embodiment of this application;
FIG. 22 is a schematic diagram of another data transmission pattern set according to an embodiment of this application;
FIG. 23 is a schematic diagram of an sTTI data structure according to an embodiment of this application;
FIG. 24 is a schematic diagram of another sTTI data structure according to an embodiment of this application;
FIG. 25 is a schematic diagram of another data transmission pattern set according to an embodiment of this application;
FIG. 26 is a schematic diagram of another data transmission pattern set according to an embodiment of this application;
FIG. 27 is a schematic diagram of another data transmission pattern set according to an embodiment of this application;
FIG. 28 is a schematic diagram of another data transmission pattern set according to an embodiment of this application;
FIG. 29 is a schematic diagram of another data transmission pattern set according to an embodiment of this application;
FIG. 30 is a schematic diagram of another data transmission pattern set according to an embodiment of this application;
FIG. 31 is a schematic diagram of another data transmission pattern set according to an embodiment of this application;
FIG. 32 is a schematic diagram of another data transmission pattern set according to an embodiment of this application;
FIG. 33 is a schematic diagram of another data transmission pattern set according to an embodiment of this application;
FIG. 34 is a schematic diagram of another data transmission pattern set according to an embodiment of this application;
FIG. 35 is a schematic diagram of another data transmission pattern set according to an embodiment of this application;
FIG. 36 is a schematic flowchart of another data transmission method according to an embodiment of this application;
FIG. 37 is a schematic diagram of another data transmission pattern set according to an embodiment of this application;
FIG. 38 is a schematic diagram of another data transmission pattern set according to an embodiment of this application;
FIG. 39 is a schematic diagram of another data transmission pattern set according to an embodiment of this application;
FIG. 40 is a schematic diagram of a data transmission pattern according to an embodiment of this application;
FIG. 41 is a schematic composition diagram of a first device according to an embodiment of this application;
FIG. 42 is a schematic composition diagram of another first device according to an embodiment of this application;
FIG. 43 is a schematic composition diagram of a second device according to an embodiment of this application; and
FIG. 44 is a schematic composition diagram of another second device according to an embodiment of this application.

### DESCRIPTION OF EMBODIMENTS

The invention is defined by the appended claims. The following terms "first" and "second" are merely intended for a purpose of description, and shall not be understood as an indication or implication of relative importance or implicit indication of a quantity of indicated technical features. Therefore, a feature limited by "first" or "second" may explicitly or implicitly include one or more features. In the description of the embodiments of this application, unless otherwise stated, "a plurality of" means two or more than two.

In the embodiments of this application, the word "example", "for example", or the like is used to represent giving an example, an illustration, or a description. Any embodiment or design scheme described as an "example" or "for example" in the embodiments of this application should not be explained as being more preferred or having more advantages than another embodiment or design scheme. Exactly, use of the word "example", "for example", or the like is intended to present a related concept in a specific manner.

The embodiments of this application provide a data transmission method. The method is applied to a data transmission process in a grant free-based data transmission mechanism. The data transmission process may be specifically a downlink data transmission process in the grant free-based data transmission mechanism or an uplink data transmission process in the grant free-based data transmission mechanism. According to the data transmission method provided in the embodiments of this application, it can be ensured, in the grant free-based data transmission mechanism, that a receive end can accurately determine a location at which a transmit end transmits data.

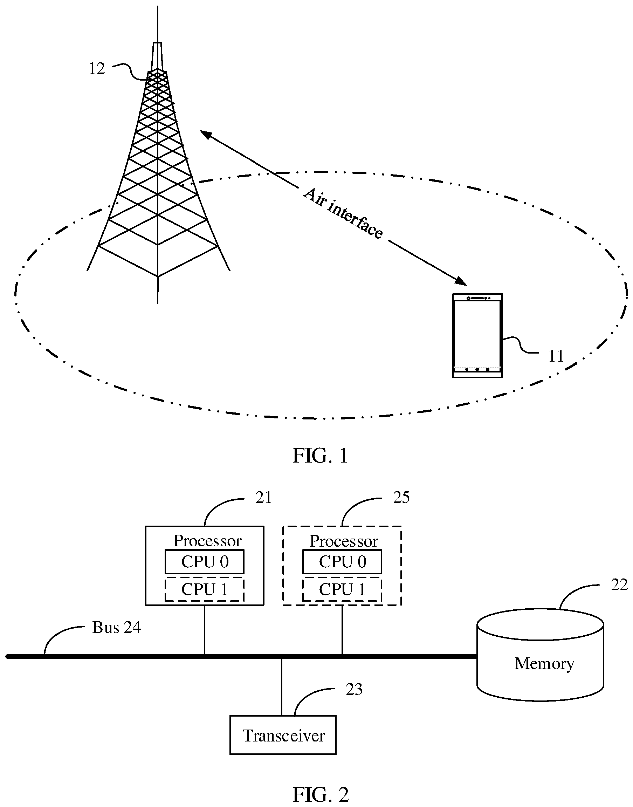

FIG. 1 is a simplified schematic diagram of a communications system according to an embodiment of this application. The communications system may be a wireless communications system such as a 3rd generation (the third Generation Telecommunication, 3G) system, an LTE system, a 4.5G system, or an NR system, or may be a system further evolved based on the LTE system or the NR system, for example, an LTE URLLC system, or may be a future wireless communications system. This is not limited herein. As shown in FIG. 1, the communications system may include a terminal device 11 and a network device 12.

The terminal device 11 may communicate with the network device 12 over an air interface (Air interface).

The terminal device 11 is a device that includes a wireless transceiver function and that can cooperate with a network-side device such as an access network device and/or a core network device to provide a communications service for a user.

The terminal device 11 may be a wireless terminal or a wired terminal. The wireless terminal may be a device that provides voice and/or data connectivity for the user, a handheld device with a wireless connection function, or another processing device connected to a wireless modem. The wireless terminal may communicate with one or more core networks or the internet through a radio access network (for example, Radio Access Network, RAN). The wireless terminal may be a mobile terminal, for example, a mobile phone (or referred to as a "cellular" phone), a computer, or a data card. For example, the wireless terminal may be a portable, pocket-sized, handheld, computer built-in, or in-vehicle mobile apparatus, which exchanges voice and/or data with the radio access network. For example, the wireless terminal may be a device such as a personal communications service (Personal Communication Service, PCS) phone, a cordless phone, a session initiation protocol (SIP) phone, a wireless local loop (WLL, Wireless Local Loop) station, or a personal digital assistant (Personal Digital Assistant, PDA). The wireless terminal may also be referred to as a system, a subscriber unit (Subscriber Unit), a subscriber station (Subscriber Station), a mobile station (Mobile Station), a mobile console (Mobile), a remote station (Remote Station), an access point (Access Point), a remote terminal (Remote Terminal), an access terminal (Access Terminal), a user terminal (User Terminal), a user agent (User Agent), a subscriber station (Subscriber Station, SS), customer-premises equipment (Customer Premises Equipment, CPE), UE, or the like. For example, the terminal device 11 may be a mobile phone, a tablet computer, a notebook computer, an ultra-mobile personal computer (Ultra-mobile Personal Computer, UMPC), a netbook, a personal digital assistant (Personal Digital Assistant, PDA), a relay, or the like.

The network device 12 may be specifically a base station. The base station may be a wireless communications base station (Base Station, BS), a base station controller, or the like. Alternatively, the network device 12 may be referred to as a wireless access point, a transceiver station, a relay station, a cell, a transmission reception point (Transmit and Receive Port, TRP), or the like. Specifically, the network device 12 is an apparatus that is deployed in a radio access network and that is configured to provide a wireless communication function for the terminal device 11. The network device 12 may be connected to the terminal device 11, receive data sent by the terminal device 11, and send the data to a core network device. A main function of the network device 12 includes one or more of the following functions: radio resource management, internet protocol (Internet Protocol, IP) header compression, user data flow encryption, MME selection when user equipment is attached, routing user plane data to a serving gateway (Service Gateway, SGW), paging message organization and sending, broadcast message organization and sending, measurement for mobility or scheduling, measurement report configuration, and the like. The network device 12 may include a cellular base station, a home evolved NodeB (Home evolved Node, HeNB), a cell, a wireless transmission point, a macro base station, a micro base station, a relay (Relay) station, a wireless access point, and the like in various forms.

The base station may have different names in systems using different radio access technologies. For example, the base station is referred to as an evolved NodeB (evolved NodeB, eNB or eNodeB) in an LTE system; the base station is referred to as a NodeB (NodeB) in a 3G system; the base station is referred to as a gNB, a CU, a DU, or the like in an NR system; and the base station is referred to as an access point (Access Point) in a wireless local access system. With evolution of communications technologies, the name may change. In addition, in another possible case, the network device 12 may be another apparatus that provides a wireless communication function for the terminal device 11. For ease of description, in the embodiments of this application, the apparatus that provides the wireless communication function for the terminal device 11 is referred to as a network device.

The foregoing cell may be a cell corresponding to a base station. The cell may belong to a macro base station, or may belong to a base station corresponding to a small cell (small cell). The small cell herein may include a metro cell (Metro cell), a micro cell (Micro cell), a pico cell (Pico cell), a femto cell (Femto cell), or the like. These small cells have characteristics of small coverage and low transmit power, and are applicable to providing a high-rate data transmission service. On a carrier in an LTE system or an NR system, a plurality of cells may work at a same frequency at the same time. In some special scenarios, it may be considered that a concept of the carrier is equivalent to a concept of the cell. For example, in a carrier aggregation (Carrier Aggregation, CA) scenario, when a secondary carrier is configured for a terminal device, a carrier index of the secondary carrier and a cell identifier (Cell Identify, Cell ID) of a secondary cell working on the secondary carrier are carried. In this case, it may be considered that the concept of the carrier is equivalent to the concept of the cell. For example, that the terminal device accesses a carrier is equivalent to that the terminal device accesses a cell. There are similar descriptions in a dual connectivity (Dual Connectivity, DC) scenario.

It should be noted that the technical solutions provided in this application may be applied to a licensed spectrum, or may be applied to a license-free spectrum. This is not specifically limited in the embodiments of this application.

FIG. 2 is a schematic composition diagram of a network device according to an embodiment of this application. As shown in FIG. 2, the network device may include at least one processor 21, a memory 22, a transceiver 23, and a bus 24.

The following describes the components of the network device in detail with reference to FIG. 2.

The processor 21 is a control center of the network device, and may be one processor or may be a collective name of a plurality of processing elements. For example, the processor 21 is a central processing unit (Central Processing Unit, CPU), or may be an application-specific integrated circuit (Application Specific Integrated Circuit, ASIC), or may be configured as one or more integrated circuits implementing this embodiment of this application, for example, one or more microprocessors (Digital Signal Processor, DSP) or one or more field programmable gate arrays (Field Programmable Gate Array, FPGA).

The processor 21 may run or execute a software program stored in the memory 22, and invoke data stored in the memory 22, to perform various functions of the network device.

In specific implementation, in an embodiment, the processor 21 may include one or more CPUs, for example, a CPU 0 and a CPU 1 that are shown in FIG. 2.

In specific implementation, in an embodiment, the network device may include a plurality of processors, for example, the processor 21 and a processor 25 that are shown in FIG. 2. Each of the processors may be a single-core processor (single-CPU) or may be a multi-core processor (multi-CPU). The processor herein may be one or more devices, circuits, and/or processing cores configured to process data (for example, a computer program instruction).

The memory 22 may be a read-only memory (Read-Only Memory, ROM) or another type of static storage device capable of storing static information and instructions, or a random access memory (Random Access Memory, RAM) or another type of dynamic storage device capable of storing information and instructions, or may be an electrically erasable programmable read-only memory (Electrically Erasable Programmable Read-Only Memory, EEPROM), a compact disc read-only memory (Compact Disc Read-Only Memory, CD-ROM) or other compact disc storage, optical disc storage (including a compressed optical disc, a laser disc, an optical disc, a digital versatile optical disc, a blue-ray optical disc, or the like), a magnetic disk storage medium or another magnetic storage device, or any other medium capable of carrying or storing expected program code in a form of instructions or data structures and capable of being accessed by a computer, but is not limited thereto. The memory 22 may exist independently, and is connected to the processor 21 through the bus 24. Alternatively, the memory 22 may be integrated into the processor 21.

The memory 22 is configured to store the software program for performing the solutions of this application, and the processor 21 controls execution of the software program.

The transceiver 23 is configured to communicate with another device or a communications network. For example, the transceiver 23 is configured to communicate with the communications network, such as the Ethernet, a radio access network (radio access network, RAN), or a wireless local area network (Wireless Local Area Networks, WLAN). The transceiver 23 may include all or a part of a baseband processor, and may further optionally include an RF processor. The RF processor is configured to send or receive an RF signal. The baseband processor is configured to process a baseband signal converted from the RF signal or a baseband signal to be converted into the RF signal.

The bus 24 may be an industry standard architecture (Industry Standard Architecture, ISA) bus, a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, and the like. For ease of representation, only one thick line is used to represent the bus in FIG. 2, but this does not mean that there is only one bus or only one type of bus.

The device structure shown in FIG. 2 does not constitute a limitation on the network device. The network device may include more or fewer components than those shown in the figure, or combine some components, or have a different component arrangement.

It should be noted that, in this embodiment of this application, when the network device serves as a receive end device, the transceiver 23 may be replaced with a receiver; or when the network device serves as a transmit end device, the transceiver 23 may be replaced with a transmitter. Certainly, regardless of whether the network device serves as the receive end device or the transmit end device, a case in which the network device has both a sending function and a receiving function, in other words, includes the transceiver 23 is not excluded.

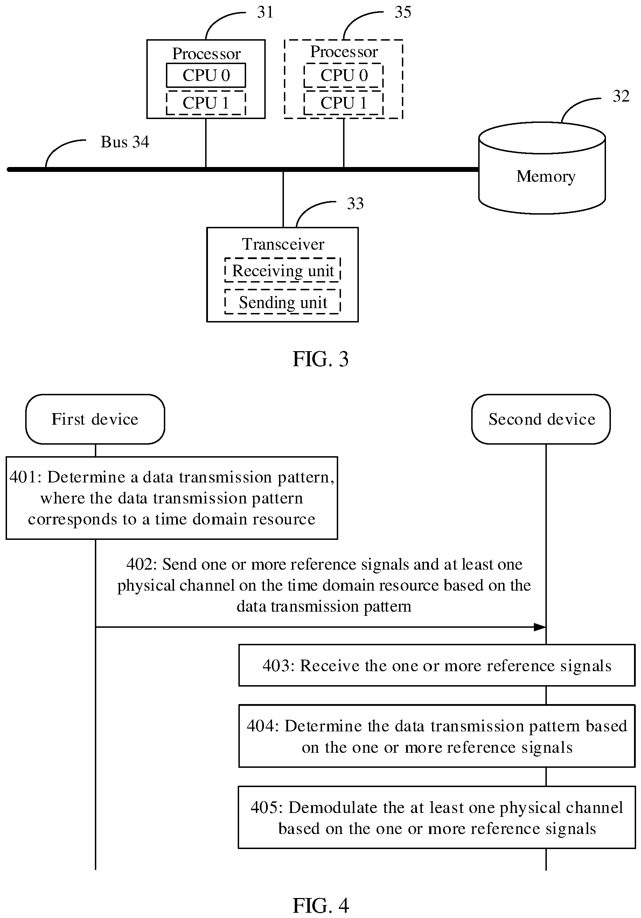

FIG. 3 is a schematic composition diagram of a terminal device according to an embodiment of this application. As shown in FIG. 3, the terminal device may include at least one processor 31, a memory 32, a transceiver 33, and a bus 34.

The following describes the components of the terminal device in detail with reference to FIG. 3.

The processor 31 may be one processor, or may be a collective name of a plurality of processing elements. For example, the processor 31 may be a general-purpose CPU, an ASIC, or one or more integrated circuits configured to control program execution in the solutions of this application, for example, one or more DSPs or one or more FPGAs. The processor 31 may run or execute a software program stored in the memory 32, and invoke data stored in the memory 32, to perform various functions of the terminal device.

In specific implementation, in an embodiment, the processor 31 may include one or more CPUs. For example, as shown in FIG. 3, the processor 31 includes a CPU 0 and a CPU 1.

In specific implementation, in an embodiment, the terminal device may include a plurality of processors. For example, as shown in FIG. 3, the terminal device includes the processor 31 and a processor 35. Each of the processors may be a single-CPU or may be a multi-CPU. The processor herein may refer to one or more devices, circuits, and/or processing cores configured to process data (for example, a computer program instruction).

The memory 32 may be a ROM or another type of static storage device capable of storing static information and instructions, or a RAM or another type of dynamic storage device capable of storing information and instructions, or may be an EEPROM, a CD-ROM or other compact disc storage, optical disc storage (including a compressed optical disc, a laser disc, an optical disc, a digital versatile optical disc, a blue-ray optical disc, or the like), a magnetic disk storage medium or another magnetic storage device, or any other medium capable of carrying or storing expected program code in a form of instructions or data structures and capable of being accessed by a computer, but is not limited thereto. The memory 32 may exist independently, and is connected to the processor 31 through the bus 34. Alternatively, the memory 32 may be integrated into the processor 31.

The transceiver 33 is configured to communicate with another device or a communications network, such as the Ethernet, a RAN, or a WLAN. The transceiver 33 may include a receiving unit for implementing a receiving function and a sending unit for implementing a sending function.

The bus 34 may be an ISA bus, a PCI bus, an EISA bus, or the like. The bus may be classified into an address bus, a data bus, a control bus, and the like. For ease of representation, only one thick line is used to represent the bus in FIG. 3, but this does not mean that there is only one bus or only one type of bus.

The device structure shown in FIG. 3 does not constitute a limitation on the terminal device. The terminal device may include more or fewer components than those shown in the figure, or combine some components, or have a different component arrangement. Although not shown, the terminal device may further include a battery, a camera, a Bluetooth module, a global positioning system (Global Position System, GPS) module, a display, and the like. Details are not described herein.

It should be noted that, in this embodiment of this application, when the terminal device serves as a receive end device, the transceiver 33 may be replaced with a receiver; or when the terminal device serves as a transmit end device, the transceiver 33 may be replaced with a transmitter. Certainly, regardless of whether the terminal device serves as the receive end device or the transmit end device, a case in which the terminal device has both a sending function and a receiving function, in other words, includes the transceiver 23 is not excluded.

FIG. 4 is a flowchart of a data transmission method according to an embodiment of this application. As shown in FIG. 4, the method may include the following steps.

It should be noted that the method provided in this embodiment of this application may be applied to a data transmission process in a grant free-based data transmission mechanism. Specifically, the method may be applied to an uplink data transmission process in the grant free-based data transmission mechanism, or may be applied to a downlink data transmission process in the grant free-based data transmission mechanism. In addition, in this embodiment of this application, the grant free-based data transmission mechanism may be implemented based on a semi-persistent scheduling (Semi-persistent Scheduling, SPS) mechanism or may be implemented through configuration based on higher layer signaling. It should be noted that, for a process of implementing data transmission in the grant free-based data transmission mechanism based on the SPS mechanism, refer to descriptions in the prior art, for example, an SPS mechanism in an LTE mechanism. Details are not described in this embodiment of this application. A manner in which configuration based on higher layer signaling is performed for implementation may include the following: All data transmission parameters and/or resources required for scheduling free-based data transmission are configured by using higher layer signaling, for example, are notified by using radio resource control (Radio Resource Control, RRC) signaling. Different from the SPS mechanism, in the manner in which configuration based on higher layer signaling is performed for implementation, a network device such as a base station does not need to send physical layer activation signaling to a terminal device. After correctly receiving (or correctly obtaining through demodulation) content notified by the higher layer signaling, the terminal device may consider that the data transmission parameters and/or resources corresponding to scheduling free-based data transmission take effect. "Take effect" means that the terminal device can transmit data based on the data transmission parameters and/or resources.

401: A first device determines a data transmission pattern, where the data transmission pattern corresponds to a time domain resource.

In this embodiment of this application, that the data transmission pattern corresponds to the time domain resource may be understood as that the data transmission pattern is used to indicate the time domain resource used during data transmission. For example, the data transmission pattern is used to indicate a location of the time domain resource used during data transmission. For ease of description, in this embodiment of this application, an example in which the data transmission pattern is used to indicate the time domain resource used during data transmission is used for specific description, and "indicate" does not represent an action.

Specifically, the data transmission pattern is used to indicate symbols that are in the time domain resource corresponding to the data transmission pattern and that are used for one or more reference signals and at least one physical channel. To be specific, in this embodiment of this application, at least one symbol in the time domain resource corresponding to the data transmission pattern is used to transmit the one or more reference signals, and the one or more reference signals are used to demodulate the at least one physical channel. The physical channel may be a physical uplink control channel (Physical Uplink Control Channel, PUCCH), and/or a physical uplink shared channel (Physical Uplink Shared Control, PUSCH), or a physical channel used in an LTE system, an NR system, or a future wireless communications evolved system. Alternatively, the reference signal is used by a second device to determine discontinuous transmission (Discontinuous Transmission, DTX). It should be noted that, in this embodiment of this application, for ease of subsequent description, R is used to represent the reference signal, and D is used to represent the physical channel.

For example, the method in this embodiment of this application is applied to the uplink data transmission process in the grant free-based data transmission mechanism. The reference signal may be a demodulation reference signal (Demodulation Reference Signal, DMRS) used to demodulate uplink service data and/or control data, for example, a DMRS used to demodulate uplink service data carried on a PUSCH. An access network device may determine, by blindly detecting existence of the DMRS, whether the terminal device transmits the uplink service data. It should be noted that the reference signal may alternatively be represented in another form. This is not specifically limited in this embodiment of this application.

For another example, the method in this embodiment of this application is applied to the uplink data transmission process in the grant free-based data transmission mechanism. The reference signal may be directly understood as a DMRS used to demodulate a PUSCH and/or a PUCCH.

It should be noted that, in this embodiment of this application, one or more reference signals included in a data transmission pattern may not only be used to identify the data transmission pattern corresponding to the reference signal, but also may be used to perform at least one of the following: demodulating a physical channel included in the data transmission pattern including the reference signal, and demodulating a physical channel included in a data transmission pattern that does not include the reference signal.

In this embodiment of this application, the reference signal corresponds to the data transmission pattern. Specifically, a quantity and/or locations of symbols used for the one or more reference signals uniquely correspond to the data transmission pattern. In this way, the second device may determine the data transmission pattern based on a detected reference signal, to determine, based on the time domain resource corresponding to the data transmission pattern, the time domain resource used by the first device to send data, so as to ensure correct receiving of the sent data. For example, the second device may determine the data transmission pattern based on a location of the detected reference signal.

In this embodiment of this application, the data transmission pattern is one of at least two data transmission patterns included in a data transmission pattern set.

Locations of symbols in the time domain resource that correspond to different data transmission patterns in the data transmission pattern set and that are used for the one or more transmission reference signals are different, and/or quantities of symbols in the time domain resource that correspond to different data transmission patterns in the data transmission pattern set and that are used for the one or more reference signals are different.

In some embodiments, the data transmission pattern set may be predefined. When the first device is a terminal device, in other words, when the method in this embodiment of this application is applied to the uplink data transmission process in the grant free-based data transmission mechanism, the data transmission pattern may be preconfigured, or may be indicated by a network device such as an access network device by using higher layer signaling or physical layer signaling. For example, when uplink data transmission in the grant free-based data transmission mechanism is implemented based on the SPS mechanism, the data transmission pattern set may be indicated by the access network device by using higher layer signaling when the access network device configures an SPS service, or the data transmission pattern may be indicated in the following manner: When configuring an SPS service, the access network device first indicates a plurality of data transmission pattern sets by using higher layer signaling, and then indicates the specifically used data transmission pattern set by using physical layer signaling. Further, the first device such as the terminal device may obtain the data transmission pattern set according to the indication of the higher layer signaling and the physical layer signaling that are sent by the access network device.

For example, when the first device needs to transmit data, the first device may determine, from the data transmission pattern set, a data transmission pattern that can be currently used for data transmission. For example, the first device may select, as a determined data transmission pattern, a data transmission pattern that is at a location of the time domain resource and that is closest to a moment at which the data needs to be transmitted.

402: The first device sends the one or more reference signals and the at least one physical channel on the time domain resource based on the data transmission pattern.

After determining the data transmission pattern, the first device may send, based on the determined data transmission pattern, the data on the time domain resource corresponding to the data transmission pattern.

403: The second device receives the one or more reference signals.

The second device may determine, by blindly detecting existence of the reference signal, whether the first device transmits the data.

404: The second device determines the data transmission pattern based on the one or more reference signals.

The time domain resource corresponding to the data transmission pattern includes the one or more reference signals R and the at least one physical channel D.

After the second device detects the reference signal, in this embodiment of this application, because the data transmission pattern used by the first device to send the data corresponds to the reference signal, for example, a location of a symbol, in the time domain resource, that corresponds to the data transmission pattern used by the first device to send the data and that is used for the one or more reference signals is different from a location of a symbol, in the time domain resource, that corresponds to another data transmission pattern in the data transmission pattern set and that is used for the one or more reference signals, or a quantity of symbols in the time domain resource that correspond to the data transmission pattern used by the first device to send the data and that are used for the one or more reference signals is different from a quantity of symbols in the time domain resource that correspond to another data transmission pattern in the data transmission pattern set and that are used for the one or more reference signals, the second device may determine, based on the detected reference signal, the data transmission pattern used by the first device to send the data.

For example, when the location of the symbol, in the time domain resource, that corresponds to the data transmission pattern used by the first device to send the data and that is used for the one or more reference signals is different from the location of the symbol, in the time domain resource, that corresponds to the another data transmission pattern in the data transmission pattern set and that is used for the one or more reference signals, the second device may determine, based on a location of a symbol occupied by the detected reference signal, the data transmission pattern used by the first device to send the data.

405: The second device demodulates the at least one physical channel based on the one or more reference signals.

After determining the data transmission pattern used by the first device to transmit the data, the second device may determine, based on the determined data transmission pattern, the data transmitted on the time domain resource corresponding to the data transmission pattern.

It may be understood that, when transmitting the data, the first device needs to use the time domain resource and a frequency domain resource. The time domain resource and the frequency domain resource may be referred to as a time-frequency resource. For example, the terminal device may transmit the data by using a preconfigured time-frequency resource or a time-frequency resource indicated by the access network device. In this embodiment of this application, the time domain resource that needs to be used by the first device to transmit the data may be indicated by using the data transmission pattern. Further, the frequency domain resource that needs to be used by the first device to transmit the data may also be indicated by using the data transmission pattern. In other words, in this embodiment of this application, the data transmission pattern may be used to indicate both the time domain resource used during data transmission and the frequency domain resource used during data transmission. Certainly, the data transmission pattern may alternatively not be used to indicate the frequency domain resource used during data transmission. In this case, the frequency domain resource used during data transmission may be preconfigured, or when the first device is the terminal device, the frequency domain resource may be indicated by the access network device to the terminal device by using signaling. This is not specifically limited in this embodiment of this application.

It should be noted that, in this embodiment of this application, the first device is a transmit end device, and the second device is a receive end device. Specifically, when the foregoing method is applied to the uplink data transmission process in the grant free-based data transmission mechanism, the first device may be the terminal device, and the second device may be the network device such as the access network device. When the foregoing method is applied to the downlink data transmission process in the grant free-based data transmission mechanism, the first device may be the network device such as the access network device, and the second device may be the terminal device.

In addition, in this embodiment of this application, the time domain resource corresponding to the data transmission pattern may correspond to one or more transmission time intervals (Transmission Time Interval, TTI). In this embodiment of this application, one transmission time interval may include N symbols (symbol), where N is a positive integer, and duration of the transmission time interval is not specifically limited in this embodiment of this application. In other words, a value of N is not limited in this embodiment of this application. For example, one transmission time interval may be one subframe (subframe), one slot (slot), one mini-slot (mini-slot), short transmission duration (short Transmission Duration, STD), or one short transmission time interval (short Transmission Time Interval, sTTI). In an LTE system, one slot is 0.5 ms and includes seven or six symbols, and one subframe is 1 ms and includes 14 or 12 symbols. In an NR system, one slot includes 14 or 12 symbols. In the NR system, one subframe is 1 ms and may include one symbol, two symbols, four symbols, eight symbols, 16 symbols, or 32 symbols. The STD may include two, three, or seven symbols. The sTTI may include two, three, or seven symbols. In addition, a time length of the symbol is not limited in this embodiment of this application. For example, for different subcarrier spacings, one symbol may have different time lengths. The foregoing symbol may usually include an uplink symbol and a downlink symbol. The uplink symbol may be referred to as a single carrier-frequency division multiple access (single carrier-frequency division multiple access, SC-FDMA) symbol, or may be referred to as an orthogonal frequency division multiplexing (orthogonal frequency division multiplexing, OFDM) symbol. The downlink symbol may be referred to as an OFDM symbol. It should be noted that, if a new uplink multiple access manner or downlink multiple access manner is introduced in a subsequent technology, "symbol" may be still used for naming. In addition, the uplink multiple access manner and the downlink multiple access manner are not specifically limited in this application.

For ease of understanding by a person skilled in the art, the following uses examples to describe a specific implementation of the foregoing data transmission pattern set. In addition, in the following examples, an example in which one data transmission pattern corresponds to one or more sTTIs, and the sTTI may include two or three symbols is used to describe the data transmission pattern set. In addition, for ease of description, in the following specific examples, an example in which the reference signal is a DMRS is used for description.

First, it should be noted that in this embodiment of this application, a first time unit may be a time unit including 14 symbols. For example, the first time unit may be a subframe (whose corresponding length or corresponding duration is 1 ms) including 14 symbols in the LTE system, or may be a slot including 14 symbols in the NR system, or may be represented in another form. This is not limited in this application. For ease of description, in the following examples, an example in which the first time unit is the subframe (duration of the subframe is 1 ms) including 14 symbols in the LTE system is used for description. However, it may be understood that this embodiment of this application is also applicable to another representation form of the first time unit. In addition, in this embodiment of this application, one first time unit such as one subframe including 14 symbols may be further divided into a plurality of sTTIs.

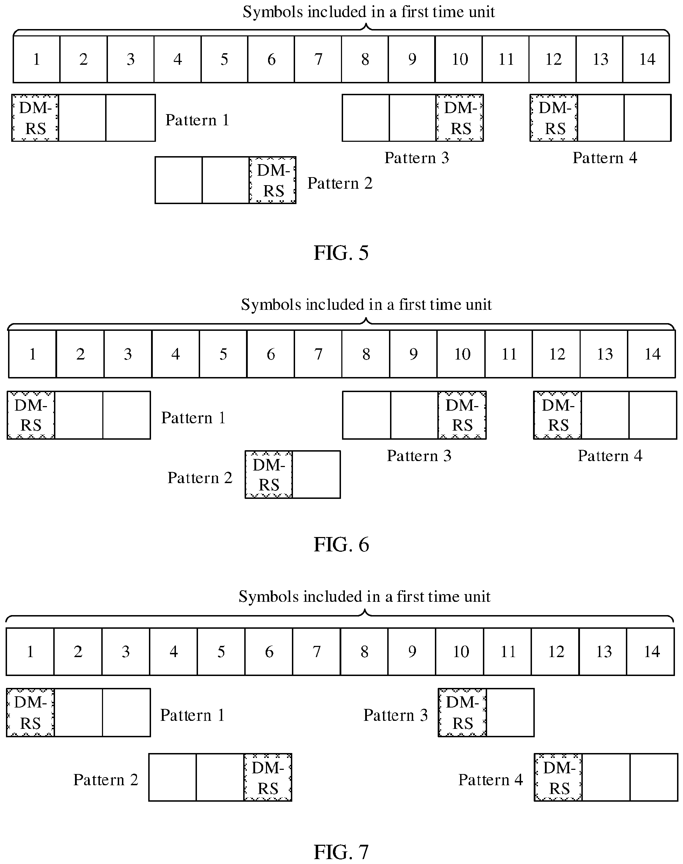

In an example 1, with reference to FIG. 5, the data transmission pattern set may include at least two of the following data transmission patterns: a pattern 1 used to indicate three consecutive symbols starting from the first symbol in the first time unit, where the three consecutive symbols are successively used to transmit R, D, and D; a pattern 2 used to indicate three consecutive symbols starting from the fourth symbol in the first time unit, where the three consecutive symbols are successively used to transmit D, D, and R; a pattern 3 used to indicate three consecutive symbols starting from the eighth symbol in the first time unit, where the three consecutive symbols are successively used to transmit D, D, and R; and a pattern 4 used to indicate three consecutive symbols starting from the twelfth symbol in the first time unit, where the three consecutive symbols are successively used to transmit R, D, and D.

It may be learned that each data transmission pattern included in the data transmission pattern set shown in FIG. 5 indicates a location of a time domain resource required for data transmission, in other words, indicates a location of a symbol required for data transmission, and specifically indicates which type of data is to be transmitted on a specific symbol or specific symbols. In addition, the indicated symbols used to transmit the data are consecutive in terms of time. In this embodiment of this application, the data may be understood as a reference signal and a physical channel.

For example, the data transmission pattern set shown in FIG. 5 includes four different data transmission patterns: the pattern 1, the pattern 2, the pattern 3, and the pattern 4.

The pattern 1 is used to indicate that a location of a time domain resource used during data transmission is specifically three consecutive symbols starting from the first symbol in a subframe, and specifically indicates that the three consecutive symbols are successively used to transmit R, D, and D. In this way, when the pattern 1 is used for data transmission, the location of the time domain resource used for data transmission is the first symbol, the second symbol, and the third symbol in the subframe, the first symbol is used to transmit a reference signal, and the second symbol and the third symbol each are used to transmit a physical channel.

The pattern 2 is used to indicate that a location of a time domain resource used during data transmission is specifically three consecutive symbols starting from the fourth symbol in the subframe, and specifically indicates that the three consecutive symbols are successively used to transmit D, D, and R. In this way, when the pattern 2 is used for data transmission, the location of the time domain resource used for data transmission is the fourth symbol, the fifth symbol, and the sixth symbol in the subframe, the fourth symbol and the fifth symbol each are used to transmit a physical channel, and the sixth symbol is used to transmit a reference signal.

The pattern 3 is used to indicate that a location of a time domain resource used during data transmission is specifically three consecutive symbols starting from the eighth symbol in the subframe, and specifically indicates that the three consecutive symbols are successively used to transmit D, D, and R. In this way, when the pattern 3 is used for data transmission, the location of the time domain resource used for data transmission is the eighth symbol, the ninth symbol, and the tenth symbol in the subframe, the eighth symbol and the ninth symbol each are used to transmit a physical channel, and the tenth symbol is used to transmit a reference signal.

The pattern 4 is used to indicate that a location of a time domain resource used during data transmission is specifically three consecutive symbols starting from the twelfth symbol in the subframe, and specifically indicates that the three consecutive symbols are successively used to transmit R, D, and D. In this way, when the pattern 4 is used for data transmission, the location of the time domain resource used for data transmission is the twelfth symbol, the thirteenth symbol, and the fourteenth symbol in the subframe, the twelfth symbol is used to transmit a reference signal, and the thirteenth symbol and the fourteenth symbol each are used to transmit a physical channel.

In addition, it should be noted that, in this embodiment of this application, a frequency domain resource included in a symbol used to transmit a reference signal may be further used to transmit data in addition to being used to transmit the reference signal.

It should be noted that, in this embodiment of this application, one symbol that is included or indicated in the data transmission pattern and that is used to transmit D may be understood as follows: the symbol is correspondingly used to transmit one physical channel or a part of one physical channel. Particularly, if a transmit end device can send a plurality of physical channels at a same moment, it may be further understood that one symbol that is included or indicated in the data transmission pattern and that is used to transmit D is correspondingly used to transmit a plurality of physical channels or a part of the plurality of physical channels. The plurality of physical channels may be the same or may be different. This is not specifically limited. For example, the transmit end device is a terminal device. If the terminal device supports uplink multiple input multiple output (Multiple Input Multiple Output, MIMO) transmission, one symbol that is included or indicated in the data transmission pattern and that is used to transmit D may be correspondingly used to transmit a plurality of PUSCHs or a part of the plurality of PUSCHs. When the terminal device supports to send a PUSCH and a PUCCH at a same moment, one symbol that is included or indicated in the data transmission pattern and that is used to transmit D may be correspondingly used to transmit the PUSCH and the PUCCH or a part of the PUSCH and the PUCCH. In this embodiment of this application, that the terminal device simultaneously transmits a plurality of PUSCHs may also be understood as that the terminal device simultaneously transmits a plurality of TBs at a same moment. Each PUSCH may correspond to transmission of one TB. For example, the data transmission pattern is "the pattern used to indicate the three consecutive symbols starting from the first symbol included in the first time unit, where the three consecutive symbols are successively used to transmit R, D, and D". The second symbol that is included in the first time unit and that is indicated in the data transmission pattern is used to transmit D, and the symbol may correspond to partial transmission of one PUSCH or PUCCH. In other words, the second symbol and the third symbol that are included in the first time unit and that are indicated in the data transmission pattern are used to transmit D, and the two symbols correspond to one time of complete transmission of one PUSCH or PUCCH. In other words, in this case, one physical channel occupies the two symbols for transmission.

It may be understood that, in different subframes (1 ms), the foregoing pattern may repeatedly appear. To be specific, in different subframes, the foregoing pattern repeatedly appears according to the pattern 1, the pattern 2, the pattern 3, and the pattern 4. In addition, each data transmission pattern included in the data transmission pattern set shown in FIG. 5 includes a same quantity of symbols used for data transmission. Therefore, when all data transmission patterns correspond to a same frequency domain resource, a same modulation and coding scheme (Modulation Coding Scheme, MCS) may be used to transmit a same amount of valid information in different data transmission patterns. In this embodiment of this application, a bit quantity of the valid information may be represented by using a transport block size (Transmission Block Size, TBS).

In an example 2, with reference to FIG. 6, the data transmission pattern set may include at least two of the following data transmission patterns: a pattern 1 used to indicate three consecutive symbols starting from the first symbol in the first time unit, where the three consecutive symbols are successively used to transmit R, D, and D; a pattern 2 used to indicate two consecutive symbols starting from the sixth symbol in the first time unit, where the two consecutive symbols are successively used to transmit R and D; a pattern 3 used to indicate three consecutive symbols starting from the eighth symbol in the first time unit, where the three consecutive symbols are successively used to transmit D, D, and R; and a pattern 4 used to indicate three consecutive symbols starting from the twelfth symbol in the first time unit, where the three consecutive symbols are successively used to transmit R, D, and D.

In an example 3, with reference to FIG. 7, the data transmission pattern set may include at least two of the following data transmission patterns: a pattern 1 used to indicate three consecutive symbols starting from the first symbol in the first time unit, where the three consecutive symbols are successively used to transmit R, D, and D; a pattern 2 used to indicate three consecutive symbols starting from the fourth symbol in the first time unit, where the three consecutive symbols are successively used to transmit D, D, and R; a pattern 3 used to indicate two consecutive symbols starting from the tenth symbol in the first time unit, where the two consecutive symbols are successively used to transmit R and D; and a pattern 4 used to indicate three consecutive symbols starting from the twelfth symbol in the first time unit, where the three consecutive symbols are successively used to transmit R, D, and D.

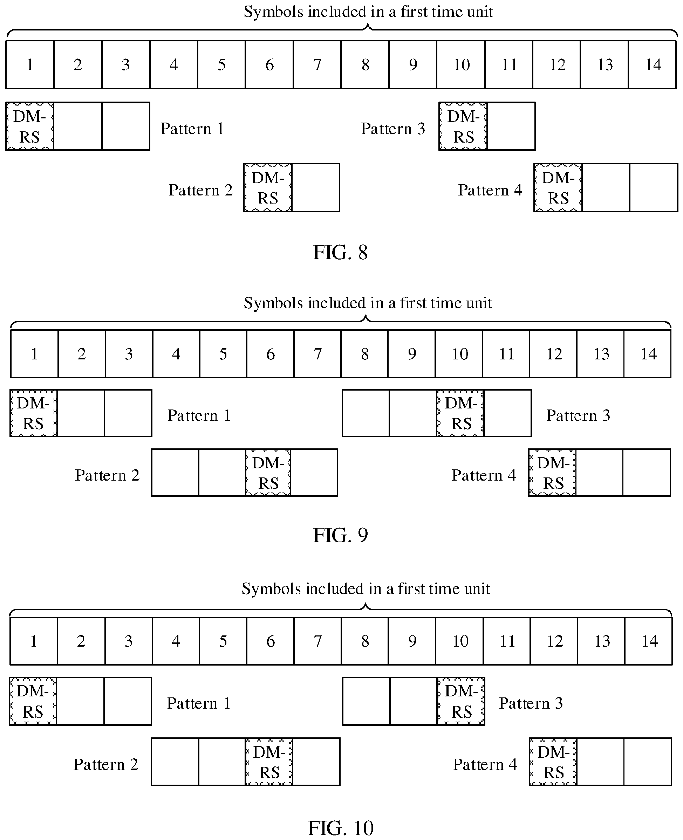

In an example 4, with reference to FIG. 8, the data transmission pattern set may include at least two of the following data transmission patterns: a pattern 1 used to indicate three consecutive symbols starting from the first symbol in the first time unit, where the three consecutive symbols are successively used to transmit R, D, and D; a pattern 2 used to indicate two consecutive symbols starting from the sixth symbol in the first time unit, where the two consecutive symbols are successively used to transmit R and D; a pattern 3 used to indicate two consecutive symbols starting from the tenth symbol in the first time unit, where the two consecutive symbols are successively used to transmit R and D; and a pattern 4 used to indicate three consecutive symbols starting from the twelfth symbol in the first time unit, where the three consecutive symbols are successively used to transmit R, D, and D.

Referring to the data transmission pattern set shown in FIG. 8, it can be learned that, in each data transmission pattern included in the data transmission pattern set, a symbol used to transmit a reference signal is the first symbol in a time domain resource indicated by the data transmission pattern. Therefore, the receive end device such as the network device may not need to buffer, in advance, the data sent by the transmit end device, but first determine whether a reference signal exists on the first symbol corresponding to the data transmission pattern, to determine whether the first device such as the terminal device transmits the data by using the data transmission pattern. This reduces a buffer size of the receive end device, and decreases implementation costs of a buffer component of the receive end device. For example, the pattern 1 in the figure is used as an example. It is assumed that the terminal device sends uplink data to the terminal device by using the pattern 1. It can be learned that a time domain resource that is used to transmit the data and that is indicated by the pattern 1 is the first symbol, the second symbol, and the third symbol in the first time unit, and the first symbol is used to transmit a reference signal and is the first symbol in the pattern 1. In this case, the network device may first detect whether a reference signal is transmitted on the first symbol in the first time unit, and if the reference signal is transmitted on the first symbol in the first time unit, determine that the terminal device transmits the uplink data by using the pattern 1.

In an example 5, with reference to FIG. 9, the data transmission pattern set may include at least two of the following data transmission patterns: a pattern 1 used to indicate three consecutive symbols starting from the first symbol in the first time unit, where the three consecutive symbols are successively used to transmit R, D, and D; a pattern 2 used to indicate four consecutive symbols starting from the fourth symbol in the first time unit, where the four consecutive symbols are successively used to transmit D, D, R, and D; a pattern 3 used to indicate four consecutive symbols starting from the eighth symbol in the first time unit, where the four consecutive symbols are successively used to transmit D, D, R, and D; and a pattern 4 used to indicate three consecutive symbols starting from the twelfth symbol in the first time unit, where the three consecutive symbols are successively used to transmit R, D, and D.

Referring to the data transmission pattern set shown in FIG. 9, it can be learned that, in a subframe including 14 symbols, there are a relatively large quantity of symbols used for data transmission. In this way, data transmission reliability can be ensured, and a receive side can correctly receive data transmitted based on the data transmission pattern.

It should be noted that, referring to the pattern 2 and the pattern 3 in FIG. 9, if an sTTI structure in the LTE system is used, the pattern 2 and the pattern 3 each correspond to two sTTIs. To be specific, for the pattern 2, a time domain resource corresponding to the first symbol and the second symbol that are included in the pattern 2 may be understood as a time domain resource corresponding to the second sTTI included in a subframe, and a time domain resource corresponding to the third symbol and the fourth symbol that are included in the pattern 2 may be understood as a time domain resource corresponding to the third sTTI included in the subframe. For the pattern 3, a time domain resource corresponding to the first symbol and the second symbol that are included in the pattern 3 may be understood as a time domain resource corresponding to the fourth sTTI included in the subframe, and a time domain resource corresponding to the third symbol and the fourth symbol that are included in the pattern 3 may be understood as a time domain resource corresponding to the fifth sTTI included in the subframe. In this example, a symbol that can be used to transmit a physical channel and that is in the two sTTIs may carry one time of transmission of one TB, or one time of transmission of a same physical channel. Alternatively, a symbol that can be used to transmit a physical channel and that is in the two sTTIs carries one time of transmission of each of two TBs, or one time of transmission of each of two physical channels. For example, as shown in the pattern 2 in FIG. 9, one symbol in the pattern 2 is used to transmit a reference signal, and the other three symbols each are used to transmit a physical channel, and may be used to transmit data of one TB (or one physical channel such as one PUSCH or PUCCH). In other words, the three symbols are used for one time of transmission of one TB (or one PUSCH or PUCCH). Alternatively, the other three symbols may be used to transmit different physical channels (or transmit different TBs). For example, the first symbol and the second symbol included in the pattern 2 may be used to transmit one physical channel, and the fourth symbol included in the pattern 2 may be used to transmit another physical channel. The two physical channels may have a same type. For example, both physical channels are PUCCHs or PUSCHs. Alternatively, the two physical channels may have different types. The pattern 3 in FIG. 9 is similar. Details are not described herein.

In an example 6, with reference to FIG. 10, the data transmission pattern set may include at least two of the following data transmission patterns: a pattern 1 used to indicate three consecutive symbols starting from the first symbol in the first time unit, where the three consecutive symbols are successively used to transmit R, D, and D; a pattern 2 used to indicate four consecutive symbols starting from the fourth symbol in the first time unit, where the four consecutive symbols are successively used to transmit D, D, R, and D; a pattern 3 used to indicate three consecutive symbols starting from the eighth symbol in the first time unit, where the three consecutive symbols are successively used to transmit D, D, and R; and a pattern 4 used to indicate three consecutive symbols starting from the twelfth symbol in the first time unit, where the three consecutive symbols are successively used to transmit R, D, and D.

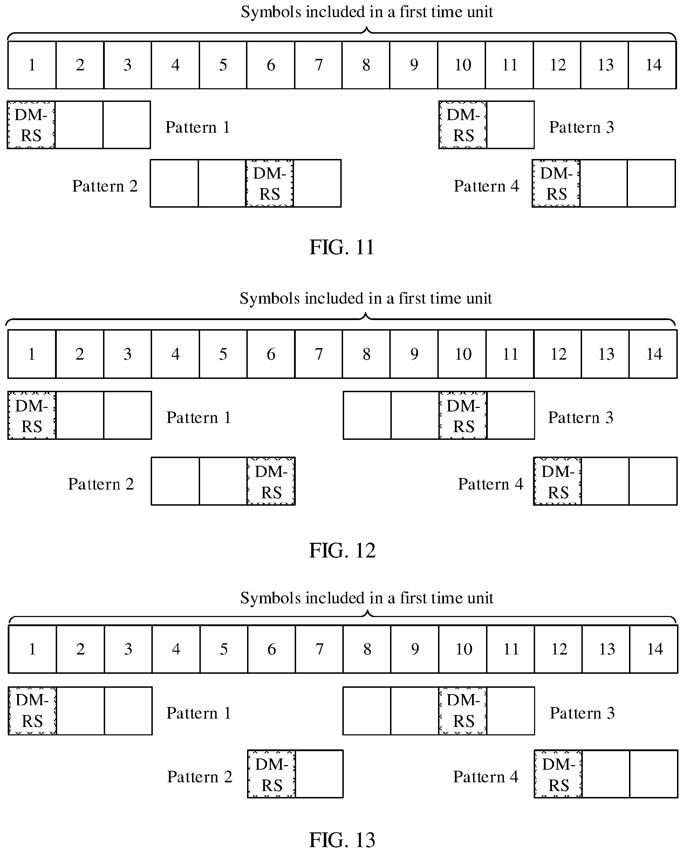

In an example 7, with reference to FIG. 11, the data transmission pattern set may include at least two of the following data transmission patterns: a pattern 1 used to indicate three consecutive symbols starting from the first symbol in the first time unit, where the three consecutive symbols are successively used to transmit R, D, and D; a pattern 2 used to indicate four consecutive symbols starting from the fourth symbol in the first time unit, where the four consecutive symbols are successively used to transmit D, D, R, and D; a pattern 3 used to indicate two consecutive symbols starting from the tenth symbol in the first time unit, where the two consecutive symbols are successively used to transmit R and D; and a pattern 4 used to indicate three consecutive symbols starting from the twelfth symbol in the first time unit, where the three consecutive symbols are successively used to transmit R, D, and D.

In an example 8, with reference to FIG. 12, the data transmission pattern set may include at least two of the following data transmission patterns: a pattern 1 used to indicate three consecutive symbols starting from the first symbol in the first time unit, where the three consecutive symbols are successively used to transmit R, D, and D; a pattern 2 used to indicate three consecutive symbols starting from the fourth symbol in the first time unit, where the three consecutive symbols are successively used to transmit D, D, and R; a pattern 3 used to indicate four consecutive symbols starting from the eighth symbol in the first time unit, where the four consecutive symbols are successively used to transmit D, D, R, and D; and a pattern 4 used to indicate three consecutive symbols starting from the twelfth symbol in the first time unit, where the three consecutive symbols are successively used to transmit R, D, and D.

In an example 9, with reference to FIG. 13, the data transmission pattern set may include at least two of the following data transmission patterns: a pattern 1 used to indicate three consecutive symbols starting from the first symbol in the first time unit, where the three consecutive symbols are successively used to transmit R, D, and D; a pattern 2 used to indicate two consecutive symbols starting from the sixth symbol in the first time unit, where the two consecutive symbols are successively used to transmit R and D; a pattern 3 used to indicate four consecutive symbols starting from the eighth symbol in the first time unit, where the four consecutive symbols are successively used to transmit D, D, R, and D; and a pattern 4 used to indicate three consecutive symbols starting from the twelfth symbol in the first time unit, where the three consecutive symbols are successively used to transmit R, D, and D.

It should be noted that specific descriptions of the data transmission patterns in the examples 2 to 9 are similar to the specific descriptions of the data transmission patterns in the example 1. For the specific descriptions of the data transmission patterns in the examples 2 to 9, refer to the specific descriptions of the data transmission patterns in the example 1. Details are not described one by one in this embodiment of this application.

In addition, optionally, the data transmission patterns included in the data transmission pattern set shown in the examples 1 to 9 are applicable to one time of grant free-based data transmission. Because it can be ensured that the foregoing data transmission pattern corresponds to an sTTI transmission structure in the LTE system, design complexity of the data transmission pattern can be reduced. In addition, it can be learned from the foregoing data transmission pattern that, for each data transmission pattern set, locations of symbols that are used to transmit reference signals and that are indicated by data transmission patterns included in the data transmission pattern set do not overlap. Therefore, the receive end device such as the network device may determine, based on a time domain resource location of a received reference signal, for example, a location of a symbol in a first time unit, a data transmission pattern corresponding to the reference signal, so as to determine, based on the data transmission pattern, a location of a time domain resource occupied by the transmit end device for transmitting a physical channel. This ensures correct receiving of data sent by the transmit end device.

In an alternative solution, the pattern that is included in the data transmission pattern set shown in the example 1 to the example 9 and that is used to indicate the three consecutive symbols starting from the first symbol in the first time unit, where the three consecutive symbols are successively used to transmit R, D, and D may be replaced with a pattern used to indicate three consecutive symbols starting from the first symbol in the first time unit, where the three consecutive symbols are successively used to transmit D, D, and R. The other data transmission patterns remain unchanged.

In an alternative solution, the pattern that is included in the foregoing data transmission pattern set and that is used to indicate the four consecutive symbols starting from the fourth symbol in the first time unit, where the four consecutive symbols are successively used to transmit D, D, R, and D may be replaced with a pattern used to indicate four consecutive symbols starting from the fourth symbol in the first time unit, where the four consecutive symbols are successively used to transmit D, R, D, and D, or the four consecutive symbols are successively used to transmit R, D, D, and D. The other data transmission patterns remain unchanged.

In an alternative solution, the pattern that is included in the foregoing data transmission pattern set and that is used to indicate the four consecutive symbols starting from the eighth symbol in the first time unit, where the four consecutive symbols are successively used to transmit D, D, R, and D may be replaced with a pattern used to indicate four consecutive symbols starting from the eighth symbol in the first time unit, where the four consecutive symbols are successively used to transmit D, R, D, and D, or the four consecutive symbols are successively used to transmit R, D, D, and D. The other data transmission patterns remain unchanged.

In addition, it should be noted that, when the data transmission pattern set includes a plurality of patterns in the following three patterns: the pattern used to indicate the three consecutive symbols starting from the first symbol in the first time unit, where the three consecutive symbols are successively used to transmit R, D, and D; the pattern used to indicate the four consecutive symbols starting from the fourth symbol in the first time unit, where the four consecutive symbols are successively used to transmit D, D, R, and D; and the pattern used to indicate the four consecutive symbols starting from the eighth symbol in the first time unit, where the four consecutive symbols are successively used to transmit D, D, R, and D, one or more of the three patterns may be correspondingly replaced according to the foregoing three alternative solutions, and the other data transmission patterns remain unchanged. This is not specifically limited in this embodiment of this application.

In this embodiment of this application, each data transmission pattern included in the data transmission pattern set shown in the example 1 to the example 9 corresponds to an sTTI data transmission structure in the LTE system. Therefore, implementation complexity of the data transmission pattern set designed based on the data transmission patterns is low. For example, if an sTTI data transmission structure is used to ensure a data transmission requirement of an LTE URLLC system, because both a receive end device and a transmit end device that support the sTTI data transmission structure can perform data transmission based on the sTTI data transmission structure in an existing standard specification, for a data transmission pattern set implemented based on the sTTI data transmission structure, the receive end device and the transmit end device that support the sTTI data transmission structure may also perform data transmission by using a data transmission pattern included in the data transmission pattern set.

In addition, according to the alternative solutions provided in this embodiment of this application, more data transmission pattern sets can be obtained, so that more transmit end devices perform multiplexing transmission on a same time-frequency domain resource. This improves resource utilization. For example, for different data transmission pattern sets, locations of symbols that are specifically used to transmit a reference signal and a physical channel and that correspond to different data transmission patterns at a same time domain resource location are different. Therefore, the data transmission patterns may be used to distinguish between different transmit end devices, for example, terminal devices. In this way, a plurality of transmit end devices share a resource at a same time domain resource location. For example, a data transmission pattern set configured for a terminal device includes the pattern used to indicate the four consecutive symbols starting from the fourth symbol in the first time unit, where the four consecutive symbols are successively used to transmit D, D, R, and D; and a data transmission pattern set configured for another terminal device includes a pattern used to indicate four consecutive symbols starting from the fourth symbol in the first time unit, where the four consecutive symbols are successively used to transmit D, R, D, and D. When the two terminal devices simultaneously start to transmit uplink data from the fourth symbol in a same first time unit, a network device may determine the different terminal devices by detecting reference signals at different time domain resource locations, so as to receive the uplink data sent by the different terminal devices.

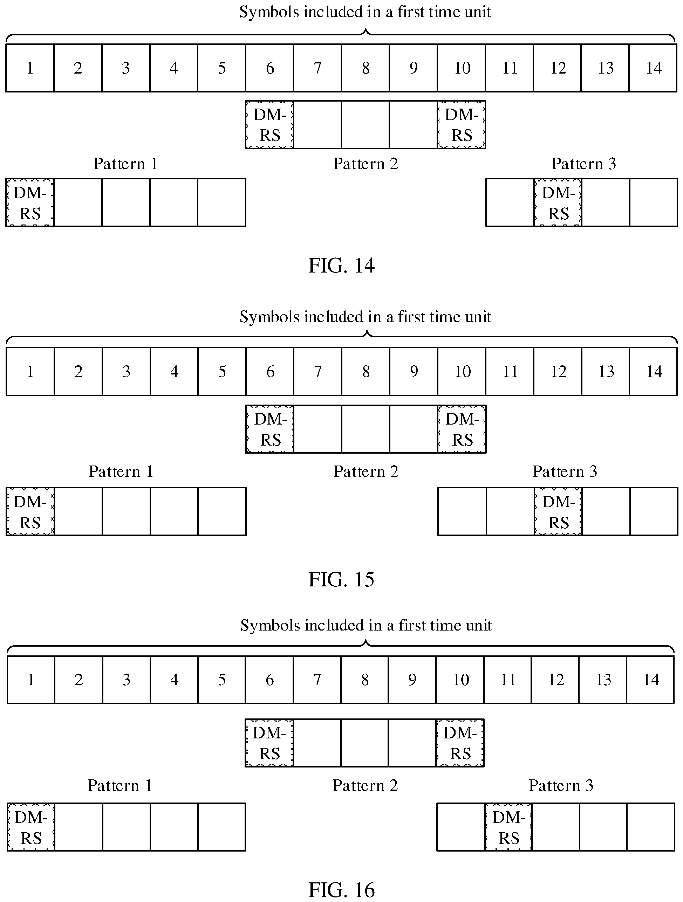

In an example 10, with reference to FIG. 14, the data transmission pattern set may include at least two of the following data transmission patterns: a pattern 1 used to indicate five consecutive symbols starting from the first symbol in the first time unit, where the five consecutive symbols are successively used to transmit R, D, D, D, and D; a pattern 2 used to indicate five consecutive symbols starting from the sixth symbol in the first time unit, where the five consecutive symbols are successively used to transmit R, D, D, D, and R; and a pattern 3 used to indicate four consecutive symbols starting from the eleventh symbol in the first time unit, where the four consecutive symbols are successively used to transmit D, R, D, and D.

It may be understood that, each data transmission pattern included in the data transmission pattern set shown in FIG. 14 corresponds to an sTTI data transmission structure in the LTE system. Therefore, implementation complexity of the data transmission pattern set designed based on the data transmission patterns is low. In addition, sending of scheduling information can be reduced in the grant free data transmission mechanism based on the SPS mechanism, so as to ensure data transmission reliability in terms of a specific latency. Therefore, based on the data transmission pattern set shown in FIG. 14, implementation complexity can be reduced while ensuring data transmission reliability.

In an example 11, with reference to FIG. 15, the data transmission pattern set may include at least two of the following data transmission patterns: a pattern 1 used to indicate five consecutive symbols starting from the first symbol in the first time unit, where the five consecutive symbols are successively used to transmit R, D, D, D, and D; a pattern 2 used to indicate five consecutive symbols starting from the sixth symbol in the first time unit, where the five consecutive symbols are successively used to transmit R, D, D, D, and R; and a pattern 3 used to indicate five consecutive symbols starting from the tenth symbol in the first time unit, where the five consecutive symbols are successively used to transmit D, D, R, D, and D.

Similar to the data transmission pattern set shown in FIG. 14, the data transmission pattern set shown in FIG. 15 can also help reduce implementation complexity.

In an example 12, with reference to FIG. 16, the data transmission pattern set may include at least two of the following data transmission patterns: a pattern 1 used to indicate five consecutive symbols starting from the first symbol in the first time unit, where the five consecutive symbols are successively used to transmit R, D, D, D, and D; a pattern 2 used to indicate five consecutive symbols starting from the sixth symbol in the first time unit, where the five consecutive symbols are successively used to transmit R, D, D, D, and R; and a pattern 3 used to indicate five consecutive symbols starting from the tenth symbol in the first time unit, where the five consecutive symbols are successively used to transmit D, R, D, D, and D.

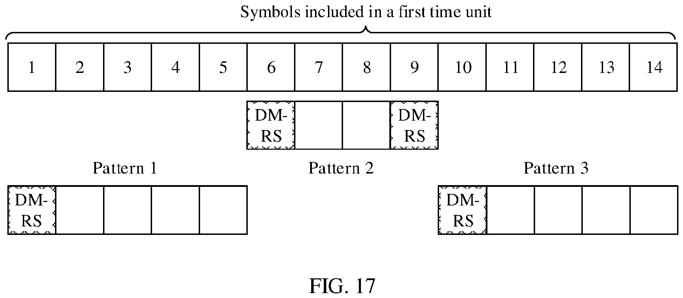

In an example 13, with reference to FIG. 17, the data transmission pattern set may include at least two of the following data transmission patterns: a pattern 1 used to indicate five consecutive symbols starting from the first symbol in the first time unit, where the five consecutive symbols are successively used to transmit R, D, D, D, and D; a pattern 2 used to indicate four consecutive symbols starting from the sixth symbol in the first time unit, where the four consecutive symbols are successively used to transmit R, D, D, and R; and a pattern 3 used to indicate five consecutive symbols starting from the tenth symbol in the first time unit, where the five consecutive symbols are successively used to transmit R, D, D, D, and D.

Based on the data transmission pattern set shown in FIG. 17, if each data transmission pattern included in the data transmission pattern set corresponds to two times of repeated transmission of one TB, because a quantity of symbols that are included in each data transmission pattern and that are used to transmit a physical channel can be evenly divided by 2, it can be ensured that locations of different symbols that are in the data transmission pattern and that are used to transmit a physical channel can adapt to a same MCS. This avoids a case in which at different data transmission symbol locations, if an MCS based on a large quantity of data transmission symbols is selected, data transmission reliability is affected when a time domain resource with a small quantity of data transmission symbols is used to transmit data, or if an MCS based on a small quantity of data transmission symbols is selected, data transmission efficiency is not high when a time domain resource with a large quantity of data transmission symbols is used to transmit data.

In addition, in an alternative solution, the pattern that is included in the data transmission pattern set in the example in FIG. 17 and that is used to indicate the four consecutive symbols starting from the sixth symbol in the first time unit, where the four consecutive symbols are successively used to transmit R, D, D, and R may be replaced with a pattern used to indicate four consecutive symbols starting from the sixth symbol in the first time unit, where the four consecutive symbols are successively used to transmit R, D, R, and D; and/or the pattern used to indicate the five consecutive symbols starting from the tenth symbol in the first time unit, where the five consecutive symbols are successively used to transmit R, D, D, D, and D may be replaced with a pattern used to indicate five consecutive symbols starting from the tenth symbol in the first time unit, where the five consecutive symbols are successively used to transmit D, R, D, D, and D, or the five consecutive symbols are successively used to transmit D, D, R, D, and D.

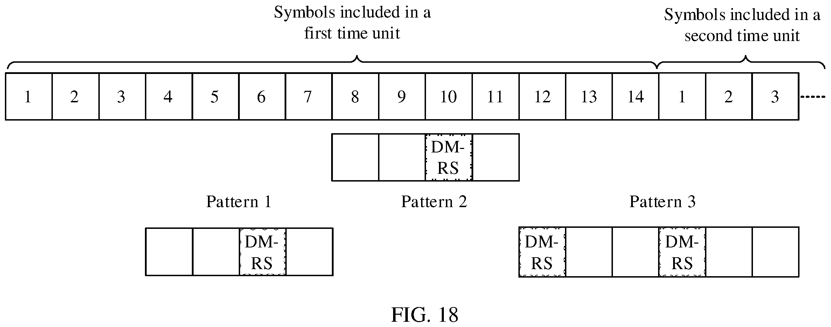

In an example 14, with reference to FIG. 18, the data transmission pattern set may include at least two of the following data transmission patterns: a pattern 1 used to indicate four consecutive symbols starting from the fourth symbol in the first time unit, where the four consecutive symbols are successively used to transmit D, D, R, and D; a pattern 2 used to indicate four consecutive symbols starting from the eighth symbol in the first time unit, where the four consecutive symbols are successively used to transmit D, D, R, and D; and a pattern 3 used to indicate six consecutive symbols starting from the twelfth symbol in the first time unit to the third symbol in a second time unit, where the six consecutive symbols are successively used to transmit R, D, D, R, D, and D.

The second time unit is a next time unit of the first time unit, and duration of the second time unit is equal to duration of the first time unit. It should be noted that, in this embodiment of this application, if a symbol location corresponding to a time domain resource indicated by a data transmission pattern in the example shown in the figure exceeds a symbol location included in the current time unit, an exceeding part is represented as a symbol location included in a next time unit of the current time unit. For example, in the example shown in FIG. 18, a time domain resource indicated by the pattern 3 used to indicate the six consecutive symbols starting from the twelfth symbol in the first time unit to the third symbol in the second time unit (where the six consecutive symbols are successively used to transmit R, D, D, R, D, and D) is the twelfth symbol, the thirteenth symbol, and the fourteenth symbol that are included in the current time unit, and the first symbol, the second symbol, and the third symbol that are included in the time unit that is after the current time unit and that is consecutive to the current time unit in terms of time. It should be noted that in this embodiment of this application, the second time unit and the first time unit may be consecutive or nonconsecutive in terms of time. As shown in FIG. 18, the second time unit and the first time unit are consecutive in terms of time. Based on the implementation in FIG. 18, it may be understood that the data transmission patterns included in the data transmission pattern set repeatedly appear in the first time unit and the second time unit that are different. To be specific, the data transmission patterns may repeatedly appear in a sequence of the pattern 1, the pattern 2, the pattern 3, the pattern 1.... It should be noted that, optionally, based on the implementation in FIG. 18, the pattern 3 may alternatively be a pattern used to indicate three consecutive symbols starting from the twelfth symbol in the first time unit, where the three consecutive symbols are successively used to transmit R, D, and D. To be specific, in this embodiment of this application, symbols that are used to transmit a reference signal and a physical channel and that correspond to a discussed data transmission pattern may not cross different time units. For example, a data transmission pattern set may include the pattern 1 shown in FIG. 18, the pattern 2 shown in FIG. 18, and a pattern used to indicate three consecutive symbols starting from the twelfth symbol in the first time unit, where the three consecutive symbols are successively used to transmit R, D, and D. In addition, when the pattern 1 and the pattern 2 each are used for a plurality of times of repeated transmission, for example, two times of repeated transmission, of one physical channel or a plurality of channels, although the last pattern includes only two symbols used to transmit a physical channel, the last pattern can also support a plurality of times of repeated transmission, for example, two times of repeated transmission, of one physical channel or a plurality of physical channels.

In addition, in an alternative solution, the pattern that is included in the data transmission pattern set in the example in FIG. 18 and that is used to indicate the four consecutive symbols starting from the fourth symbol in the first time unit, where the four consecutive symbols are successively used to transmit D, D, R, and D may be replaced with a pattern used to indicate four consecutive symbols starting from the fourth symbol in the first time unit, where the four consecutive symbols are successively used to transmit R, D, D, and D, or the four consecutive symbols are successively used to transmit D, R, D, and D; and/or the pattern used to indicate the four consecutive symbols starting from the eighth symbol in the first time unit, where the four consecutive symbols are successively used to transmit D, D, R, and D may be replaced with a pattern used to indicate four consecutive symbols starting from the eighth symbol in the first time unit, where the four consecutive symbols are successively used to transmit R, D, D, and D, or the four consecutive symbols are successively used to transmit D, R, D, and D, or the four consecutive symbols are successively used to transmit D, D, D, and R.

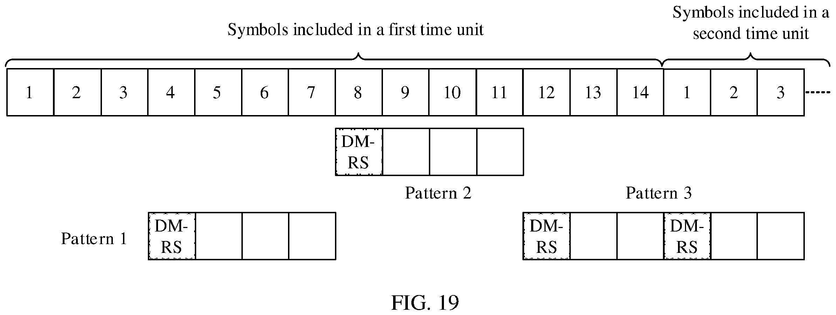

When both of the foregoing two patterns are replaced, for example, a data transmission pattern set obtained after the replacement may be shown in FIG. 19. With reference to FIG. 19, it can be learned that, in each data transmission pattern included in the data transmission pattern set, a time domain resource used to transmit a reference signal is located on the first symbol in a time domain resource indicated by the data transmission pattern. Therefore, a buffer size of the receive end device can be reduced, and implementation costs of a buffer component of the receive end device are decreased.

In addition, in an alternative solution, the pattern that is in the data transmission pattern set shown in the example 10 to the example 14 and that is used to indicate the five consecutive symbols starting from the first symbol in the first time unit, where the five consecutive symbols are successively used to transmit R, D, D, D, and D may be replaced with a pattern used to indicate five consecutive symbols starting from the first symbol in the first time unit, where the five consecutive symbols are successively used to transmit D, D, R, D, and D.

In another alternative solution, the pattern that is included in the data transmission pattern set and that is used to indicate the six consecutive symbols starting from the twelfth symbol in the first time unit to the third symbol in the second time unit, where the six consecutive symbols are successively used to transmit R, D, D, R, D, and D may be replaced with a pattern used to indicate six consecutive symbols starting from the twelfth symbol in the first time unit to the third symbol in the second time unit, where the six consecutive symbols are successively used to transmit R, D, D, D, D, and R.

It should be noted that, when the data transmission pattern set includes two patterns: the pattern used to indicate the five consecutive symbols starting from the first symbol in the first time unit, where the five consecutive symbols are successively used to transmit R, D, D, D, and D; and the pattern used to indicate the six consecutive symbols starting from the twelfth symbol in the first time unit to the third symbol in the second time unit, where the six consecutive symbols are successively used to transmit R, D, D, R, D, and D, one or two of the two patterns may be correspondingly replaced according to the foregoing two alternative solutions, and the other data transmission pattern remains unchanged. This is not specifically limited in this embodiment of this application.

In addition, an advantage of performing data transmission by using the data transmission pattern set shown in FIG. 14 to FIG. 19 lies in that the transmit end device may transmit data according to a frequency hopping technology, so that a frequency diversity gain can be obtained during data transmission, so as to ensure data transmission reliability.

An example in which the first device, namely, the transmit end device, is a terminal device that sends uplink data is used for description. In the LTE system, for a terminal device that uses one subframe as one basic transmission time interval, frequency hopping transmission of data is implemented at a subframe boundary (for example, a boundary of 1 ms) and a slot boundary (for example, a boundary of 0.5 ms). The basic transmission time interval may be understood as follows: If the terminal device uses a single codeword to perform uplink data transmission, the basic transmission time interval includes data transmission of only one TB. If the terminal device uses a plurality of codewords, for example, two codewords, to perform uplink data transmission, the basic transmission time interval includes data transmission of two TBs. The frequency hopping transmission may mean that the terminal device uses different frequency domain resources to transmit data before and after the subframe boundary and/or transmit data before and after the slot boundary.

In this way, for a terminal device that supports uplink data transmission in an sTTI data transmission structure, if a transmission time interval used by the terminal device crosses a frequency hopping boundary, for example, a subframe boundary or a slot boundary, frequency hopping transmission of data can also be implemented, so as to ensure a frequency diversity gain of data transmission. For example, the pattern that is included in the data transmission pattern set shown in FIG. 14 and FIG. 15 and that is used to indicate the five consecutive symbols starting from the sixth symbol in the first time unit (where the five consecutive symbols are successively used to transmit R, D, D, D, and R) and the pattern that is included in the data transmission pattern set shown in FIG. 18 and that is used to indicate the six consecutive symbols starting from the twelfth symbol in the first time unit to the third symbol in the second time unit (where the six consecutive symbols are successively used to transmit R, D, D, R, D, and D) each cross a frequency hopping boundary. Therefore, a terminal device that performs data transmission by using these data transmission patterns can implement a frequency diversity gain of the data transmission, so as to ensure data transmission reliability. In addition, from a perspective of co-existence transmission of terminal devices, if a data transmission pattern used by a terminal device that transmits uplink data by using an sTTI data transmission structure crosses a frequency hopping boundary on a time domain resource, to ensure that the terminal device does not conflict, on a used frequency domain resource, with a terminal device that transmits uplink data by using a long transmission time interval (for example, one subframe or one slot), frequency hopping transmission is also preferred. A reason is as follows: In the LTE system, for the terminal device that uses one subframe as one basic transmission time interval, frequency hopping transmission of data is implemented at the subframe boundary and the slot boundary. Therefore, if the terminal device based on the sTTI data transmission structure does not consider frequency hopping transmission at the frequency hopping boundary, a collision with data transmitted by the terminal device that uses one subframe as one basic transmission time interval may occur on a frequency domain resource. This affects demodulation performance of a receive end device on received data. Therefore, to avoid a collision between frequency domain resources used for data transmission performed by different terminal devices, and in particular, to avoid a collision between frequency domain resources used for data transmission performed by terminal devices that use different transmission time intervals to perform data transmission, if a data transmission pattern used by the terminal device that transmits uplink data by using the sTTI data transmission structure crosses a frequency hopping boundary on a time domain resource, a frequency hopping technology should be used to transmit data.

In addition, regardless of obtaining a frequency diversity gain of data transmission or avoiding a collision between frequency domain resources used for data transmission performed by different transmit end devices, the transmit end device may transmit data through frequency hopping. To be specific, before and after a frequency hopping boundary, the transmit end device uses different frequency domain resources to transmit data. In this case, to ensure that a receive end device can correctly demodulate the data, in this embodiment of this application, time domain resources used for data transmission before and after the frequency hopping boundary each should include at least one symbol used for a reference signal used to demodulate a transmitted physical channel, for example, include the pattern that is included in the data transmission pattern set shown in FIG. 14 and FIG. 15 and that is used to indicate the five consecutive symbols starting from the sixth symbol in the first time unit (where the five consecutive symbols are successively used to transmit R, D, D, D, and R) and an alternative data transmission pattern corresponding to the pattern, and the pattern that is included in the data transmission pattern set shown in FIG. 18 and that is used to indicate the six consecutive symbols starting from the twelfth symbol in the first time unit to the third symbol in the second time unit (where the six consecutive symbols are successively used to transmit R, D, D, R, D, and D) and an alternative data transmission pattern corresponding to the pattern.

It should be noted that, in this embodiment of this application, for a terminal device, a frequency hopping boundary may be a data frequency hopping boundary existing when the terminal device performs data transmission, or may be a data frequency hopping boundary existing when another terminal device, for example, another terminal device served by a same network device that serves the terminal device, performs data transmission. For example, it is assumed that one network device serves two terminal devices at the same time, and the two terminal devices are a terminal device A and a terminal device B. The terminal device A performs data transmission based on an sTTI data transmission structure, and/or performs data transmission by using a data transmission pattern formed based on the sTTI data transmission structure. The terminal device B performs data transmission based on a long transmission time interval, for example, one subframe or 1 ms. In this case, a frequency hopping boundary corresponding to the terminal device A may be a corresponding data frequency hopping boundary existing when the terminal device A performs data transmission based on the sTTI data transmission structure, or may be a corresponding data frequency hopping boundary existing when the terminal device B performs data transmission based on the long transmission time interval. For the terminal device B, a frequency hopping boundary corresponding to the terminal device B may be a corresponding data frequency hopping boundary existing when the terminal device B performs data transmission based on the long transmission time interval, or may be a corresponding data frequency hopping boundary existing when the terminal device A performs data transmission based on the sTTI data transmission structure.

Further, optionally, in this embodiment of this application, whether a frequency hopping technology is used for data transmission by a device may be configurable. For example, the terminal device determines, by receiving indication information sent by the network device, whether to use the frequency hopping technology for data transmission in a data transmission process. The data transmission herein includes sending data and/or receiving data. If no frequency hopping technology is used for data transmission, it may be understood that even if a time domain resource used for data transmission crosses a frequency hopping boundary, a same frequency resource may be used for data transmission before and after the frequency hopping boundary. In this case, if a time domain resource location corresponding to a data transmission pattern crosses the frequency hopping boundary, data transmission before the frequency hopping boundary and data transmission after the frequency hopping boundary may share a reference signal to perform data demodulation. For example, a reference signal transmitted before the frequency hopping boundary may be used to demodulate data transmitted after the frequency hopping boundary, and/or a reference signal transmitted after the frequency hopping boundary may be used to demodulate data transmitted before the frequency hopping boundary. In other words, in this embodiment of this application, the terminal device may determine, according to the indication information of the network device, whether data demodulation needs to be performed before and after the frequency hopping boundary by using reference signals in a data transmission pattern corresponding to data transmission. The indication information may be used to indicate whether a frequency hopping function for data transmission is enabled or have another representation form. A representation form of the indication information is not specifically limited in this embodiment of this application. For example, assuming that the frequency hopping boundary is a slot boundary, when locations of symbols included in a data transmission pattern are on two sides of the slot boundary, the data transmission pattern includes at least two reference signals, and two of the at least two reference signals are respectively located in different slots. Optionally, the terminal device may determine, based on configuration information, whether a data transmission pattern includes one reference signal or two reference signals when locations of symbols included in the data transmission pattern are on two sides of a slot boundary. In addition, if the terminal device determines, based on the configuration information, that no frequency hopping technology is used for data transmission, in this case, one data transmission pattern may include only one reference signal. Whether the frequency hopping technology is used during data transmission may be described for a terminal device of a normal service. Determining, based on the configuration information, a distribution form of reference signals included in the data transmission pattern may be described for a terminal device of a low-latency service.

In addition, an advantage of performing data transmission by using the data transmission pattern set shown in FIG. 14 to FIG. 19 is as follows: Different data transmission patterns have no overlapped symbol at a time domain resource location. In other words, locations of symbols included in time domain resources that are used for data transmission and that correspond to different data transmission patterns are different. In this way, when different terminal devices transmit uplink data, even if arrival moments of the uplink data of the different terminal devices are different, if frequency domain resources used by the different terminal devices for data transmission have a conflict, the conflict can only be a conflict of data of a same type. For example, on a symbol for transmitting a reference signal, there is only a conflict between reference signals of different terminal devices. However, the conflict may be avoided by configuring different reference signals for the different terminal devices by the network device. For a symbol for transmitting a physical channel, there is only a conflict between physical channels of different terminal devices. The conflict may be resolved according to an algorithm of a receiver of the network device or by configuring different power control references for the different terminal devices. Therefore, for the network device, a conflict resolving method is relatively simple.

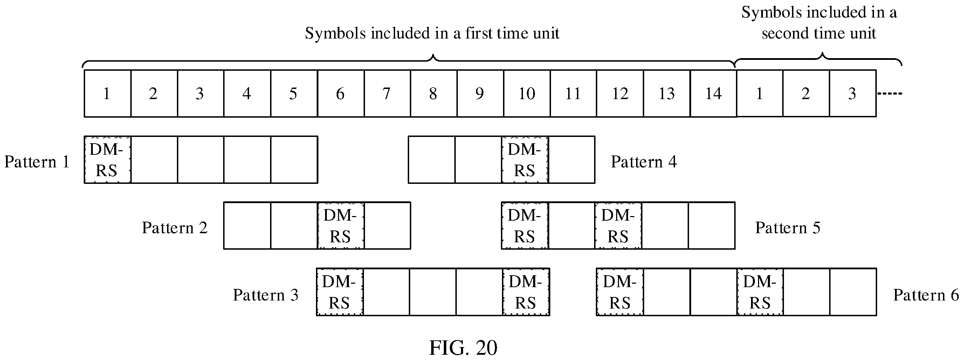

In an example 15, with reference to FIG. 20, the data transmission pattern set may include at least two of the following data transmission patterns: a pattern 1 used to indicate five consecutive symbols starting from the first symbol in the first time unit, where the five consecutive symbols are successively used to transmit R, D, D, D, and D; a pattern 2 used to indicate four consecutive symbols starting from the fourth symbol in the first time unit, where the four consecutive symbols are successively used to transmit D, D, R, and D; a pattern 3 used to indicate five consecutive symbols starting from the sixth symbol in the first time unit, where the five consecutive symbols are successively used to transmit R, D, D, D, and R; a pattern 4 used to indicate four consecutive symbols starting from the eighth symbol in the first time unit, where the four consecutive symbols are successively used to transmit D, D, R, and D; a pattern 5 used to indicate five consecutive symbols starting from the tenth symbol in the first time unit, where the five consecutive symbols are successively used to transmit R, D, R, D, and D; and a pattern 6 used to indicate six consecutive symbols starting from the twelfth symbol in the first time unit to the third symbol in the second time unit, where the six consecutive symbols are successively used to transmit R, D, D, R, D, and D.

It should be noted that, in this embodiment of this application, different data transmission patterns included in a data transmission pattern set are assumed as a data transmission pattern A and a data transmission pattern B. If the data transmission pattern A and the data transmission pattern B indicate different quantities of time domain resources, for example, different quantities of symbols, used to transmit a reference signal, in this embodiment of this application, this may also be understood as that locations of the symbols that are used to transmit reference signals and that are indicated by the different data transmission patterns do not overlap. For example, for the pattern 3 and the pattern 4, the pattern 4 and the pattern 5, or the like shown in FIG. 20, it may be considered that locations of symbols that are used to transmit reference signals and that are indicated by the two patterns do not overlap.

In addition, in this embodiment of this application, if a data transmission pattern indicates a plurality of time domain resources, namely, symbols, used to transmit a reference signal, provided that a location of a symbol that is used to transmit a reference signal and that is indicated by the data transmission pattern is different from a location of a symbol that is used to transmit a reference signal and that is indicated by another data transmission pattern, it may be considered that the location of the symbol that is used to transmit a reference signal and that is indicated by the data transmission pattern does not overlap the location of the symbol that is used to transmit a reference signal and that is indicated by the another data transmission pattern. For example, for the pattern 5 and the pattern 6, the pattern 3 and the pattern 5, or the like shown in FIG. 20, it may be considered that locations of symbols that are used to transmit reference signals and that are indicated by the two patterns do not overlap.

It should be further noted that, in this embodiment of this application, if locations of symbols that are used to transmit reference signals and that are indicated by a data transmission pattern (assumed as a data transmission pattern A for ease of description) are the same as a union set including locations of symbols that are used to transmit reference signals and that are indicated by other two or more data transmission patterns (assumed as a data transmission pattern B1 to a data transmission pattern BK for ease of description, where K is an integer not less than 2), a data transmission pattern set includes the data transmission pattern A, or includes the data transmission pattern B1 to the data transmission pattern BK, but the data transmission pattern set cannot include all of the data transmission pattern A and the data transmission pattern B1 to the data transmission pattern BK. The data transmission pattern B1 to the data transmission pattern BK represent the data transmission pattern B1, a data transmission pattern B2, ..., and the data transmission pattern BK. For example, based on the data transmission pattern set shown in FIG. 20, when a data transmission pattern set includes the pattern 2 and the pattern 4, the data transmission pattern cannot include the pattern 3. Alternatively, when a data transmission pattern set includes the pattern 3, the data transmission pattern cannot include the pattern 2 and the pattern 4. A reason is as follows: Locations of symbols that are used to transmit reference signals and that are indicated by the pattern 3 are locations of the sixth symbol and the tenth symbol in the first time unit, and locations of symbols that are used to transmit reference signals and that are indicated by the pattern 2 and the pattern 4 are the locations of the sixth symbol and the tenth symbol included in the first time unit. It can be learned that a union set {the sixth symbol and the tenth symbol} including the locations of the symbols that are used to transmit reference signals and that are indicated by the pattern 2 and the pattern 4 is the same as the locations of the symbols that are used to transmit reference signals and that are indicated by the pattern 3. In this case, if a data transmission pattern set includes all of the pattern 3, the pattern 2, and the pattern 4, a receive end device such as a network device cannot distinguish between data sent by a transmit end device such as a terminal device by using the pattern 2 and the pattern 4, and data sent by using the pattern 3. In other words, in this embodiment of this application, a symbol that is used to transmit a reference signal and that is indicated by any data transmission pattern included in a data transmission pattern set is different from a union set of symbols that are used to transmit reference signals and that are indicated by any other two data transmission patterns included in the data transmission pattern set. In this way, it can be ensured that the receive end device normally receives data transmitted by the transmit end device based on the data transmission pattern included in the data transmission pattern set, so as to ensure transmission reliability of the received data.

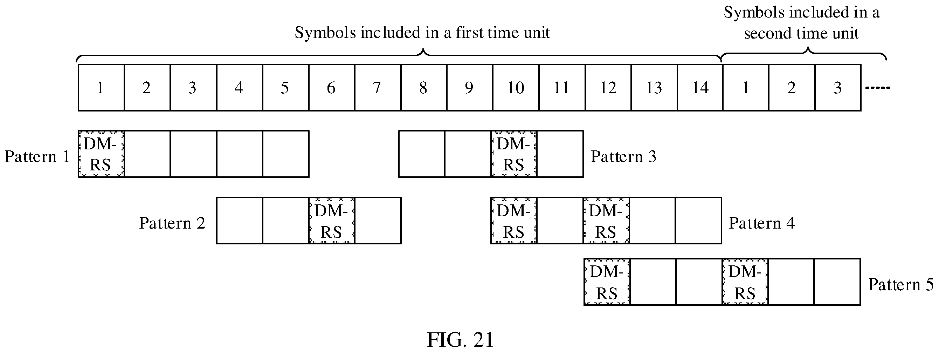

In an example 16, with reference to FIG. 21, the data transmission pattern set may include at least two of the following data transmission patterns: a pattern 1 used to indicate five consecutive symbols starting from the first symbol in the first time unit, where the five consecutive symbols are successively used to transmit R, D, D, D, and D; a pattern 2 used to indicate four consecutive symbols starting from the fourth symbol in the first time unit, where the four consecutive symbols are successively used to transmit D, D, R, and D; a pattern 3 used to indicate four consecutive symbols starting from the eighth symbol in the first time unit, where the four consecutive symbols are successively used to transmit D, D, R, and D; a pattern 4 used to indicate five consecutive symbols starting from the tenth symbol in the first time unit, where the five consecutive symbols are successively used to transmit R, D, R, D, and D; and a pattern 5 used to indicate six consecutive symbols starting from the twelfth symbol in the first time unit to the third symbol in the second time unit, where the six consecutive symbols are successively used to transmit R, D, D, R, D, and D.

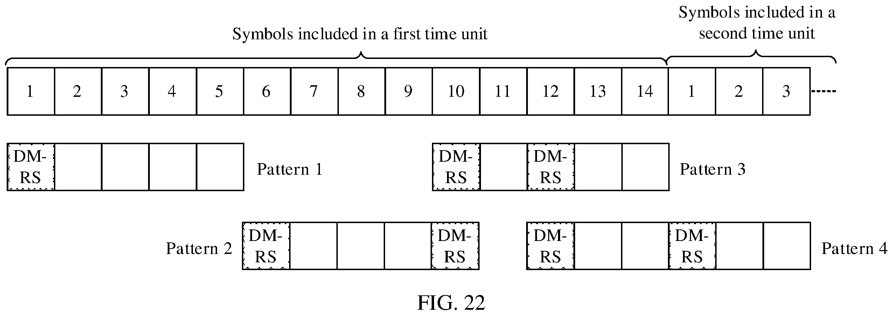

In an example 17, with reference to FIG. 22, the data transmission pattern set may include at least two of the following data transmission patterns: a pattern 1 used to indicate five consecutive symbols starting from the first symbol in the first time unit, where the five consecutive symbols are successively used to transmit R, D, D, D, and D; a pattern 2 used to indicate five consecutive symbols starting from the sixth symbol in the first time unit, where the five consecutive symbols are successively used to transmit R, D, D, D, and R; a pattern 3 used to indicate five consecutive symbols starting from the tenth symbol in the first time unit, where the five consecutive symbols are successively used to transmit R, D, R, D, and D; and a pattern 4 used to indicate six consecutive symbols starting from the twelfth symbol in the first time unit to the third symbol in the second time unit, where the six consecutive symbols are successively used to transmit R, D, D, R, D, and D.

The data transmission pattern set in FIG. 21 and FIG. 22 can support frequency hopping transmission of data. In addition, because the data transmission patterns included in the data transmission pattern set include more start locations for data transmission in one time unit, after data of a transmit end device arrives, the data can be transmitted as soon as possible based on the data transmission patterns in the data transmission pattern set in FIG. 21 and FIG. 22, so as to reduce a waiting latency between a moment at which the data arrives and a moment at which the data can be transmitted.

It should be noted that, in this embodiment of this application, a time domain resource that is used to transmit data and that is indicated by at least one data transmission pattern (for example, the data transmission pattern is represented as a data transmission pattern C1 for ease of description) in a data transmission pattern set may be partially the same as a time domain resource that is used to transmit data and that is indicated by another data transmission pattern (for example, the data transmission pattern is represented as a data transmission pattern C2 for ease of description) in the data transmission pattern set. In this way, a latency between a moment at which data of a transmit end device arrives and a moment at which the data is transmitted can be reduced as much as possible. However, the two data transmission patterns that have the foregoing features cannot be used to transmit data at the same time optionally. In this way, data detection complexity of a receive end device can be reduced. For example, the data transmission pattern set shown in FIG. 21 is used as an example. It is assumed that the transmit end device is a terminal device. If the terminal device has an uplink data transmission requirement on the seventh symbol included in a first time unit, the terminal device may start to transmit a reference signal and a physical channel by using "a pattern used to indicate four consecutive symbols starting from the eighth symbol in the first time unit, where the four consecutive symbols are successively used to transmit D, D, R, and D". To be specific, the terminal device transmits the physical channel on the eighth symbol, the ninth symbol, and the eleventh symbol, and transmits the reference signal on the tenth symbol. In addition, when the terminal device has another uplink data transmission requirement, the terminal device can use only "a pattern used to indicate six consecutive symbols starting from the twelfth symbol in the first time unit to the third symbol in a second time unit, where the six consecutive symbols are successively used to transmit R, D, D, R, D, and D" at the earliest to start to transmit data, but cannot use "a pattern used to indicate five consecutive symbols starting from the tenth symbol in the first time unit, where the five consecutive symbols are successively used to transmit R, D, R, D, and D" to start to transmit the data. In this embodiment of this application, starting to transmit data based on a data transmission pattern may be understood as that the transmit end device sends the data on a time domain resource that is used to transmit the data and that is indicated by the data transmission pattern.

In addition, in this embodiment of this application, it is assumed that a transmit end device is a terminal device. Once data transmission starts based on a data transmission pattern included in the data transmission pattern set, it indicates that the terminal device performs data transmission by using all time domain resources that are used to transmit data and that are indicated by the data transmission pattern, instead of using only some of the time domain resources for data transmission. For example, FIG. 21 is used as an example. If the terminal device has a data transmission requirement on the third symbol included in a first time unit, the terminal device uses "a pattern used to indicate four consecutive symbols starting from the fourth symbol in the first time unit, where the four consecutive symbols are successively used to transmit D, D, R, and D" to start to transmit data, instead of using the fourth symbol in "a pattern used to indicate five consecutive symbols starting from the first symbol in the first time unit, where the five consecutive symbols are successively used to transmit R, D, D, D, and D" to start to transmit the data. A complete data transmission pattern is used, so that a receive end device correctly processes received data, so as to ensure data demodulation performance.

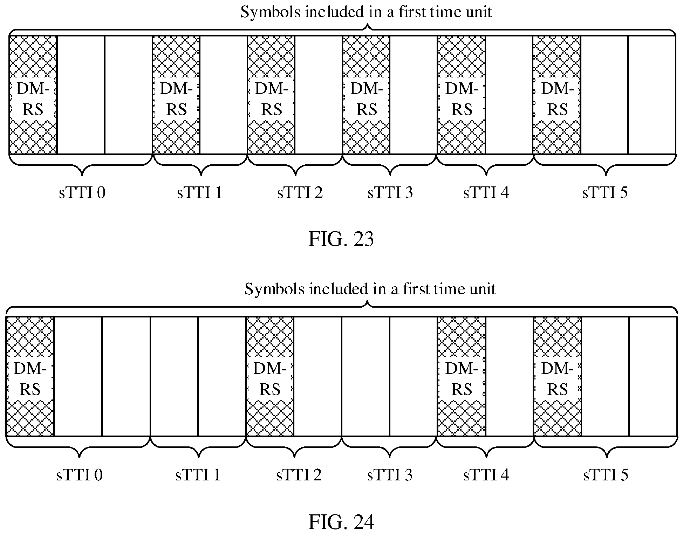

It should be noted that in this embodiment of this application, all symbols that are indicated or included in the data transmission pattern and that are used to transmit D may be correspondingly used for one time of transmission of one physical channel, one time of transmission of a plurality of physical channels, a plurality of times of repeated transmission (for example, at least two times of repeated transmission) of one physical channel, or a plurality of times of repeated transmission (for example, at least two times of repeated transmission) of a plurality of physical channels. When the symbols correspond to transmission of a plurality of physical channels, the plurality of physical channels may have a same type, for example, are all PUSCHs or PUCCHs, or may have different types. When the symbols correspond to one time of transmission or a plurality of times of repeated transmission of a plurality of physical channels, the plurality of physical channels may be transmitted on corresponding time domain resources at the same time or at different time. For example, the pattern 2 shown in FIG. 22 is used as an example. The pattern 2 indicates three symbols used to transmit D, which are the seventh symbol, the eighth symbol, and the ninth symbol included in the first time unit. In this case, physical channel transmission corresponding to the three symbols may be understood in the following manners in this embodiment of this application.
(1) Manner 1: The three symbols may correspond to one time of transmission of one physical channel such as one PUSCH or PUCCH. In other words, one time of transmission of one physical channel occupies a time domain resource corresponding to the three symbols.
(2) Manner 2: The three symbols may correspond to at least two times of transmission of one physical channel such as one PUSCH or PUCCH. In other words, at least two times of transmission of one physical channel occupy a time domain resource corresponding to the three symbols. For example, if a time domain resource that is used to transmit a physical channel and that is indicated by the pattern 2 corresponds to a plurality of sTTIs, that is, if the first symbol and the second symbol that are included in the pattern 2 correspond to the third sTTI included in FIG. 24, and the third symbol, the fourth symbol, and the fifth symbol that are included in the pattern 2 correspond to the fourth sTTI included in FIG. 24, the seventh symbol that is included in the first time unit, that is used to transmit a physical channel, and that is indicated in the pattern 2 may be used for one time of transmission of the physical channel, and the eighth symbol and the ninth symbol that are included in the first time unit, that are used to transmit a physical channel, and that are indicated in the pattern 2 may be used for the second time of repeated transmission of the physical channel.
(3) Manner 3: The three symbols may correspond to one time of transmission of a plurality of physical channels, for example, a plurality of PUSCHs, and the plurality of physical channels are simultaneously transmitted. For example, as described above, if a transmit end device can send a plurality of physical channels at a same moment, for example, the transmit end device supports MIMO transmission, or the transmit end device supports simultaneous sending of a PUSCH and a PUCCH, the three symbols may correspond to one time of transmission of the plurality of physical channels, in other words, one time of transmission of the plurality of physical channels occupies a time domain resource corresponding to the three symbols.
(4) Manner 4: The three symbols may correspond to a plurality of times of transmission of a plurality of physical channels, for example, a plurality of PUSCHs, and the plurality of physical channels are simultaneously transmitted. For example, as described above, if a transmit end device can send a plurality of physical channels at a same moment, for example, the transmit end device supports MIMO transmission, or the transmit end device supports simultaneous sending of a PUSCH and a PUCCH, the three symbols may correspond to one or more times of transmission of the plurality of physical channels, in other words, one or more times of transmission of the plurality of physical channels occupies a time domain resource corresponding to the three symbols.
(5) Manner 5: The three symbols still correspond to one time of transmission of a plurality of physical channels, but transmission symbol locations corresponding to the plurality of physical channels are separated. For example, if a time domain resource that is used to transmit a physical channel and that is indicated by the pattern 2 corresponds to a plurality of sTTIs, that is, if the first symbol and the second symbol that are included in the pattern 2 correspond to the third sTTI included in FIG. 24, and the third symbol, the fourth symbol, and the fifth symbol that are included in the pattern 2 correspond to the fourth sTTI included in FIG. 24, the seventh symbol that is included in the first time unit, that is used to transmit a physical channel, and that is indicated in the pattern 2 may be used to transmit one physical channel, and the eighth symbol and the ninth symbol that are included in the first time unit, that are used to transmit a physical channel, and that are indicated in the pattern 2 may be used to transmit another physical channel. The physical channels transmitted at different time locations may have a same type or different types.
(6) Manner 6: The three symbols still correspond to transmission of a plurality of physical channels, for example, correspond to transmission of two physical channels. In this case, some symbols may correspond to one or more times of repeated transmission of one physical channel, and the other symbols may correspond to one or more times of repeated transmission of the other physical channel.

It should be noted that the foregoing manner 1 to manner 6 are also applicable to description of another data transmission pattern. Details are not described.

In this embodiment of this application, optionally, one physical channel, for example, one PUSCH, may correspond to transmission of one TB.

It should be noted that, in this embodiment of this application, unless otherwise specified, if a time domain resource that is used to transmit data and that is indicated by the data transmission pattern can correspond to a plurality of sTTIs, physical channel transmission based on the data transmission pattern may be one time of transmission for one TB, a plurality of times of repeated transmission for one TB, one time of transmission for a plurality of different TBs, or a plurality of times of repeated transmission for a plurality of different TBs. Different time domain resources are used to transmit data on different TBs. Alternatively, physical channel transmission based on the data transmission pattern may be a plurality of times of repeated transmission for one TB and one time of transmission for a plurality of TBs, or may be one time of transmission for one TB and a plurality of times of repeated transmission for a plurality of TBs. Herein, the plurality of times mean at least two times. To ensure data transmission reliability, a plurality of times of repeated transmission for one TB may be ensured. It should be noted that, in this embodiment of this application, if a transmit end device such as a terminal device uses multi-codeword transmission, that is, two TBs can be transmitted in a same time unit, this case is the same as the foregoing discussed case of transmission of one TB. In other words, in this case, it may be considered that the two TBs are not two different TBs. In this embodiment of this application, one first time unit, for example, one subframe in the LTE system, includes six sTTIs in total, and symbol locations respectively occupied by the sTTIs in one subframe are shown in FIG. 23 or FIG. 24. Symbols used for reference signal transmission and physical channel transmission in each sTTI may be the same as or different from those in FIG. 23 or FIG. 24. This is not specifically limited in this embodiment of this application. Based on this, FIG. 21 is used as an example. A time domain resource indicated by each data transmission pattern corresponds to two sTTIs. Therefore, based on the data transmission pattern in FIG. 21, for a manner of transmitting data by a transmit end device, refer to the foregoing description. It is assumed that when one data transmission pattern includes a plurality of sTTIs, a location of a time domain resource corresponding to each sTTI may be used for one time of transmission of one TB. For example, FIG. 21 is used as an example. If the transmit end device transmits one TB by using "the pattern used to indicate the five consecutive symbols starting from the first symbol in the first time unit, where the five consecutive symbols are successively used to transmit R, D, D, D, and D", the transmit end device may transmit the TB once on the second symbol and the third symbol, and transmit the TB once again on the fourth symbol and the fifth symbol.

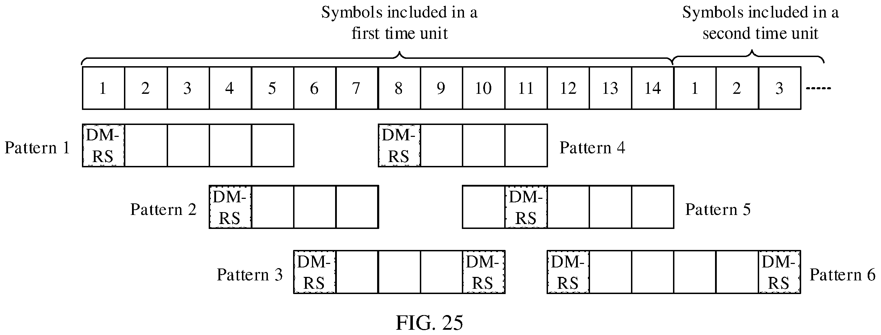

In an example 18, with reference to FIG. 25, the data transmission pattern set may include at least two of the following data transmission patterns: a pattern 1 used to indicate five consecutive symbols starting from the first symbol in the first time unit, where the five consecutive symbols are successively used to transmit R, D, D, D, and D; a pattern 2 used to indicate four consecutive symbols starting from the fourth symbol in the first time unit, where the four consecutive symbols are successively used to transmit R, D, D, and D; a pattern 3 used to indicate five consecutive symbols starting from the sixth symbol in the first time unit, where the five consecutive symbols are successively used to transmit R, D, D, D, and R; a pattern 4 used to indicate four consecutive symbols starting from the eighth symbol in the first time unit, where the four consecutive symbols are successively used to transmit R, D, D, and D; a pattern 5 used to indicate five consecutive symbols starting from the tenth symbol in the first time unit, where the five consecutive symbols are successively used to transmit D, R, D, D, and D; and a pattern 6 used to indicate six consecutive symbols starting from the twelfth symbol in the first time unit to the third symbol in the second time unit, where the six consecutive symbols are successively used to transmit R, D, D, D, D, and R.

In an alternative solution, the pattern that is included in the data transmission pattern set shown in FIG. 25 and that is used to indicate the five consecutive symbols starting from the first symbol in the first time unit, where the five consecutive symbols are successively used to transmit R, D, D, D, and D may be replaced with a pattern used to indicate five consecutive symbols starting from the first symbol in the first time unit, where the five consecutive symbols are successively used to transmit D, D, R, D, and D.

In another alternative solution, the pattern that is included in the data transmission pattern set shown in FIG. 25 and that is used to indicate the six consecutive symbols starting from the twelfth symbol in the first time unit to the third symbol in the second time unit, where the six consecutive symbols are successively used to transmit R, D, D, D, D, and R may be replaced with a pattern used to indicate six consecutive symbols starting from the twelfth symbol in the first time unit to the third symbol in the second time unit, where the six consecutive symbols are successively used to transmit R, D, D, R, D, and D.

In another alternative solution, the pattern that is included in the data transmission pattern set shown in FIG. 25 and that is used to indicate the four consecutive symbols starting from the fourth symbol in the first time unit, where the four consecutive symbols are successively used to transmit R, D, D, and D may be replaced with a pattern used to indicate four consecutive symbols starting from the fourth symbol in the first time unit, where the four consecutive symbols are successively used to transmit D, R, D, and D.

In another alternative solution, the pattern that is included in the data transmission pattern set shown in FIG. 25 and that is used to indicate the four consecutive symbols starting from the eighth symbol in the first time unit, where the four consecutive symbols are successively used to transmit R, D, D, and D may be replaced with a pattern used to indicate four consecutive symbols starting from the eighth symbol in the first time unit, where the four consecutive symbols are successively used to transmit D, R, D, and D.

It should be noted that, for the data transmission pattern set, one or more of the foregoing four alternative solutions may be used to replace a corresponding data transmission pattern.

An advantage of using the foregoing alternative solutions is that symbols that are used to transmit reference signals and that are indicated by any two data transmission patterns included in the data transmission pattern set are different. In this way, processing performed by a receive end device on received data can be simplified. For example, a location of a time domain resource used by the transmit end device to perform data transmission may be determined based on a location of a symbol that is used to transmit a reference signal and that uniquely corresponds to a data transmission pattern.

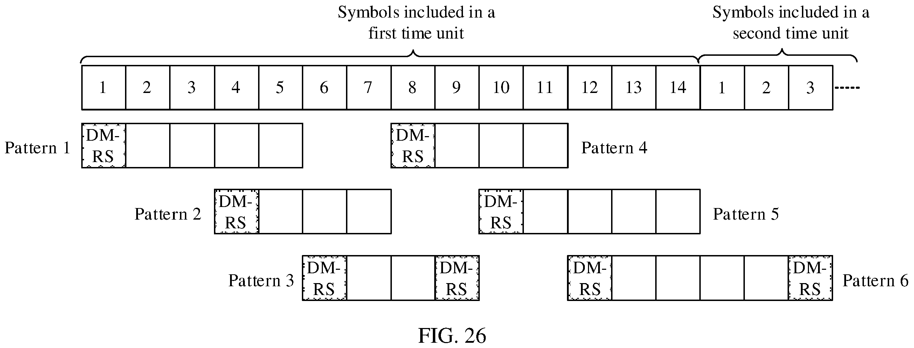

In an example 19, with reference to FIG. 26, the data transmission pattern set may include at least two of the following data transmission patterns: a pattern 1 used to indicate five consecutive symbols starting from the first symbol in the first time unit, where the five consecutive symbols are successively used to transmit R, D, D, D, and D; a pattern 2 used to indicate four consecutive symbols starting from the fourth symbol in the first time unit, where the four consecutive symbols are successively used to transmit R, D, D, and D; a pattern 3 used to indicate four consecutive symbols starting from the sixth symbol in the first time unit, where the four consecutive symbols are successively used to transmit R, D, D, and R; a pattern 4 used to indicate four consecutive symbols starting from the eighth symbol in the first time unit, where the four consecutive symbols are successively used to transmit R, D, D, and D; a pattern 5 used to indicate five consecutive symbols starting from the tenth symbol in the first time unit, where the five consecutive symbols are successively used to transmit R, D, D, D, and D; and a pattern 6 used to indicate six consecutive symbols starting from the twelfth symbol in the first time unit to the third symbol in the second time unit, where the six consecutive symbols are successively used to transmit R, D, D, D, D, and R.

In an alternative solution, the pattern that is included in the data transmission pattern set shown in FIG. 26 and that is used to indicate the five consecutive symbols starting from the first symbol in the first time unit, where the five consecutive symbols are successively used to transmit R, D, D, D, and D may be replaced with a pattern used to indicate five consecutive symbols starting from the first symbol in the first time unit, where the five consecutive symbols are successively used to transmit D, D, R, D, and D.

In another alternative solution, the pattern that is included in the data transmission pattern set shown in FIG. 26 and that is used to indicate the six consecutive symbols starting from the twelfth symbol in the first time unit to the third symbol in the second time unit, where the six consecutive symbols are successively used to transmit R, D, D, D, D, and R may be replaced with a pattern used to indicate six consecutive symbols starting from the twelfth symbol in the first time unit to the third symbol in the second time unit, where the six consecutive symbols are successively used to transmit R, D, D, R, D, and D.

In another alternative solution, the pattern that is included in the data transmission pattern set shown in FIG. 26 and that is used to indicate the four consecutive symbols starting from the sixth symbol in the first time unit, where the four consecutive symbols are successively used to transmit R, D, D, and R may be replaced with a pattern used to indicate four consecutive symbols starting from the sixth symbol in the first time unit, where the four consecutive symbols are successively used to transmit R, D, R, and D.

In another alternative solution, the pattern that is included in the data transmission pattern set shown in FIG. 26 and that is used to indicate the four consecutive symbols starting from the eighth symbol in the first time unit, where the four consecutive symbols are successively used to transmit R, D, D, and D may be replaced with a pattern used to indicate four consecutive symbols starting from the eighth symbol in the first time unit, where the four consecutive symbols are successively used to transmit D, R, D, and D.

In another alternative solution, the pattern that is included in the data transmission pattern set shown in FIG. 26 and that is used to indicate the four consecutive symbols starting from the fourth symbol in the first time unit, where the four consecutive symbols are successively used to transmit R, D, D, and D may be replaced with a pattern used to indicate four consecutive symbols starting from the fourth symbol in the first time unit, where the four consecutive symbols are successively used to transmit D, R, D, and D.

It should be noted that, for the data transmission pattern set, one or more of the foregoing five alternative solutions may be used to replace a corresponding data transmission pattern.

In addition to the advantage of the data transmission pattern set shown in FIG. 25, the data transmission pattern set shown in FIG. 26 further has the following advantage: Symbols that are used to transmit reference signals and that are indicated by all data transmission patterns included in the data transmission pattern set are the first symbols in all time domain resources that are used to transmit data and that are indicated by the data transmission patterns. Therefore, a receive end device such as a network device may first determine, by determining whether there is a reference signal, whether a transmit end device such as a terminal device uses a corresponding data transmission pattern to transmit data. This simplifies a design of buffering data by the receive end device.

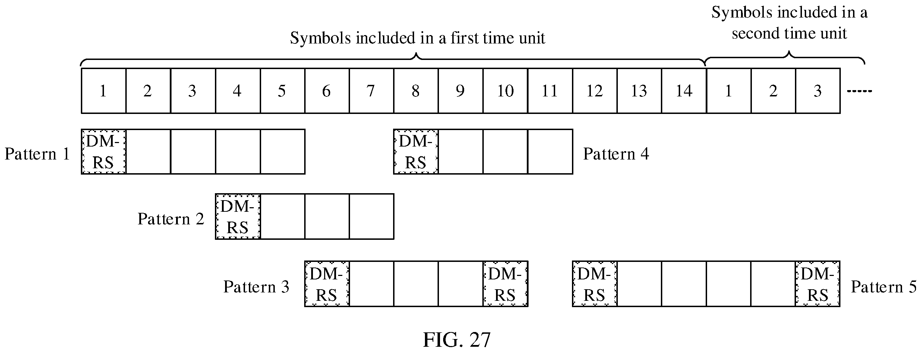

In an example 20, with reference to FIG. 27, the data transmission pattern set may include at least two of the following data transmission patterns: a pattern 1 used to indicate five consecutive symbols starting from the first symbol in the first time unit, where the five consecutive symbols are successively used to transmit R, D, D, D, and D; a pattern 2 used to indicate four consecutive symbols starting from the fourth symbol in the first time unit, where the four consecutive symbols are successively used to transmit R, D, D, and D; a pattern 3 used to indicate five consecutive symbols starting from the sixth symbol in the first time unit, where the five consecutive symbols are successively used to transmit R, D, D, D, and R; a pattern 4 used to indicate four consecutive symbols starting from the eighth symbol in the first time unit, where the four consecutive symbols are successively used to transmit R, D, D, and D; a pattern 5 used to indicate five consecutive symbols starting from the tenth symbol in the first time unit, where the five consecutive symbols are successively used to transmit D, R, R, D, and D; and a pattern 6 used to indicate six consecutive symbols starting from the twelfth symbol in the first time unit to the third symbol in the second time unit, where the six consecutive symbols are successively used to transmit R, D, D, D, D, and R.

The data transmission pattern set shown in FIG. 27 cannot include both the pattern used to indicate the five consecutive symbols starting from the tenth symbol in the first time unit (where the five consecutive symbols are successively used to transmit D, R, R, D, and D) and the pattern used to indicate the six consecutive symbols starting from the twelfth symbol in the first time unit to the third symbol in the second time unit (where the six consecutive symbols are successively used to transmit R, D, D, D, D, and R). Particularly, the data transmission pattern set may include only the pattern used to indicate the six consecutive symbols starting from the twelfth symbol in the first time unit to the third symbol in the second time unit (where the six consecutive symbols are successively used to transmit R, D, D, D, D, and R) and the other data transmission patterns other than "the pattern used to indicate the five consecutive symbols starting from the tenth symbol in the first time unit (where the five consecutive symbols are successively used to transmit D, R, R, D, and D)". FIG. 27 shows this implementation.

The data transmission pattern set shown in FIG. 27 has same advantages as those shown in FIG. 25 and FIG. 26. In addition, compared with a data transmission pattern set that includes "the pattern used to indicate the five consecutive symbols starting from the tenth symbol in the first time unit (where the five consecutive symbols are successively used to transmit D, R, R, D, and D)", but does not include "the pattern used to indicate the six consecutive symbols starting from the twelfth symbol in the first time unit to the third symbol in the second time unit (where the six consecutive symbols are successively used to transmit R, D, D, D, D, and R)", the data transmission pattern set shown in FIG. 27 can help shorten a waiting latency of data transmission. In addition, a symbol that is in each data transmission pattern in the data transmission pattern set shown in FIG. 27 and that is used to transmit a reference signal is the first symbol in a time domain resource indicated by the data transmission pattern. Therefore, processing performed by a receive end device on received data can be simplified, and there is no need to excessively buffer data.

It should be noted that the data transmission pattern set in each of FIG. 25 to FIG. 27 can support frequency hopping transmission of data. Specific descriptions are similar to the descriptions of frequency hopping transmission in the foregoing embodiment. Details are not described herein again in this embodiment of this application.

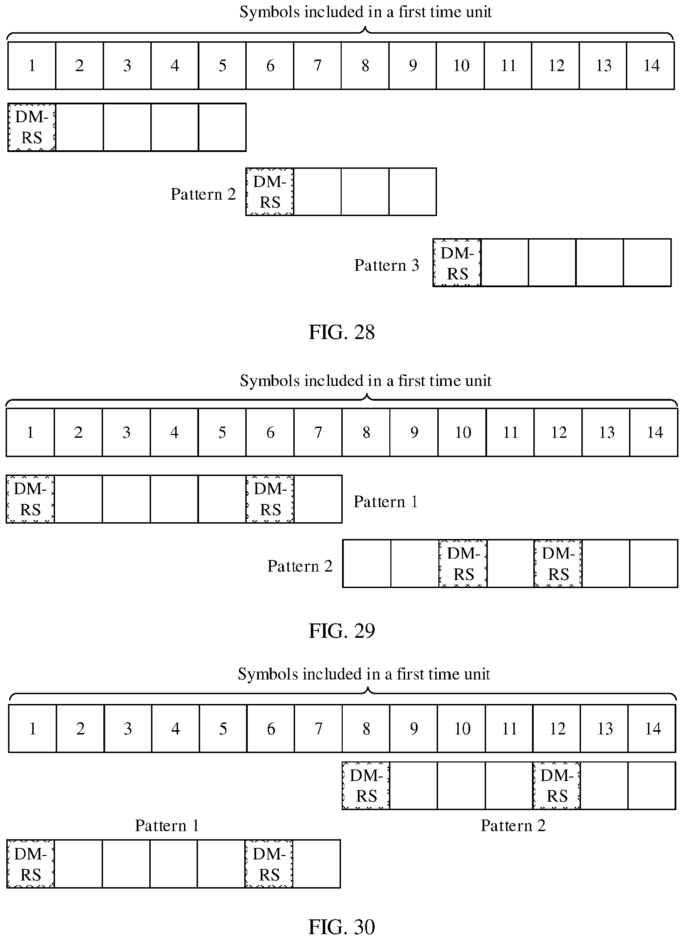

In an example 21, with reference to FIG. 28, the data transmission pattern set may include at least two of the following data transmission patterns: a pattern 1 used to indicate five consecutive symbols starting from the first symbol in the first time unit, where the five consecutive symbols are successively used to transmit R, D, D, D, and D; a pattern 2 used to indicate four consecutive symbols starting from the sixth symbol in the first time unit, where the four consecutive symbols are successively used to transmit R, D, D, and D; and a pattern 3 used to indicate five consecutive symbols starting from the tenth symbol in the first time unit, where the five consecutive symbols are successively used to transmit R, D, D, D, and D.

In an alternative solution, the pattern that is included in the data transmission pattern set shown in FIG. 28 and that is used to indicate the five consecutive symbols starting from the first symbol in the first time unit, where the five consecutive symbols are successively used to transmit R, D, D, D, and D may be replaced with a pattern used to indicate five consecutive symbols starting from the first symbol in the first time unit, where the five consecutive symbols are successively used to transmit D, D, R, D, and D.

In another alternative solution, the pattern that is included in the data transmission pattern set shown in FIG. 28 and that is used to indicate the four consecutive symbols starting from the sixth symbol in the first time unit, where the four consecutive symbols are successively used to transmit R, D, D, and D may be replaced with a pattern used to indicate four consecutive symbols starting from the sixth symbol in the first time unit, where the four consecutive symbols are successively used to transmit D, D, R, and D, or the four consecutive symbols are successively used to transmit D, D, D, and R.

It should be noted that, for the data transmission pattern set, one or more of the foregoing two alternative solutions may be used to replace a corresponding data transmission pattern.

The data transmission pattern set shown in FIG. 28 is applicable to a system that does not use frequency hopping transmission. In addition, a data transmission pattern in the data transmission pattern set includes a largest quantity of symbols used for data transmission, so that data transmission efficiency can be ensured.

It should be noted that, time domain resources indicated by the data transmission patterns included in the data transmission pattern set shown in each of the foregoing examples 10 to 21 correspond to more transmission time intervals, and the data transmission patterns are applicable to two times of grant free-based data transmission.

In an example 22, with reference to FIG. 29, the data transmission pattern set may include the following data transmission patterns: a pattern 1 used to indicate seven consecutive symbols starting from the first symbol in the first time unit, where the seven consecutive symbols are successively used to transmit R, D, D, D, D, R, and D; and a pattern 2 used to indicate seven consecutive symbols starting from the eighth symbol in the first time unit, where the seven consecutive symbols are successively used to transmit D, D, R, D, R, D, and D.

In an alternative solution, the pattern that is included in the data transmission pattern set shown in FIG. 29 and that is used to indicate the seven consecutive symbols starting from the first symbol in the first time unit, where the seven consecutive symbols are successively used to transmit R, D, D, D, D, R, and D may be replaced with a pattern used to indicate seven consecutive symbols starting from the first symbol in the first time unit, where the seven consecutive symbols are successively used to transmit D, D, R, D, D, R, and D.

In another alternative solution, the pattern that is included in the data transmission pattern set shown in FIG. 29 and that is used to indicate the seven consecutive symbols starting from the eighth symbol in the first time unit, where the seven consecutive symbols are successively used to transmit D, D, R, D, R, D, and D may be replaced with a pattern used to indicate seven consecutive symbols starting from the eighth symbol in the first time unit, where the seven consecutive symbols are successively used to transmit R, D, D, D, R, D, and D, and a data transmission pattern set obtained after the replacement is shown in FIG. 30; or may be replaced with a pattern used to indicate seven consecutive symbols starting from the eighth symbol in the first time unit, where the seven consecutive symbols are successively used to transmit D, R, D, D, R, D, and D; or may be replaced with a pattern used to indicate seven consecutive symbols starting from the eighth symbol in the first time unit, where the seven consecutive symbols are successively used to transmit D, D, D, R, R, D, and D.

In an alternative solution, the pattern that is included in the data transmission pattern set shown in FIG. 30 and that is used to indicate the seven consecutive symbols starting from the first symbol in the first time unit, where the seven consecutive symbols are successively used to transmit R, D, D, D, D, R, and D may be replaced with a pattern used to indicate seven consecutive symbols starting from the first symbol in the first time unit, where the seven consecutive symbols are successively used to transmit R, D, D, R, D, D, and D, or the seven consecutive symbols are successively used to transmit R, D, D, D, R, D, and D.

If the data transmission pattern set in the example 22 includes "three consecutive symbols starting from the first symbol in the first time unit that are successively used to transmit R, D, and D", the "three consecutive symbols starting from the first symbol in the first time unit that are successively used to transmit R, D, and D" may be replaced with "three consecutive symbols starting from the first symbol in the first time unit that are successively used to transmit D, D, and R".

The data transmission pattern set in the example 22 is implemented based on an existing sTTI data transmission structure. Therefore, implementation complexity is reduced, and frequency hopping transmission can be further supported. In addition, in the data transmission pattern set shown in FIG. 30, symbols that are included in different data transmission patterns and that are used to transmit reference signals are the first symbols in time domain resources indicated by the data transmission patterns. Therefore, processing performed by a receive end device on received data can be simplified, and there is no need to excessively buffer data.

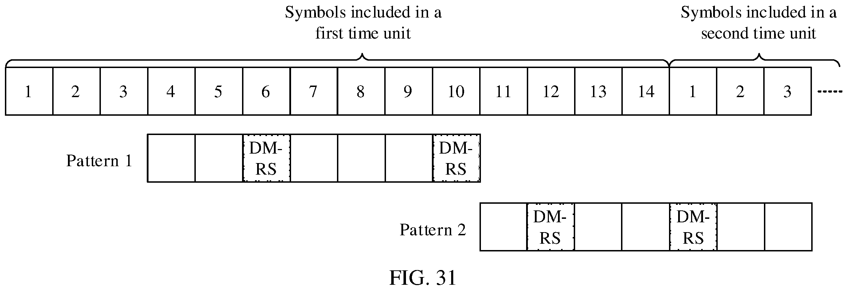

In an example 23, with reference to FIG. 31, the data transmission pattern set may include the following data transmission patterns: a pattern 1 used to indicate seven consecutive symbols starting from the fourth symbol in the first time unit, where the seven consecutive symbols are successively used to transmit D, D, R, D, D, D, and R; and a pattern 2 used to indicate seven consecutive symbols starting from the eleventh symbol in the first time unit to the third symbol in the second time unit, where the seven consecutive symbols are successively used to transmit D, R, D, D, R, D, and D.

In an alternative solution, the pattern that is included in the data transmission pattern set shown in FIG. 31 and that is used to indicate the seven consecutive symbols starting from the eleventh symbol in the first time unit to the third symbol in the second time unit, where the seven consecutive symbols are successively used to transmit D, R, D, D, R, D, and D may be replaced with a pattern used to indicate seven consecutive symbols starting from the eleventh symbol in the first time unit to the third symbol in the second time unit, where the seven consecutive symbols are successively used to transmit D, R, D, D, D, D, and R; or may be replaced with a pattern used to indicate eight consecutive symbols starting from the tenth symbol in the first time unit to the third symbol in the second time unit, where the eight consecutive symbols are successively used to transmit D, D, R, D, D, R, D, and D; or may be replaced with a pattern used to indicate eight consecutive symbols starting from the tenth symbol in the first time unit to the third symbol in the second time unit, where the eight consecutive symbols are successively used to transmit D, D, R, D, D, D, D, and R.

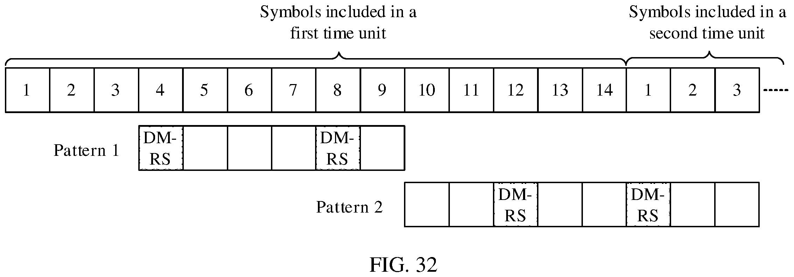

In an example 24, with reference to FIG. 32, the data transmission pattern set may include the following data transmission patterns: a pattern used to indicate six consecutive symbols starting from the fourth symbol in the first time unit, where the six consecutive symbols are successively used to transmit R, D, D, D, R, and D; and a pattern 2 used to indicate eight consecutive symbols starting from the tenth symbol in the first time unit to the third symbol in the second time unit, where the eight consecutive symbols are successively used to transmit D, D, R, D, D, R, D, and D.

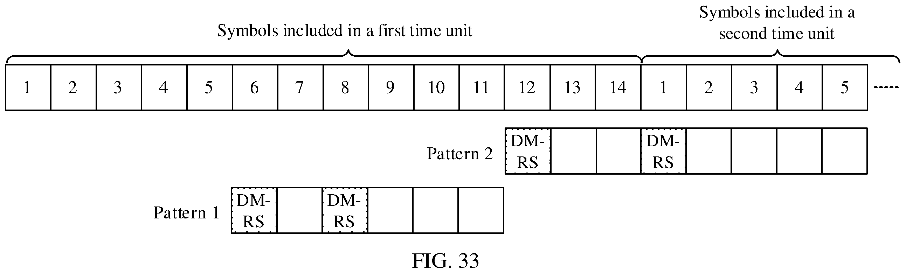

In an example 25, with reference to FIG. 33, the data transmission pattern set may include the following data transmission patterns: a pattern 1 used to indicate six consecutive symbols starting from the sixth symbol in the first time unit, where the six consecutive symbols are successively used to transmit R, D, R, D, D, and D; and a pattern 2 used to indicate eight consecutive symbols starting from the twelfth symbol in the first time unit to the fifth symbol in the second time unit, where the eight consecutive symbols are successively used to transmit R, D, D, R, D, D, D, and D.

In an alternative solution, the pattern that is included in the data transmission pattern set shown in FIG. 33 and that is used to indicate the six consecutive symbols starting from the sixth symbol in the first time unit, where the six consecutive symbols are successively used to transmit R, D, R, D, D, and D may be replaced with a pattern used to indicate six consecutive symbols starting from the sixth symbol in the first time unit, where the six consecutive symbols are successively used to transmit R, D, D, R, D, and D.

In an alternative solution, the pattern that is included in the data transmission pattern set shown in FIG. 33 and that is used to indicate the eight consecutive symbols starting from the twelfth symbol in the first time unit to the fifth symbol in the second time unit, where the eight consecutive symbols are successively used to transmit R, D, D, R, D, D, D, and D may be replaced with a pattern used to indicate eight consecutive symbols starting from the twelfth symbol in the first time unit to the fifth symbol in the second time unit, where the eight consecutive symbols are successively used to transmit R, D, D, D, D, R, D, and D.

It should be noted that the data transmission pattern set in each of FIG. 29 to FIG. 33 can support frequency hopping transmission of data, and symbols that are used to transmit reference signals and that are indicated by different data transmission patterns are located at different locations on a time domain resource. Therefore, processing performed by a receive end device on received data can be simplified.

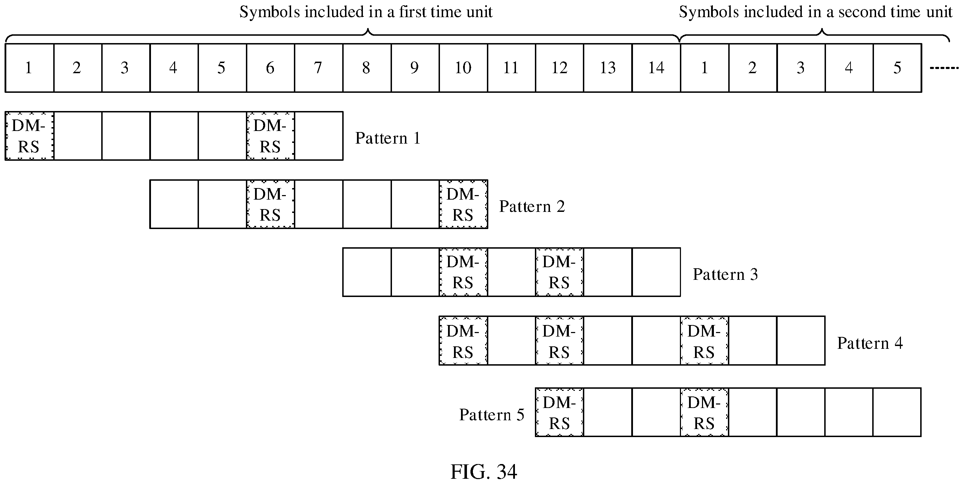

In an example 26, with reference to FIG. 34, the data transmission pattern set may include at least two of the following data transmission patterns: a pattern 1 used to indicate seven consecutive symbols starting from the first symbol in the first time unit, where the seven consecutive symbols are successively used to transmit R, D, D, D, D, R, and D; a pattern 2 used to indicate seven consecutive symbols starting from the fourth symbol in the first time unit, where the seven consecutive symbols are successively used to transmit D, D, R, D, D, D, and R; a pattern 3 used to indicate seven consecutive symbols starting from the eighth symbol in the first time unit, where the seven consecutive symbols are successively used to transmit D, D, R, D, R, D, and D; a pattern 4 used to indicate eight consecutive symbols starting from the tenth symbol in the first time unit to the third symbol in the second time unit, where the eight consecutive symbols are successively used to transmit R, D, R, D, D, R, D, and D; and a pattern 5 used to indicate eight consecutive symbols starting from the twelfth symbol in the first time unit to the fifth symbol in the second time unit, where the eight consecutive symbols are successively used to transmit R, D, D, R, D, D, D, and D.

In an alternative solution, the pattern that is included in the data transmission pattern set shown in FIG. 34 and that is used to indicate the seven consecutive symbols starting from the fourth symbol in the first time unit, where the seven consecutive symbols are successively used to transmit D, D, R, D, D, D, and R may be replaced with a pattern used to indicate six consecutive symbols starting from the sixth symbol in the first time unit, where the six consecutive symbols are successively used to transmit R, D, D, D, R, and D. The data transmission pattern set implemented in this manner can support frequency hopping transmission, and can help reduce a waiting latency between a moment at which a transmit end device needs to transmit data and a moment at which the transmit end device can transmit the data.

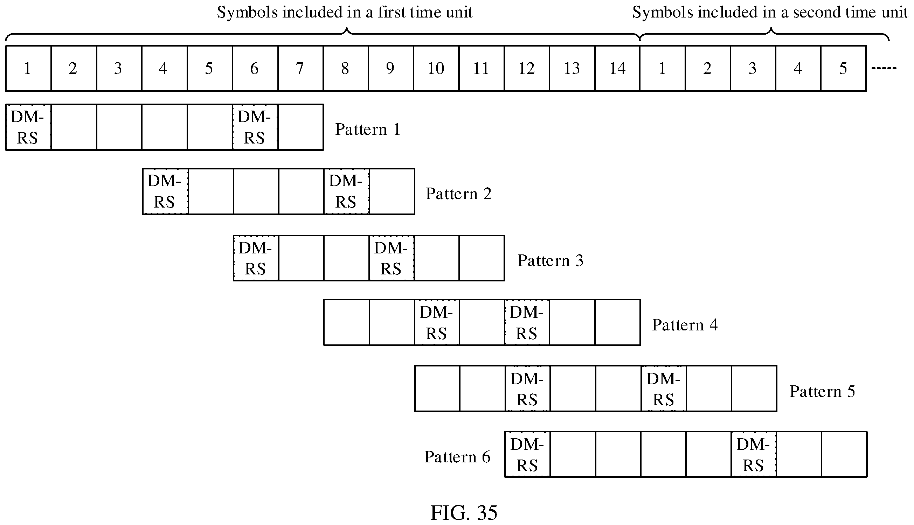

In an example 27, with reference to FIG. 35, the data transmission pattern set may include at least two of the following data transmission patterns: a pattern 1 used to indicate seven consecutive symbols starting from the first symbol in the first time unit, where the seven consecutive symbols are successively used to transmit R, D, D, D, D, R, and D; a pattern 2 used to indicate six consecutive symbols starting from the fourth symbol in the first time unit, where the six consecutive symbols are successively used to transmit R, D, D, D, R, and D; a pattern 3 used to indicate six consecutive symbols starting from the sixth symbol in the first time unit, where the six consecutive symbols are successively used to transmit R, D, D, R, D, and D; a pattern 4 used to indicate seven consecutive symbols starting from the eighth symbol in the first time unit, where the seven consecutive symbols are successively used to transmit D, D, R, D, R, D, and D; a pattern 5 used to indicate eight consecutive symbols starting from the tenth symbol in the first time unit to the third symbol in the second time unit, where the eight consecutive symbols are successively used to transmit D, D, R, D, D, R, D, and D; and a pattern 6 used to indicate eight consecutive symbols starting from the twelfth symbol in the first time unit to the fifth symbol in the second time unit, where the eight consecutive symbols are successively used to transmit R, D, D, D, D, R, D, and D.

The data transmission pattern set shown in FIG. 35 can support frequency hopping transmission of data, and a quantity of symbols used to transmit data is increased in the first time unit. Therefore, a waiting latency between a moment at which a transmit end device needs to transmit data and a moment at which the transmit end device transmits the data can be reduced.

It should be noted that, time domain resources indicated by the data transmission patterns included in the data transmission pattern set shown in each of the foregoing examples 22 to 27 correspond to more transmission time intervals, and the time domain resources are applicable to three times of grant free-based data transmission.

In addition, the data transmission pattern set shown in each of the example 1 to the example 27 is an implementation based on a structure in a mode that is shown in FIG. 24 and in which a DMRS is shared by sTTIs. A data transmission pattern implemented based on the mode that is shown in FIG. 24 and in which a DMRS is shared by sTTIs can help reduce design complexity. In addition, because different sTTIs can share a DMRS resource, reference signal transmission resource overheads can be reduced, and data transmission efficiency can be ensured. Particularly, for repeated transmission, when the DMRS sharing mode is used, reference signal overheads used to identify a data transmission pattern and/or demodulate data in the data transmission pattern can be reduced. Therefore, it is advantageous that the data transmission pattern is designed based on DMRS sharing. In addition, as described above, to ensure a data transmission latency and data transmission reliability, an uplink data transmission mode based on scheduling free transmission may be used, for example, a UL grant free transmission mechanism implemented based on an SPS mechanism or a UL grant free transmission mechanism directly implemented through configuration based on higher layer signaling. From a perspective of power saving for a transmit end device, when the transmit end device, for example, a terminal device configured with uplink skipping (Uplink Skipping), has no transmission requirement, data does not need to be transmitted on each configured scheduling free data transmission resource. Based on this, a receive end device such as a network device needs to determine, by blindly detecting whether there is a reference signal, whether the terminal device transmits data by using a configured scheduling free data transmission resource. If the configured scheduling free data transmission resource is designed based on the DMRS sharing mode, reference signal transmission resource overheads can be reduced, but a problem exists when the network device identifies a data transmission location. For example, FIG. 24 is used as an example. If the network device detects a DMRS on the sixth symbol included in the first time unit, the network device cannot determine whether the terminal device transmits uplink data or a physical channel based on an sTTI 1, or transmits the uplink data or the physical channel based on an sTTI 2, or transmits the physical channel based on both the sTTI 1 and the sTTI 2. Although the network device may determine the data transmission location through blind experiment, implementation complexity of the network device is increased. In the manner in this embodiment of this application, for example, in the data transmission pattern set shown in each of the example 1 to the example 27, the network device may uniquely determine, based on a location and/or a quantity of detected DMRSs, a location of a data transmission time domain resource including the DMRS, so as to ensure correct receiving of transmitted data, and implement the foregoing advantages. For the foregoing problem, for example, an implementation in FIG. 5, FIG. 6, or FIG. 9 may be used. In the implementation in FIG. 5 or FIG. 9, because "a pattern starting from the fourth symbol in the first time unit" includes more symbols that can be used to transmit a physical channel, data transmission efficiency can be ensured. The foregoing is described by using an example in which a symbol included or indicated in a data transmission pattern is used for one time of transmission of a physical channel. However, this is also applicable to another scenario.

It should be noted that, in this embodiment of this application, the first sTTI to the sixth sTTI included in the first time unit may be respectively represented by an sTTI 0 to an sTTI 5, or may be represented in another manner. This is not specifically limited.

It should be noted that, in this embodiment of this application, if a symbol included or indicated in a data transmission pattern is used for a plurality of times of repeated transmission of a physical channel, a same redundancy version (Redundancy Version, RV) or different redundancy versions may be used for the plurality of times of repeated transmission corresponding to the data transmission pattern. When different redundancy versions are used, redundancy versions corresponding to different repeated transmission locations included in the data transmission pattern may be obtained based on predefined or preconfigured information, or may be obtained by using physical signaling. Optionally, in a data transmission pattern, a redundancy version corresponding to a time domain resource that is used for one time of transmission of a physical channel and that includes a reference signal is RV = 0. An advantage in this case is as follows: Usually, when RV = 0, a largest quantity of valid information bits are correspondingly transmitted. Therefore, the DMRS is always included in the time domain resource corresponding to RV = 0, so that demodulation performance when RV = 0 can be ensured, so as to ensure data transmission reliability. RV versions corresponding to other repeated transmission locations may be arranged or cyclically arranged in the data transmission pattern in ascending order or descending order of time based on RV = 0. Alternatively, another determining manner may be used. This is not specifically limited. When one data transmission pattern includes a plurality of reference signals, a repeated transmission location corresponding to each reference signal may correspond to RV = 0, or a repeated transmission location corresponding to only one of the reference signals corresponds to RV = 0. In the latter case, for an RV version number corresponding to another repeated transmission location, refer to the foregoing manner. In the former case, based on RV = 0 corresponding to the repeated transmission location corresponding to the one of the reference signals, RVs corresponding to the other repeated transmission locations (excluding the repeated transmission location corresponding to RV = 0) may be sorted. For example, FIG. 17 is used as an example. Based on an implementation in FIG. 17, if the pattern 1 corresponds to two times of repeated transmission of a physical channel, that is, the first symbol, the second symbol, and the third symbol that are included or indicated in the pattern 1 may correspond to one repeated transmission location (for example, a repeated transmission location 1) of the physical channel, and the fourth symbol and the fifth symbol that are included or indicated in the pattern 1 may correspond to the other repeated transmission location (for example, a repeated transmission location 2) of the physical channel, according to the foregoing criterion, in one manner, RV versions corresponding to both the repeated transmission location 1 and the repeated transmission location 2 may be 0; or in another manner, an RV version corresponding to the repeated transmission location 1 may be 0, and an RV version corresponding to the repeated transmission location 2 may be 1, 2, or 3. It should be noted that, in this embodiment of this application, an RV version corresponding to a repeated transmission location may be understood as an RV version that may be used when a transmit end device transmits data by using a time domain resource corresponding to the repeated transmission location.

Certainly, the data transmission pattern set may be alternatively implemented based on a structure in a mode that is shown in FIG. 23 and in which a DMRS is not shared by sTTIs. When the structure in the mode that is shown in FIG. 23 and in which a DMRS is not shared by sTTIs is used for implementation, each sTTI includes one reference signal, such as a DMRS shown in FIG. 23. Therefore, when a data transmission pattern set applicable to one time of grant free-based data transmission needs to be designed, because each sTTI uniquely corresponds to one DMRS, in an implementation, each sTTI may be considered as a data transmission pattern, and a receive end device may determine a corresponding data transmission pattern based on a symbol location occupied by a detected DMRS, so as to determine specific symbols used by a transmit end device to transmit data. When a data transmission pattern set applicable to two, three, or more times of grant free-based data transmission needs to be designed, based on the grant free-based data transmission mechanism, because a receive end device is unaware of an arrival moment of data from a transmit end device, although the receive end device can detect a DMRS, the receive end device cannot determine how to combine corresponding data packets. In this case, an implementation similar to that in the foregoing structure in the mode in which a DMRS is shared by sTTIs may be used. To be specific, a data transmission pattern set is designed based on a fact that symbols that are used to transmit reference signals and that are indicated by different data transmission patterns are different. In this way, the receive end device can uniquely determine a data transmission pattern based on the detected DMRS, and the receive end device is clear about data combination, so that data transmission reliability can be ensured.

In this embodiment of this application, if the data transmission pattern set is designed based on the structure in the mode in which a DMRS is shared by sTTIs, when the transmit end device is a terminal device, the terminal device may further dynamically adjust the data transmission pattern based on received indication information sent by a network device such as an access network device. For example, that data is transmitted by using the transmission pattern set designed based on the structure in the mode in which a DMRS is shared by sTTIs is dynamically adjusted to that data is transmitted by using a data transmission pattern set designed based on the structure in the mode in which a DMRS is not shared by sTTIs. The indication information may be implemented by using SPS activation or SPS re-activation (Re-activation) signaling, or may be implemented in another manner. This is not specifically limited in this embodiment of this application. The SPS re-activation signaling indicates that the terminal device first receives one piece of SPS activation signaling, and then receives another piece of SPS activation signaling. In this case, the terminal device may overwrite an indication of the first sent SPS activation signaling by using an indication of the later received SPS activation signaling.

It should be noted that, in this embodiment of this application, when the time domain resource corresponding to the data transmission pattern includes at least two third time units, and a length of the third time unit is less than 14 symbols, the data transmission pattern may be used to indicate that only one symbol in the corresponding time domain resource is used for one reference signal R. For example, the third time unit corresponds to one sTTI. In this way, when the time domain resource corresponding to the data transmission pattern corresponds to two or more sTTs, each data transmission pattern includes only one reference signal R, so that more data transmission patterns can be generated in one time unit, so as to ensure a data transmission latency.

Alternatively, in this embodiment of this application, when the time domain resource corresponding to the data transmission pattern includes at least two third time units, and the data transmission pattern is used to indicate that only one symbol in time domain resources corresponding to the at least two third time units included in the corresponding time domain resource is used for one reference signal R, frequency resources used for the at least one physical channel D in the time domain resources corresponding to the at least two third time units are the same. A length of the third time unit is less than 14 symbols. For example, the third time unit corresponds to one sTTI. In this way, when the time domain resource indicated by the data transmission pattern corresponds to two or more sTTs, each data transmission pattern may include one reference signal R or a plurality of reference signals R. However, for a plurality of third time units that share one reference signal R, to ensure data demodulation performance, the plurality of third time units that share one reference signal R correspond to a same frequency resource used for data transmission.

According to the data transmission method provided in this embodiment of this application, when data is transmitted by using the foregoing data transmission pattern set, a prior-art problem that a receive end device cannot determine which symbol is used as a transmission resource used for received data can be resolved. In other words, in the grant free-based data transmission mechanism, it can be ensured that a receive end can accurately determine a location at which a transmit end transmits data. For example, for the data transmission pattern set designed based on the structure in the mode in which a DMRS is shared by sTTIs, because locations of symbols occupied by a reference signal in different data transmission patterns are in a one-to-one correspondence with the data transmission patterns including the reference signal, the receive end device can determine, based on the data transmission pattern, which symbol is used as the transmission resource used for the received data, so as to correctly obtain the data through demodulation.

In addition, if the time domain resource indicated by the data transmission pattern includes a plurality of transmission time intervals, for example, a plurality of sTTIs, when the plurality of transmission time intervals included in the data transmission pattern can share a reference signal, control information overheads can be reduced, and it can be ensured that a quantity of symbols that are in the time domain resource indicated by the data transmission pattern and that are used for physical channel transmission is as large as possible, so as to ensure data transmission efficiency. According to the solution provided in this embodiment of this application, when the time resource indicated by the data transmission pattern includes a plurality of transmission time intervals, data transmission efficiency can be ensured, and the receive end device can uniquely determine, based on locations of symbols occupied by different reference signals, data transmission patterns including the reference signals. In this way, data is correctly received. In addition, in this case, when the time domain resource indicated by the data transmission pattern includes at least two transmission time intervals, only one symbol in the time domain resource indicated by the data transmission pattern may be used to transmit a parameter signal. In this way, a waiting latency between a moment at which a transmit end device needs to send data and a moment at which the transmit end device can send the data can be reduced.

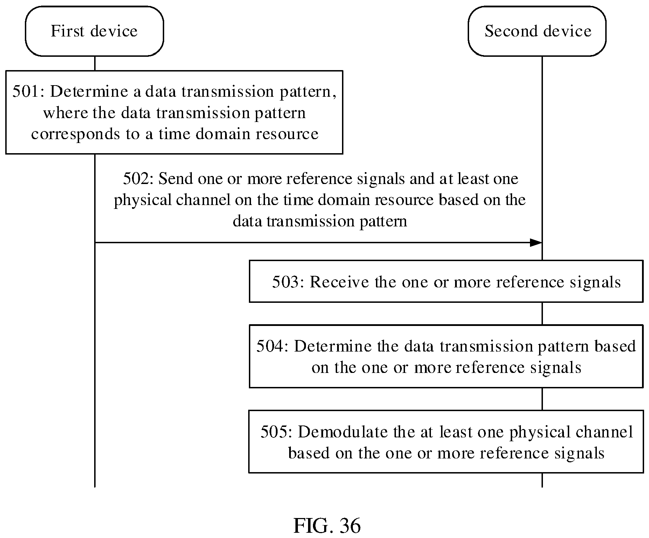

FIG. 36 is a flowchart of another data transmission method according to an embodiment of this application. As shown in FIG. 36, the method may include the following steps.

It should be noted that the method provided in this embodiment of this application may be applied to a data transmission process in a grant free-based data transmission mechanism. Specifically, the method may be applied to an uplink data transmission process in the grant free-based data transmission mechanism, or may be applied to a downlink data transmission process in the grant free-based data transmission mechanism. In addition, in this embodiment of this application, the grant free-based data transmission mechanism may be implemented based on an SPS mechanism or may be implemented through configuration based on higher layer signaling.

501: A first device determines a data transmission pattern, where the data transmission pattern corresponds to a time domain resource.

In this embodiment of this application, that the data transmission pattern corresponds to the time domain resource may be understood as that the data transmission pattern is used to indicate the time domain resource used during data transmission. For example, the data transmission pattern is used to indicate a location of the time domain resource used during data transmission. For ease of description, in this embodiment of this application, an example in which the data transmission pattern is used to indicate the time domain resource used during data transmission is used for specific description, and the "indicate" does not represent an action.

Specifically, the data transmission pattern is used to indicate symbols that are in the time domain resource corresponding to the data transmission pattern and that are used for one or more reference signals and at least one physical channel. To be specific, in this embodiment of this application, at least one symbol in the time domain resource corresponding to the data transmission pattern is used to transmit the one or more reference signals, and the one or more reference signals are used to demodulate the at least one physical channel. The physical channel may be a PUCCH and/or a PUSCH. Alternatively, the reference signal is used by a second device to determine DTX. It should be noted that, in this embodiment of this application, for ease of subsequent description, R is used to represent the reference signal, and D is used to represent the physical channel.

In this embodiment of this application, the reference signal corresponds to the data transmission pattern. In this way, the second device may determine the data transmission pattern based on a detected reference signal, so as to determine, based on the time domain resource corresponding to the data transmission pattern, the time domain resource used by the first device to send data.

In this embodiment of this application, the data transmission pattern is one of at least two data transmission patterns included in a data transmission pattern set.

In the data transmission pattern set, there is a case in which locations of symbols in the time domain resource that correspond to different data transmission patterns and that are used for the reference signal are different. When locations of symbols in the time domain resource that correspond to different data transmission patterns in the data transmission pattern set and that are used for the one or more reference signals are the same, reference signals transmitted on the symbols that are in the different data transmission patterns and that are used for the one or more reference signals are different, and/or frequency domain resources used for reference signals transmitted on the symbols that are in the different data transmission patterns and that are used for the one or more reference signals are different, and/or quantities of symbols in the time domain resource that correspond to the different data transmission patterns and that are used for the one or more reference signals are different.

In some embodiments, the data transmission pattern set may be predefined. When the first device is a terminal device, in other words, when the method in this embodiment of this application is applied to the uplink data transmission process in the grant free-based data transmission mechanism, the data transmission pattern may be preconfigured, or may be indicated by a network device such as an access network device by using higher layer signaling or physical layer signaling.

502: The first device sends the one or more reference signals and the at least one physical channel on the time domain resource based on the data transmission pattern.

503: The second device receives the one or more reference signals.

504: The second device determines the data transmission pattern based on the one or more reference signals.

The time domain resource corresponding to the data transmission pattern includes the one or more reference signals R and the at least one physical channel D.

In this embodiment of this application, the data transmission pattern used by the first device to send the data corresponds to the reference signal. For example, a location of a symbol, in the time domain resource, that corresponds to the data transmission pattern used by the first device to send the data and that is used for the reference signal is different from a location of a symbol, in the time domain resource, that corresponds to another data transmission pattern in the data transmission pattern set and that is used for the reference signal. Alternatively, when locations of symbols in the time domain resource that correspond to different data transmission patterns in the data transmission pattern set and that are used for the reference signal are the same, a quantity of symbols in the time domain resource that correspond to the data transmission pattern used by the first device to send the data and that are used for the reference signal is different from a quantity of symbols in the time domain resource that correspond to another data transmission pattern in the data transmission pattern set and that are used for the reference signal, or a reference signal sent by the first device on a symbol that is in the used data transmission pattern and that is used for the reference signal is different from a reference signal sent on a symbol that is in another data transmission pattern in the data transmission pattern set and that is used for the reference signal, or a frequency domain resource used for a reference signal sent by the first device on a symbol that is in the used data transmission pattern and that is used for the reference signal is different from a frequency domain resource used for a reference signal sent on a symbol that is in another data transmission pattern in the data transmission pattern set and that is used for the reference signal. Therefore, after the second device detects the reference signal, the second device may determine, based on the detected reference signal, the data transmission pattern used by the first device to send the data.

For example, if locations of symbols in the time domain resource that correspond to different data transmission patterns in the data transmission pattern set and that are used for the reference signal are the same, when a reference signal sent by the first device on a symbol, in the time domain resource, that corresponds to the used data transmission pattern and that is used for the reference signal is different from a reference signal sent on a symbol, in the time domain resource, that corresponds to another data transmission pattern in the data transmission pattern set and that is used for the reference signal, the second device may determine, based on different detected reference signals, the data transmission pattern used by the first device to send the data.

It should be noted that, in this embodiment of this application, that reference signals are different may include at least one of the following: base sequences used to generate the reference signals are different, cyclic shifts (Cyclic Shift, CS) used to generate the reference signals are different, and frequency combs occupied by the reference signals are different.

505: The second device demodulates the at least one physical channel based on the one or more reference signals.

After determining the data transmission pattern used by the first device to transmit the data, the second device may determine, based on the determined data transmission pattern, the data transmitted on the time domain resource indicated by the data transmission pattern.

It should be noted that, in this embodiment of this application, the first device is a transmit end device, and the second device is a receive end device. Specifically, when the foregoing method is applied to the uplink data transmission process in the grant free-based data transmission mechanism, the first device may be the terminal device, and the second device may be the network device, for example, the access network device. When the foregoing method is applied to the downlink data transmission process in the grant free-based data transmission mechanism, the first device may be the network device, for example, the access network device, and the second device may be the terminal device.

For ease of understanding by a person skilled in the art, the following uses examples to describe a specific implementation of the data transmission pattern set in this embodiment of this application. In addition, in the following examples, an example in which one data transmission pattern corresponds to one or more sTTIs, and the sTTI may include two or three symbols is used to describe the data transmission pattern set. In addition, for ease of description, in the following specific examples, an example in which the reference signal is a DMRS is used for description. In addition, for ease of description, data transmission patterns having overlapping reference signals at a time location are referred to as overlapping data transmission patterns.

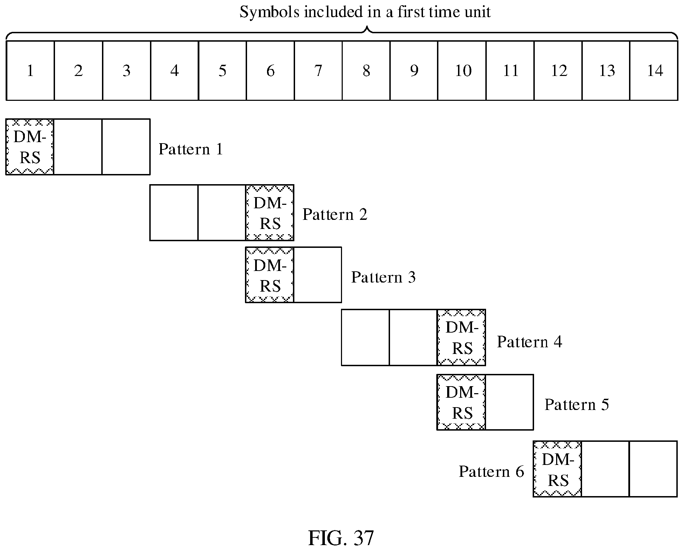

In an example 1, with reference to FIG. 37, the data transmission pattern set may include at least two of the following data transmission patterns: a pattern 1 used to indicate three consecutive symbols starting from the first symbol in a first time unit, where the three consecutive symbols are successively used to transmit R, D, and D; a pattern 2 used to indicate three consecutive symbols starting from the fourth symbol in the first time unit, where the three consecutive symbols are successively used to transmit D, D, and R; a pattern 3 used to indicate two consecutive symbols starting from the sixth symbol in the first time unit, where the two consecutive symbols are successively used to transmit R and D; a pattern 4 used to indicate three consecutive symbols starting from the eighth symbol in the first time unit, where the three consecutive symbols are successively used to transmit D, D, and R; a pattern 5 used to indicate two consecutive symbols starting from the tenth symbol in the first time unit, where the two consecutive symbols are successively used to transmit R and D; and a pattern 6 used to indicate three consecutive symbols starting from the twelfth symbol in the first time unit, where the three consecutive symbols are successively used to transmit R, D, and D.

In the data transmission pattern set shown in FIG. 37, DMRSs included in the pattern 2 and the pattern 3 overlap at a time location, and DMRSs included in the pattern 4 and the pattern 5 overlap at a time location. In this case, different DMRSs may be used to distinguish between different data transmission patterns, or different frequency domain resources may be used to distinguish between different data transmission patterns.

That different DMRSs are used to distinguish between different data transmission patterns is used as an example. For example, to distinguish between the pattern 2 and the pattern 3, a DMRS used when the pattern 2 is used for data transmission may be different from a DMRS used when the pattern 3 is used for data transmission. Specifically, the DMRS used when the pattern 2 is used for data transmission and the DMRS used when the pattern 3 is used for data transmission may be generated based on different base sequences, or may be generated based on a same base sequence but different CSs, or may be generated based on a same base sequence and a same CS, but occupy different frequency combs. The receive end device may determine, based on a received DMRS, a specific data transmission pattern corresponding to the received DMRS, so as to correctly receive data based on the determined data transmission pattern. Descriptions of the pattern 4 and the pattern 5 are similar to the descriptions of the pattern 2 and the pattern 3. Details are not described herein in this embodiment of this application.

In addition, for a data transmission pattern that has no overlapping DMRS with another data transmission pattern at a time location, a DMRS used when the data transmission pattern is used for data transmission may be the same as or different from a DMRS used when an overlapping data transmission pattern is used for data transmission. For example, referring to FIG. 37, if a data transmission pattern set includes the foregoing six data transmission patterns, two different DMRSs may be configured for the data transmission pattern set, and a correspondence between the different DMRSs and different data transmission patterns is configured. For example, one of the two DMRSs is used when data is transmitted by using each of the pattern 2 and the pattern 3, and one of the two DMRSs is used when data is transmitted by using each of the pattern 4 and the pattern 5. A DMRS used when the pattern 1 is used for data transmission may be the same as a DMRS used when the pattern 2 is used for data transmission, or may be the same as a DMRS used when the pattern 3 is used for data transmission. This is not specifically limited in this embodiment of this application. A description of the pattern 6 is similar to that of the pattern 1. In addition, the DMRS used when the pattern 1 is used for data transmission may be the same as or different from a DMRS used when the pattern 6 is used for data transmission. This is not specifically limited in this embodiment of this application either.

It should be noted that, if different frequency domain resources are used to distinguish between different data transmission patterns, a specific implementation is similar to the implementation in which different DMRSs are used to distinguish between different data transmission patterns. Details are not described herein in this embodiment of this application. In addition, the data transmission patterns included in the data transmission pattern set shown in the example 1 are applicable to one time of grant free-based data transmission.

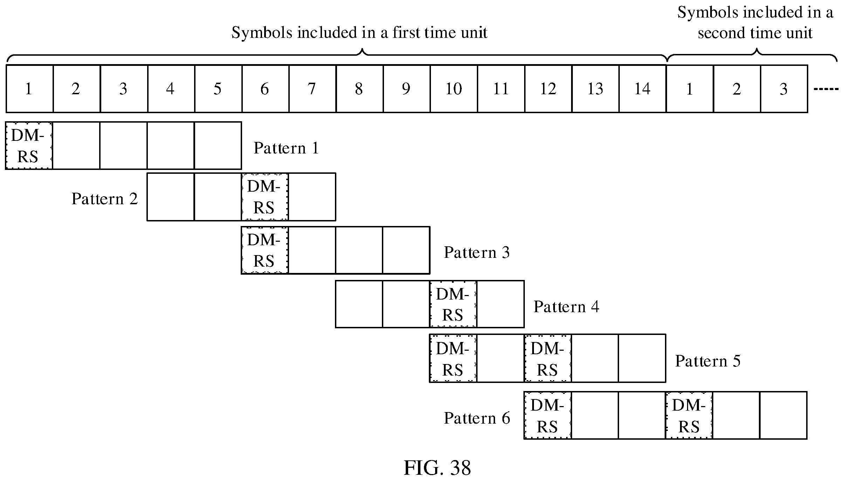

In an example 2, with reference to FIG. 38, the data transmission pattern set may include at least two of the following data transmission patterns: a pattern 1 used to indicate five consecutive symbols starting from the first symbol in a first time unit, where the five consecutive symbols are successively used to transmit R, D, D, D, and D; a pattern 2 used to indicate four consecutive symbols starting from the fourth symbol in the first time unit, where the four consecutive symbols are successively used to transmit D, D, R, and D; a pattern 3 used to indicate four consecutive symbols starting from the sixth symbol in the first time unit, where the four consecutive symbols are successively used to transmit R, D, D, and D; a pattern 4 used to indicate four consecutive symbols starting from the eighth symbol in the first time unit, where the four consecutive symbols are successively used to transmit D, D, R, and D; a pattern 5 used to indicate five consecutive symbols starting from the tenth symbol in the first time unit, where the five consecutive symbols are successively used to transmit R, D, R, D, and D; and a pattern 6 used to indicate six consecutive symbols starting from the twelfth symbol in the first time unit to the third symbol in a second time unit, where the six consecutive symbols are successively used to transmit R, D, D, R, D, and D.

In the data transmission pattern set shown in FIG. 38, the pattern 2 and the pattern 3 are overlapping data transmission patterns, the pattern 4 and the pattern 5 are overlapping data transmission patterns, the pattern 5 and the pattern 6 are overlapping data transmission patterns, and the pattern 6 and a pattern 1 in the second time unit, that is, a next time unit of the first time unit, are overlapping data transmission patterns. Different DMRSs may be used to distinguish between different data transmission patterns, or different frequency domain resources may be used to distinguish between different data transmission patterns.

That different DMRSs are used to distinguish between different data transmission patterns is used as an example. In the data transmission pattern set shown in FIG. 38, two different data transmission patterns have overlapping DMRSs at a time location. Therefore, two different DMRSs may be configured to distinguish between the different overlapping data transmission patterns, so that the receive end device can distinguish between the different overlapping data transmission patterns based on the two different DMRSs. A specific description thereof is similar to the specific description in the example 1, and details are not described herein in this embodiment of this application.

Optionally, for the pattern 4 and the pattern 5, a quantity 2 of DMRSs used when the pattern 5 is used for data transmission is greater than a quantity 1 of DMRSs used when the pattern 4 is used for data transmission. Therefore, the receive end device may further determine different data transmission patterns based on a quantity of DMRSs detected in a specific pattern. In this case, a DMRS used when the pattern 4 is used for data transmission may be the same as a DMRS used when the pattern 5 is used for data transmission. For example, the receive end device such as the access network device detects a DMRS on the tenth symbol included in a first time unit, for example, a subframe, and the DMRS may correspond to the pattern 4 or the pattern 5. In this case, the access network device may continue to detect whether there is also a DMRS on a subsequent symbol, that is, the twelfth symbol. If the access network device detects the DMRS on the twelfth symbol, the access network device may determine that the terminal device uses the pattern 5 to transmit uplink data. If the access network device detects no DMRS on the twelfth symbol, the access network device may determine that the terminal device uses the pattern 4 to transmit uplink data.

It should be noted that, if different frequency domain resources are used to distinguish between different data transmission patterns, a specific implementation is similar to the implementation in which different DMRSs are used to distinguish between different data transmission patterns. Details are not described herein in this embodiment of this application. In addition, the data transmission patterns included in the data transmission pattern set shown in the example 2 are applicable to two times of grant free-based data transmission.

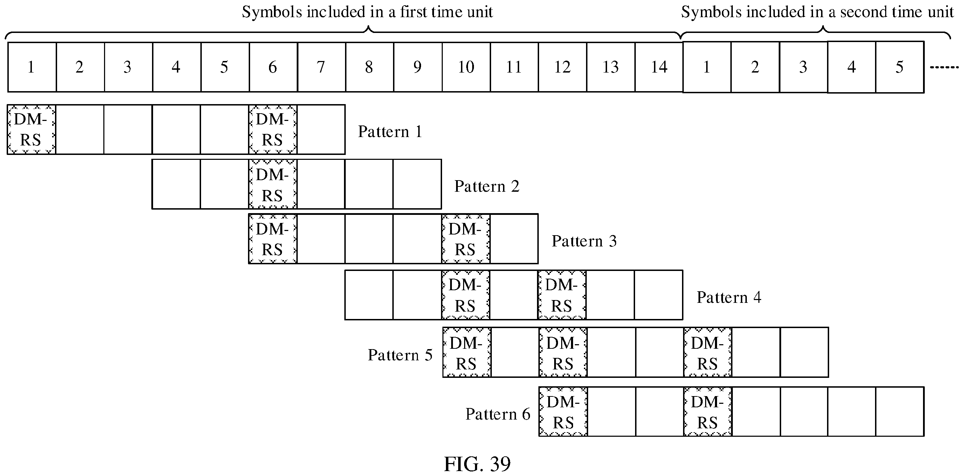

In an example 3, with reference to FIG. 39, the data transmission pattern set may include at least two of the following data transmission patterns: a pattern 1 used to indicate seven consecutive symbols starting from the first symbol in a first time unit, where the seven consecutive symbols are successively used to transmit R, D, D, D, D, R, and D; a pattern 2 used to indicate six consecutive symbols starting from the fourth symbol in the first time unit, where the six consecutive symbols are successively used to transmit D, D, R, D, D, and D; a pattern 3 used to indicate six consecutive symbols starting from the sixth symbol in the first time unit, where the six consecutive symbols are successively used to transmit R, D, D, D, R, and D; a pattern 4 used to indicate seven consecutive symbols starting from the eighth symbol in the first time unit, where the seven consecutive symbols are successively used to transmit D, D, R, D, R, D, and D; a pattern 5 used to indicate eight consecutive symbols starting from the tenth symbol in the first time unit to the third symbol in a second time unit, where the eight consecutive symbols are successively used to transmit R, D, R, D, D, R, D, and D; and a pattern 6 used to indicate eight consecutive symbols starting from the twelfth symbol in the first time unit to the fifth symbol in the second time unit, where the eight consecutive symbols are successively used to transmit R, D, D, R, D, D, D, and D. Optionally, in FIG. 39, in the data transmission pattern set, the pattern 5 may not exist together with the pattern 4 and the pattern 6.

In the data transmission pattern set shown in FIG. 39, the pattern 1, the pattern 2, and the pattern 3 are overlapping data transmission patterns, the pattern 3, the pattern 4, and the pattern 5 are overlapping data transmission patterns, the pattern 4, the pattern 5, and the pattern 6 are overlapping data transmission patterns, and the pattern 5, the pattern 6, and a pattern 1 in the second time unit, that is, a next time unit of the first time unit, are overlapping data transmission patterns. Different DMRSs may be used to distinguish between different data transmission patterns, or different frequency domain resources may be used to distinguish between different data transmission patterns.

That different DMRSs are used to distinguish between different data transmission patterns is used as an example. In the data transmission pattern set shown in FIG. 39, a maximum of three data transmission patterns have overlapping DMRSs at a time location. Therefore, three different DMRSs may be configured to distinguish between the different overlapping data transmission patterns, so that the receive end device can distinguish between the different overlapping data transmission patterns based on the three different DMRSs. A specific description thereof is similar to the specific description in the example 1, and details are not described herein in this embodiment of this application.

Optionally, it can be learned from FIG. 39 that different quantities of DMRSs are used when different overlapping data transmission patterns are used for data transmission. Therefore, different DMRSs may be used to distinguish between only overlapping data transmission patterns in which a same quantity of DMRSs are used for data transmission. Using FIG. 39 as an example, only the pattern 1 and the pattern 3 may be distinguished by using different DMRSs.

In addition, it is assumed that DMRSs used when a data transmission pattern is used for data transmission overlap DMRSs used when different data transmission patterns are used for data transmission. To be specific, at least two DMRSs are used when a data transmission pattern is used for data transmission, and the at least two DMRSs overlap, at time locations, DMRSs used when different data transmission patterns are used. For example, the pattern 1 in FIG. 39 has a DMRS that overlaps that in the pattern 2 or the pattern 3 at a time location, and has a DMRS that overlaps that in the pattern 6 at a time location. Because the DMRSs in the pattern 1 that overlap those in the two patterns at the time locations are located at different symbol locations, it may be only specified that one DMRS in the pattern 1 is different from an overlapping DMRS used in a data transmission pattern having the DMRS that overlaps the DMRS in the pattern 1. For example, with reference to FIG. 38, still using the pattern 1 as an example, it may be only specified that the first DMRS used when the pattern 1 is used for data transmission is different from the second DMRS used when the pattern 6 is used for data transmission, and the second DMRS used when the pattern 1 is used for data transmission may be the same as or different from the first DMRS used when the pattern 3 is used for data transmission. If the second DMRS used when the pattern 1 is used for data transmission is the same as the first DMRS used when the pattern 3 is used for data transmission, the receive end device may determine, by detecting whether there is a DMRS on the first symbol in a first time unit such as a subframe, whether the transmit end device uses the pattern 1 or the pattern 3 for data transmission. If the receive end device detects the DMRS on the first symbol in the first time unit such as the subframe, because the first DMRS used when the pattern 1 is used for data transmission is different from the second DMRS used when the pattern 6 is used for data transmission, the receive end device may determine, by using different DMRSs, whether the transmit end device uses the pattern 1 or the pattern 6 for data transmission.

Considering that the receive end device may miss detecting the DMRS, different DMRSs may be used when different overlapping data transmission patterns are used for data transmission. For example, with reference to FIG. 38, still using the pattern 1 as an example, considering that the first DMRS used when the pattern 1 is used for data transmission overlaps, at a time location, the second DMRS used when the pattern 6 is used for data transmission, the first DMRS used when the pattern 1 is used for data transmission may be different from the DMRS used when the pattern 6 is used for data transmission. For example, a CS corresponding to the first DMRS used when the pattern 1 is used for data transmission is a CS-i, and a CS corresponding to the second DMRS used when the pattern 6 is used for data transmission is a CS-j. In addition, considering that the second DMRS used when the pattern 1 is used for data transmission overlaps, at a time location, the first DMRS used when the pattern 3 is used for data transmission, the second DMRS used when the pattern 1 is used for data transmission may be different from the first DMRS used when the pattern 3 is used for data transmission. For example, a CS corresponding to the second DMRS used when the pattern 1 is used for data transmission is a CS-m, and a CS corresponding to the first DMRS used when the pattern 3 is used for data transmission is a CS-n. CSs corresponding to the two DMRSs used when the pattern 1 is used for data transmission may be the same or may be different. This is not specifically limited in this embodiment of this application.

It should be noted that, in this embodiment of this application, overlapping DMRSs mean that the DMRSs transmitted when different data transmission patterns are used for data transmission overlap at a time location.

In conclusion, usually, it is assumed that the data transmission pattern set includes M data transmission patterns. M is an integer not less than 2. In addition, it is assumed that the M data transmission patterns include at least N overlapping data transmission patterns. N is an integer not less than 2 and not greater than M. In this case, for distinguishing, different DMRSs are used as DMRSs that overlap at a time location and that are in at least two of the N overlapping data transmission patterns.

It should be noted that, if different frequency domain resources are used to distinguish between different data transmission patterns, a specific implementation is similar to the implementation in which different DMRSs are used to distinguish between different data transmission patterns. Details are not described herein in this embodiment of this application. In addition, the data transmission patterns included in the data transmission pattern set shown in the example 3 are applicable to three times of grant free-based data transmission.

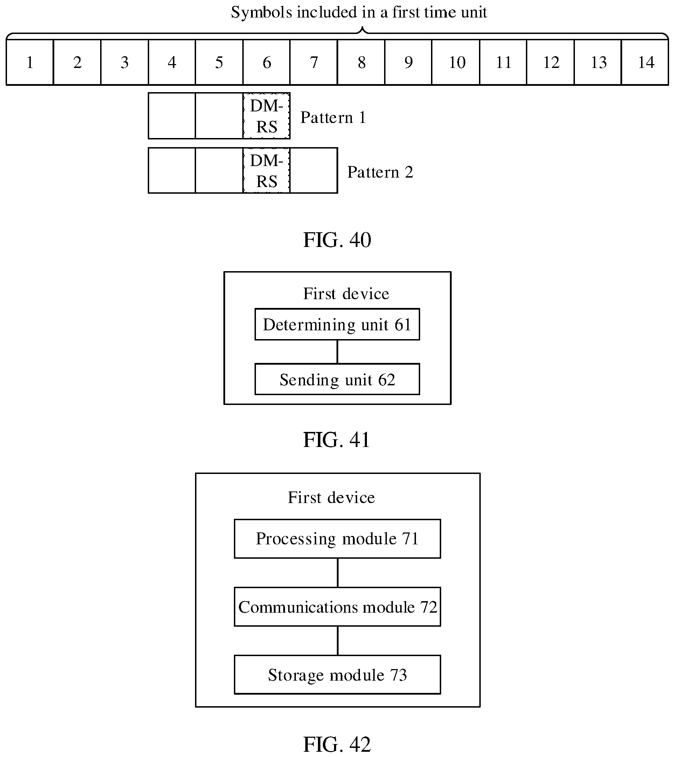

In addition, in this embodiment of this application, it should be noted that different data transmission patterns that have overlapping DMRSs at a time location may include a same transmission time interval or different transmission time intervals. For example, with reference to FIG. 40, it is assumed that a data transmission pattern set includes two data transmission patterns: a pattern 1 and a pattern 2, and DMRSs used when the two data transmission patterns are used for data transmission overlap at a time location. In this case, the foregoing manner may also be used to distinguish between the different data transmission patterns. Optionally, for two transmission time intervals included in the pattern 2, a same TB may be transmitted, or different TBs may be transmitted. This is not specifically limited in this embodiment of this application.

It should be noted that specific descriptions of this embodiment of this application are similar to the specific descriptions of corresponding content in the embodiment shown in FIG. 4. For the specific descriptions of this embodiment of this application, refer to the specific descriptions of the corresponding content in the embodiment shown in FIG. 4. Details are not described herein again.

According to the data transmission method provided in this embodiment of this application, when data is transmitted by using the foregoing data transmission pattern set, a prior-art problem that a receive end device cannot determine which symbol is used as a transmission resource used for received data can be resolved. In other words, in the grant free-based data transmission mechanism, it can be ensured that a receive end can accurately determine a location at which a transmit end transmits data. For example, for the data transmission pattern set designed based on the structure in the mode in which a DMRS is shared by sTTIs, because reference signals used when different data transmission patterns are used for data transmission are in a one-to-one correspondence with the data transmission patterns including the reference signals, the receive end device can determine, based on the data transmission pattern, which symbol is used as the transmission resource used for the received data, so as to correctly obtain the data through demodulation.

In addition, with reference to the embodiments described in FIG. 4 and FIG. 35 of this application, in sTTIs, sTTIs at different time locations correspond to different quantities of symbols used for data transmission. For example, with reference to FIG. 23, each of an sTTI 0 and an sTTI 5 includes two symbols that can be used for data transmission, and each of an sTTI 1 to an sTTI 4 includes only one symbol that can be used for data transmission. Therefore, to ensure data transmission efficiency and reliability, for the sTTI 0 and the sTTI 5, a corresponding TBS scaling factor (Scaling factor) is 1/6, and for the sTTI 1 to the sTTI 4, a corresponding TBS scaling factor is 1/12. When using an sTTI for data transmission (including receiving and/or sending), in different sTTIs, a transmit end device may determine actual TBSs in transmission by using an original TBS and TBS scaling factors corresponding to the sTTIs. The original TBS may be determined based on a resource that is included in 1 ms and that can be used for data transmission. For example, it is assumed that a TBS in transmission performed by the transmit end device such as a terminal device by using an MCS on a frequency resource included in 1 ms is 1200 bits. In this case, a TBS in transmission performed by the terminal device by using the frequency resource and the MCS based on the sTTI 0 or the sTTI 5 shown in FIG. 23 is 200 bits, and a TBS in transmission performed by the terminal device by using the frequency resource and the MCS based on each of the sTTI 1 to the sTTI 5 shown in FIG. 23 is 100 bits. There is a similar description for the sTTI data structure included in FIG. 24. To be specific, a TBS scaling factor corresponding to each of the sTTI 0, the sTTI 1, the sTTI 3, and the sTTI 5 is 1/6, and a TBS scaling factor corresponding to each of the sTTI 2 and the sTTI 4 is 1/12. In this case, to ensure data transmission reliability and a transmission latency in an LTE URLLC system, the transmit end device may implement repeated transmission based on the sTTI data structure. All times of repeated transmission correspond to a same data packet. In other words, all times of repeated transmission correspond to a same TBS. However, with reference to the current sTTI data structure, it can be learned that TBS scaling factors corresponding to different sTTIs are different. Therefore, how to determine, based on the sTTI data structure, a TBS corresponding to each sTTI in repeated transmission is a problem that needs to be considered. The following provides several solutions.

Solution 1: For repeated transmission based on the sTTI data structure, a scaling factor of a TBS corresponding to each time of transmission included in repeated transmission may be uniquely determined. For example, the scaling factor of the TBS corresponding to each time of transmission included in repeated transmission is 1/12 or 1/6. A specific value to be used for the scaling factor may be determined by using a signaling indication, for example, may be determined by an access network device by using RRC signaling or physical layer signaling, or may be specified in a standard protocol.

Solution 2: An example in which the transmit end device is a terminal device and the receive end device is a network device such as an access network device is used. The terminal device may determine, based on an MCS configured by the access network device, whether the TBS scaling factor is 1/12 or 1/6, to determine a TBS corresponding to each time of transmission in repeated transmission. In this case, assuming that the terminal device calculates an actual TBS in transmission based on 1/6, when the TBS is used in repeated transmission performed in an sTTI with fewer data symbols, if the terminal device can further determine a valid MCS, the terminal device may determine, based on the TBS scaling factor 1/6, the TBS corresponding to each time of transmission in repeated transmission; or if the terminal device cannot determine a valid MCS, the terminal device can determine, based on only the TBS scaling factor 1/12, the TBS corresponding to each time of transmission in repeated transmission. The valid MCS is an MCS in which a bit rate does not exceed a specific threshold. For example, the bit rate does not exceed 0.93.

Solution 3: An example in which the transmit end device is a terminal device and the receive end device is a network device such as an access network device is used. The terminal device determines, based on a quantity of sTTIs that are included in repeated transmission and in which TBSs are calculated based on the TBS scaling factor 1/12 and a quantity of sTTIs that are included in repeated transmission and in which TBSs are calculated based on the TBS scaling factor 1/6, the TBS corresponding to each time of transmission in repeated transmission. If the quantity of sTTIs in which TBSs are calculated based on the TBS scaling factor 1/12 is greater than the quantity of sTTIs in which TBSs are calculated based on the TBS scaling factor 1/6, the terminal device determines, based on the scaling factor 1/12, the TBS corresponding to each time of transmission in repeated transmission. In this case, the terminal device further needs to notify the access network device of a start location of repeated transmission, to ensure correct understanding for the TBS scaling factor.

Solution 4: An example in which the transmit end device is a terminal device and the receive end device is a network device such as an access network device is used. For an sTTI in which two symbols can be used to transmit data, the terminal device calculates a corresponding TBS based on the TBS scaling factor 1/6. For an sTTI in which one symbol is used to transmit data, the terminal device may map the TBS obtained through calculation based on the TBS scaling factor 1/6 to two sTTIs in which one symbol is used to transmit data. Optionally, the two sTTIs in which one symbol is used to transmit data are consecutive in terms of time. In this way, data transmission reliability can be ensured.

The foregoing mainly describes the solutions in the embodiments of this application from a perspective of interaction between network elements. It can be understood that, to implement the foregoing functions, the network elements, for example, the first device and the second device, include corresponding hardware structures and/or software modules for performing the functions. A person skilled in the art should easily be aware that, in combination with the examples described in the embodiments disclosed in this specification, units and algorithm steps can be implemented by hardware or a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In the embodiments of this application, function module division may be performed on the first device and the second device based on the foregoing method embodiments. For example, each function module may be obtained through division based on each function, or two or more functions may be integrated into one processing module. The integrated module may be implemented in a form of hardware, or may be implemented in a form of a software function module. It should be noted that, in the embodiments of this application, division into modules is an example, and is merely logical function division. In actual implementation, there may be another division manner.

When each function module is obtained through division based on each corresponding function, FIG. 41 is a possible schematic composition diagram of the first device in the foregoing embodiments. As shown in FIG. 41, the first device may include a determining unit 61 and a sending unit 62.

The determining unit 61 is configured to support the first device in performing step 401 in the data transmission method shown in FIG. 4, and/or configured to support the first device in performing step 501 in the data transmission method shown in FIG. 36.

The sending unit 62 is configured to support the first device in performing step 402 in the data transmission method shown in FIG. 4, and/or configured to support the first device in performing step 502 in the data transmission method shown in FIG. 36.

It should be noted that all related content of the steps in the foregoing method embodiments may be cited in function descriptions of corresponding function modules. Details are not described herein.

The first device provided in this embodiment of this application is configured to perform the foregoing data transmission method, and therefore can achieve a same effect as the foregoing data transmission method.

When an integrated unit is used, FIG. 42 is another possible schematic composition diagram of the first device in the foregoing embodiments. As shown in FIG. 42, the first device may include a processing module 71 and a communications module 72.

The processing module 71 is configured to control and manage an action of the first device and/or is configured to perform another process of the technology described in this specification. The communications module 72 is configured to support the first device in communicating with another network entity, for example, communicating with a function module or a network entity shown in FIG. 1, FIG. 43, or FIG. 44. Specifically, for example, the communications module 72 is configured to support the first device in performing step 402 in FIG. 4 and/or step 502 in FIG. 36. The first device may further include a storage module 73, configured to store program code and data of the first device.

The processing module 71 may be a processor or a controller. The processor may implement or execute various example logical blocks, modules, and circuits described with reference to content disclosed in this application. Alternatively, the processor may be a combination of processors implementing a computing function, for example, a combination of one or more microprocessors, or a combination of a DSP and a microprocessor. The communications module 72 may be a transceiver, a transceiver circuit, a communications interface, or the like. The storage module 73 may be a memory.

When the processing module 71 is a processor, the communications module 72 is a transceiver, and the storage module 73 is a memory, the first device in this embodiment of this application may be the network device shown in FIG. 2 or the terminal device shown in FIG. 3.

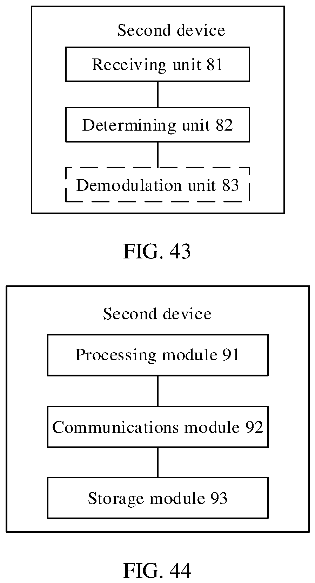

When each function module is obtained through division based on each corresponding function, FIG. 43 is a possible schematic composition diagram of the second device in the foregoing embodiments. As shown in FIG. 43, the second device may include a receiving unit 81 and a determining unit 82.

The receiving unit 81 is configured to support the second device in performing step 403 in the data transmission method shown in FIG. 4, and/or configured to support the second device in performing step 503 in the data transmission method shown in FIG. 36.

The determining unit 82 is configured to support the second device in performing step 404 in the data transmission method shown in FIG. 4, and/or configured to support the second device in performing step 504 in the data transmission method shown in FIG. 36.

Further, as shown in FIG. 43, the second device may further include a demodulation unit 83.

The demodulation unit 83 is configured to support the second device in performing step 405 in the data transmission method shown in FIG. 4, and/or configured to support the second device in performing step 505 in the data transmission method shown in FIG. 36.

It should be noted that all related content of the steps in the foregoing method embodiments may be cited in function descriptions of corresponding function modules. Details are not described herein.

The second device provided in this embodiment of this application is configured to perform the foregoing data transmission method, and therefore can achieve a same effect as the foregoing data transmission method.

When an integrated unit is used, FIG. 44 is another possible schematic composition diagram of the second device in the foregoing embodiments. As shown in FIG. 44, the second device includes a processing module 91 and a communications module 92.

The processing module 91 is configured to control and manage an action of the second device and/or is configured to perform another process of the technology described in this specification. The communications module 92 is configured to support the second device in communicating with another network entity, for example, communicating with a function module or a network entity shown in FIG. 1, FIG. 41, or FIG. 42. Specifically, for example, the communications module 92 is configured to support the second device in performing step 403 in FIG. 4 and/or step 503 in FIG. 36. The second device may further include a storage module 93, configured to store program code and data of the second device.

The processing module 91 may be a processor or a controller. The processor may implement or execute various example logical blocks, modules, and circuits described with reference to content disclosed in this application. Alternatively, the processor may be a combination of processors implementing a computing function, for example, a combination of one or more microprocessors, or a combination of a DSP and a microprocessor. The communications module 92 may be a transceiver, a transceiver circuit, a communications interface, or the like. The storage module 93 may be a memory.

When the processing module 91 is a processor, the communications module 92 is a transceiver, and the storage module 93 is a memory, the second device in this embodiment of this application may be the network device shown in FIG. 2 or the terminal device shown in FIG. 3.

The foregoing descriptions about implementations allow a person skilled in the art to clearly understand that, for the purpose of convenient and brief description, division into the foregoing function modules is merely taken as an example for illustration. In actual application, the foregoing functions may be allocated to different function modules for implementation according to a requirement. To be specific, an inner structure of an apparatus is divided into different function modules to implement all or some of the functions described above.

In the several embodiments provided in this application, it should be understood that the disclosed apparatus and method may be implemented in other manners. For example, the described apparatus embodiments are merely examples. For example, the division into the modules or units is merely logical function division. There may be another division manner in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on a plurality of different places. Some or all of the units may be selected based on actual requirements to achieve the objectives of the solutions of the embodiments.

In addition, function units in the embodiments of this application may be integrated into one processing unit, or each of the units may exist alone physically, or two or more units are integrated into one unit. The integrated unit may be implemented in a form of hardware, or may be implemented in a form of a software function unit.

When the integrated unit is implemented in a form of a software function unit and sold or used as an independent product, the integrated unit may be stored in a readable storage medium. Based on such an understanding, the technical solutions of the embodiments of this application essentially, or the part contributing to the prior art, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in the embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A data transmission method, wherein the method comprises:
determining (401), by a first device, a data transmission pattern, wherein the data transmission pattern corresponds to a time domain resource; and
sending (402), by the first device, one or more reference signals R and at least one physical channel D on the time domain resource based on the data transmission pattern, wherein
the data transmission pattern is used to indicate symbols that are in the time domain resource and that are used for the one or more reference signals R and the at least one physical channel D;
wherein
the data transmission pattern is one of at least two data transmission patterns comprised in a data transmission pattern set; and
locations of symbols in the time domain resource that correspond to different data transmission patterns in the data transmission pattern set and that are used for the one or more reference signals R are different, and/or quantities of symbols in the time domain resource that correspond to different data transmission patterns in the data transmission pattern set and that are used for the one or more reference signals R are different;
**characterized in that**
**(1)** the at least two data transmission patterns comprise at least two of the following:
a pattern used to indicate five consecutive symbols starting from the first symbol in a first time unit, wherein the five consecutive symbols are successively used to transmit R, D, D, D, and D;
a pattern used to indicate five consecutive symbols starting from the sixth symbol in the first time unit, wherein the five consecutive symbols are successively used to transmit R, D, D, D, and R; and
a pattern used to indicate four consecutive symbols starting from the eleventh symbol in the first time unit, wherein the four consecutive symbols are successively used to transmit D, R, D, and D;
**(2)** or alternatively, the at least two data transmission patterns comprise at least two of the following:
a pattern used to indicate five consecutive symbols starting from the first symbol in a first time unit, wherein the five consecutive symbols are successively used to transmit R, D, D, D, and D;
a pattern used to indicate four consecutive symbols starting from the sixth symbol in the first time unit, wherein the four consecutive symbols are successively used to transmit R, D, D, and R; and
a pattern used to indicate five consecutive symbols starting from the tenth symbol in the first time unit, wherein the five consecutive symbols are successively used to transmit R, D, D, D, and D;
**(3)** or alternatively, the at least two data transmission patterns comprise at least two of the following:
a pattern used to indicate four consecutive symbols starting from the fourth symbol in a first time unit, wherein the four consecutive symbols are successively used to transmit D, D, R, and D;
a pattern used to indicate four consecutive symbols starting from the eighth symbol in the first time unit, wherein the four consecutive symbols are successively used to transmit D, D, R, and D; and
a pattern used to indicate six consecutive symbols starting from the twelfth symbol in the first time unit to the third symbol in a second time unit, wherein the six consecutive symbols are successively used to transmit R, D, D, R, D, and D, the second time unit is a next time unit of the first time unit, and duration of the second time unit is equal to duration of the first time unit;
**(4)** or alternatively, the at least two data transmission patterns comprise at least two of the following:
a pattern used to indicate four consecutive symbols starting from the fourth symbol in a first time unit, wherein the four consecutive symbols are successively used to transmit R, D, D, and D;
a pattern used to indicate four consecutive symbols starting from the eighth symbol in the first time unit, wherein the four consecutive symbols are successively used to transmit R, D, D, and D; and
a pattern used to indicate six consecutive symbols starting from the twelfth symbol in the first time unit to the third symbol in a second time unit, wherein the six consecutive symbols are successively used to transmit R, D, D, R, D, and D, the second time unit is a next time unit of the first time unit, and duration of the second time unit is equal to duration of the first time unit.

2. A data transmission method, wherein the method comprises:
receiving (403), by a second device, one or more reference signals R; and
determining (404), by the second device, a data transmission pattern based on the one or more reference signals R, wherein the data transmission pattern corresponds to a time domain resource, and the time domain resource comprises the one or more reference signals R and at least one physical channel D, wherein
the data transmission pattern is used to indicate symbols that are in the time domain resource and that are used for the one or more reference signals R and the at least one physical channel D;
wherein
the data transmission pattern is one of at least two data transmission patterns comprised in a data transmission pattern set; and
locations of symbols in the time domain resource that correspond to different data transmission patterns in the data transmission pattern set and that are used for the one or more reference signals R are different, and/or quantities of symbols in the time domain resource that correspond to different data transmission patterns in the data transmission pattern set and that are used for the one or more reference signals R are different;
**characterized in that**
**(1)** the at least two data transmission patterns comprise at least two of the following:
a pattern used to indicate five consecutive symbols starting from the first symbol in a first time unit, wherein the five consecutive symbols are successively used to transmit R, D, D, D, and D;
a pattern used to indicate five consecutive symbols starting from the sixth symbol in the first time unit, wherein the five consecutive symbols are successively used to transmit R, D, D, D, and R; and
a pattern used to indicate four consecutive symbols starting from the eleventh symbol in the first time unit, wherein the four consecutive symbols are successively used to transmit D, R, D, and D;
**(2)** or alternatively, the at least two data transmission patterns comprise at least two of the following:
a pattern used to indicate five consecutive symbols starting from the first symbol in a first time unit, wherein the five consecutive symbols are successively used to transmit R, D, D, D, and D;
a pattern used to indicate four consecutive symbols starting from the sixth symbol in the first time unit, wherein the four consecutive symbols are successively used to transmit R, D, D, and R; and
a pattern used to indicate five consecutive symbols starting from the tenth symbol in the first time unit, wherein the five consecutive symbols are successively used to transmit R, D, D, D, and D;
**(3)** or alternatively, the at least two data transmission patterns comprise at least two of the following:
a pattern used to indicate four consecutive symbols starting from the fourth symbol in a first time unit, wherein the four consecutive symbols are successively used to transmit D, D, R, and D;
a pattern used to indicate four consecutive symbols starting from the eighth symbol in the first time unit, wherein the four consecutive symbols are successively used to transmit D, D, R, and D; and
a pattern used to indicate six consecutive symbols starting from the twelfth symbol in the first time unit to the third symbol in a second time unit, wherein the six consecutive symbols are successively used to transmit R, D, D, R, D, and D, the second time unit is a next time unit of the first time unit, and duration of the second time unit is equal to duration of the first time unit;
**(4)** or alternatively, the at least two data transmission patterns comprise at least two of the following:
a pattern used to indicate four consecutive symbols starting from the fourth symbol in a first time unit, wherein the four consecutive symbols are successively used to transmit R, D, D, and D;
a pattern used to indicate four consecutive symbols starting from the eighth symbol in the first time unit, wherein the four consecutive symbols are successively used to transmit R, D, D, and D; and
a pattern used to indicate six consecutive symbols starting from the twelfth symbol in the first time unit to the third symbol in a second time unit, wherein the six consecutive symbols are successively used to transmit R, D, D, R, D, and D, the second time unit is a next time unit of the first time unit, and duration of the second time unit is equal to duration of the first time unit.

3. The method according to claim 1 or 2, wherein
a quantity and/or locations of symbols used for the one or more reference signals R uniquely correspond to the data transmission pattern.

4. An apparatus, configured to implement the method in accordance with any of claims 1 to 3.

5. A computer-readable storage medium comprising instructions which, when executed by a computer, cause the computer to carry out the method according to any of claims 1 to 3.

## Patentansprüche

1. Datenübertragungsverfahren, wobei das Verfahren umfasst:
Bestimmen (401), durch eine erste Vorrichtung, eines Datenübertragungsmusters, wobei das Datenübertragungsmuster einer Zeitdomänenressource entspricht; und
Senden (402), durch die erste Vorrichtung, eines oder mehrerer Referenzsignale R und mindestens eines physischen Kanals D auf der Zeitdomänenressource basierend auf dem Datenübertragungsmuster, wobei
das Datenübertragungsmuster verwendet wird, um Symbole anzugeben, die sich in der Zeitdomänenressource befinden und die für das eine oder die mehreren Referenzsignale R und den mindestens einen physischen Kanal D verwendet werden;
wobei
das Datenübertragungsmuster eines von mindestens zwei Datenübertragungsmustern ist, die in einem Datenübertragungsmustersatz enthalten sind; und
sich Positionen von Symbolen in der Zeitdomänenressource unterscheiden, die unterschiedlichen Datenübertragungsmustern in dem Datenübertragungsmustersatz entsprechen und die für das eine oder die mehreren Referenzsignale R verwendet werden, und/oder sich Symbolmengen in der Zeitdomänenressource unterscheiden, die unterschiedlichen Datenübertragungsmustern in dem Datenübertragungsmustersatz entsprechen und die für das eine oder die mehreren Referenzsignale R verwendet werden;
**dadurch gekennzeichnet, dass**
**(1)** die mindestens zwei Datenübertragungsmuster mindestens zwei umfassen aus Folgendem:
einem Muster, das verwendet wird, um beginnend ab dem ersten Symbol in einer ersten Zeiteinheit fünf aufeinanderfolgende Symbole anzugeben, wobei die fünf aufeinanderfolgenden Symbole nacheinander verwendet werden, um R, D, D, D und D zu übertragen;
einem Muster, das verwendet wird, um beginnend ab dem sechsten Symbol in der ersten Zeiteinheit fünf aufeinanderfolgende Symbole anzugeben, wobei die fünf aufeinanderfolgenden Symbole nacheinander verwendet werden, um R, D, D, D und R zu übertragen; und
einem Muster, das verwendet wird, um beginnend ab dem elften Symbol in der ersten Zeiteinheit vier aufeinanderfolgende Symbole anzugeben, wobei die vier aufeinanderfolgenden Symbole nacheinander verwendet werden, um D, R, D und D zu übertragen;
**(2)** oder alternativ die mindestens zwei Datenübertragungsmuster mindestens zwei umfassen aus Folgendem:
einem Muster, das verwendet wird, um beginnend ab dem ersten Symbol in einer ersten Zeiteinheit fünf aufeinanderfolgende Symbole anzugeben, wobei die fünf aufeinanderfolgenden Symbole nacheinander verwendet werden, um R, D, D, D und D zu übertragen;
einem Muster, das verwendet wird, um beginnend ab dem sechsten Symbol in der ersten Zeiteinheit vier aufeinanderfolgende Symbole anzugeben, wobei die vier aufeinanderfolgenden Symbole nacheinander verwendet werden, um R, D, D und R zu übertragen; und
einem Muster, das verwendet wird, um beginnend ab dem zehnten Symbol in der ersten Zeiteinheit fünf aufeinanderfolgende Symbole anzugeben, wobei die fünf aufeinanderfolgenden Symbole nacheinander verwendet werden, um R, D, D, D und D zu übertragen;
**(3)** oder alternativ die mindestens zwei Datenübertragungsmuster mindestens zwei umfassen aus Folgendem:
einem Muster, das verwendet wird, um beginnend ab dem vierten Symbol in einer ersten Zeiteinheit vier aufeinanderfolgende Symbole anzugeben, wobei die vier aufeinanderfolgenden Symbole nacheinander verwendet werden, um D, D, R und D zu übertragen;
einem Muster, das verwendet wird, um beginnend ab dem achten Symbol in der ersten Zeiteinheit vier aufeinanderfolgende Symbole anzugeben, wobei die vier aufeinanderfolgenden Symbole nacheinander verwendet werden, um D, D, R und D zu übertragen; und
einem Muster, das verwendet wird, um beginnend ab dem zwölften Symbol in der ersten Zeiteinheit bis zum dritten Symbol in einer zweiten Zeiteinheit sechs aufeinanderfolgende Symbole anzugeben, wobei die sechs aufeinanderfolgenden Symbole nacheinander verwendet werden, um R, D, D, R, D und D zu übertragen, wobei die zweite Zeiteinheit eine benachbarte Zeiteinheit der ersten Zeiteinheit ist und die Dauer der zweiten Zeiteinheit gleich der Dauer der ersten Zeiteinheit ist;
**(4)** oder alternativ die mindestens zwei Datenübertragungsmuster mindestens zwei umfassen aus Folgendem:
einem Muster, das verwendet wird, um beginnend ab dem vierten Symbol in einer ersten Zeiteinheit vier aufeinanderfolgende Symbole anzugeben, wobei die vier aufeinanderfolgenden Symbole nacheinander verwendet werden, um R, D, D und D zu übertragen; einem Muster, das verwendet wird, um beginnend ab dem achten Symbol in der ersten Zeiteinheit vier aufeinanderfolgende Symbole anzugeben, wobei die vier aufeinanderfolgenden Symbole nacheinander verwendet werden, um R, D, D und D zu übertragen; und
einem Muster, das verwendet wird, um beginnend ab dem zwölften Symbol in der ersten Zeiteinheit bis zum dritten Symbol in einer zweiten Zeiteinheit sechs aufeinanderfolgende Symbole anzugeben, wobei die sechs aufeinanderfolgenden Symbole nacheinander verwendet werden, um R, D, D, R, D und D zu übertragen, wobei die zweite Zeiteinheit eine benachbarte Zeiteinheit der ersten Zeiteinheit ist und die Dauer der zweiten Zeiteinheit gleich der Dauer der ersten Zeiteinheit ist.

2. Datenübertragungsverfahren, wobei das Verfahren umfasst:
Empfangen (403), durch eine zweite Vorrichtung, eines oder mehrerer Referenzsignale R; und
Bestimmen (404), durch die zweite Vorrichtung, eines Datenübertragungsmusters basierend auf dem einen oder den mehreren Referenzsignalen R, wobei das Datenübertragungsmuster einer Zeitdomänenressource entspricht und die
Zeitdomänenressource das eine oder die mehreren Referenzsignale R und mindestens einen physischen Kanal D umfasst, wobei
das Datenübertragungsmuster verwendet wird, um Symbole anzugeben, die sich in der Zeitdomänenressource befinden und die für das eine oder die mehreren Referenzsignale R und den mindestens einen physischen Kanal D verwendet werden;
wobei
das Datenübertragungsmuster eines von mindestens zwei Datenübertragungsmustern ist, die in einem Datenübertragungsmustersatz enthalten sind; und
sich Positionen von Symbolen in der Zeitdomänenressource unterscheiden, die unterschiedlichen Datenübertragungsmustern in dem Datenübertragungsmustersatz entsprechen und die für das eine oder die mehreren Referenzsignale R verwendet werden, und/oder sich Symbolmengen in der Zeitdomänenressource unterscheiden, die unterschiedlichen Datenübertragungsmustern in dem Datenübertragungsmustersatz entsprechen und die für das eine oder die mehreren Referenzsignale R verwendet werden;
**dadurch gekennzeichnet, dass**
**(1)** die mindestens zwei Datenübertragungsmuster mindestens zwei umfassen aus Folgendem:
einem Muster, das verwendet wird, um beginnend ab dem ersten Symbol in einer ersten Zeiteinheit fünf aufeinanderfolgende Symbole anzugeben, wobei die fünf aufeinanderfolgenden Symbole nacheinander verwendet werden, um R, D, D, D und D zu übertragen;
einem Muster, das verwendet wird, um beginnend ab dem sechsten Symbol in der ersten Zeiteinheit fünf aufeinanderfolgende Symbole anzugeben, wobei die fünf aufeinanderfolgenden Symbole nacheinander verwendet werden, um R, D, D, D und R zu übertragen; und
einem Muster, das verwendet wird, um beginnend ab dem elften Symbol in der ersten Zeiteinheit vier aufeinanderfolgende Symbole anzugeben, wobei die vier aufeinanderfolgenden Symbole nacheinander verwendet werden, um D, R, D und D zu übertragen;
**(2)** oder alternativ die mindestens zwei Datenübertragungsmuster mindestens zwei umfassen aus Folgendem:
einem Muster, das verwendet wird, um beginnend ab dem ersten Symbol in einer ersten Zeiteinheit fünf aufeinanderfolgende Symbole anzugeben, wobei die fünf aufeinanderfolgenden Symbole nacheinander verwendet werden, um R, D, D, D und D zu übertragen;
einem Muster, das verwendet wird, um beginnend ab dem sechsten Symbol in der ersten Zeiteinheit vier aufeinanderfolgende Symbole anzugeben, wobei die vier aufeinanderfolgenden Symbole nacheinander verwendet werden, um R, D, D und R zu übertragen; und
einem Muster, das verwendet wird, um beginnend ab dem zehnten Symbol in der ersten Zeiteinheit fünf aufeinanderfolgende Symbole anzugeben, wobei die fünf aufeinanderfolgenden Symbole nacheinander verwendet werden, um R, D, D, D und D zu übertragen;
**(3)** oder alternativ die mindestens zwei Datenübertragungsmuster mindestens zwei umfassen aus Folgendem:
einem Muster, das verwendet wird, um beginnend ab dem vierten Symbol in einer ersten Zeiteinheit vier aufeinanderfolgende Symbole anzugeben, wobei die vier aufeinanderfolgenden Symbole nacheinander verwendet werden, um D, D, R und D zu übertragen; einem Muster, das verwendet wird, um beginnend ab dem achten Symbol in der ersten Zeiteinheit vier aufeinanderfolgende Symbole anzugeben, wobei die vier aufeinanderfolgenden Symbole nacheinander verwendet werden, um D, D, R und D zu übertragen; und
einem Muster, das verwendet wird, um beginnend ab dem zwölften Symbol in der ersten Zeiteinheit bis zum dritten Symbol in einer zweiten Zeiteinheit sechs aufeinanderfolgende Symbole anzugeben, wobei die sechs aufeinanderfolgenden Symbole nacheinander verwendet werden, um R, D, D, R, D und D zu übertragen, wobei die zweite Zeiteinheit eine benachbarte Zeiteinheit der ersten Zeiteinheit ist und die Dauer der zweiten Zeiteinheit gleich der Dauer der ersten Zeiteinheit ist;
**(4)** oder alternativ die mindestens zwei Datenübertragungsmuster mindestens zwei umfassen aus Folgendem:
einem Muster, das verwendet wird, um beginnend ab dem vierten Symbol in einer ersten Zeiteinheit vier aufeinanderfolgende Symbole anzugeben, wobei die vier aufeinanderfolgenden Symbole nacheinander verwendet werden, um R, D, D und D zu übertragen; einem Muster, das verwendet wird, um beginnend ab dem achten Symbol in der ersten Zeiteinheit vier aufeinanderfolgende Symbole anzugeben, wobei die vier aufeinanderfolgenden Symbole nacheinander verwendet werden, um R, D, D und D zu übertragen; und
einem Muster, das verwendet wird, um beginnend ab dem zwölften Symbol in der ersten Zeiteinheit bis zum dritten Symbol in einer zweiten Zeiteinheit sechs aufeinanderfolgende Symbole anzugeben, wobei die sechs aufeinanderfolgenden Symbole nacheinander verwendet werden, um R, D, D, R, D und D zu übertragen, wobei die zweite Zeiteinheit eine benachbarte Zeiteinheit der ersten Zeiteinheit ist und die Dauer der zweiten Zeiteinheit gleich der Dauer der ersten Zeiteinheit ist.

3. Verfahren nach Anspruch 1 oder 2, wobei
eine Menge und/oder Positionen von Symbolen, die für das eine oder die mehreren Referenzsignale R verwendet werden, dem Datenübertragungsmuster eindeutig entsprechen.

4. Gerät, das so konfiguriert ist, dass das Verfahren nach einem der Ansprüche 1 bis 3 umsetzt.

5. Computerlesbares Speichermedium, das Anweisungen umfasst, die bei Ausführung durch einen Computer den Computer veranlassen, das Verfahren nach einem der Ansprüche 1 bis 3 durchzuführen.

## Revendications

1. Procédé de transmission de données, dans lequel le procédé comprend :
la détermination (401), par un premier dispositif, d'un modèle de transmission de données, dans lequel le modèle de transmission de données correspond à une ressource de domaine temporel ; et
l'envoi (402), par le premier dispositif, d'un ou de plusieurs signaux de référence R et d'au moins un canal physique D sur la ressource de domaine temporel sur la base du modèle de transmission de données, dans lequel
le modèle de transmission de données est utilisé pour indiquer des symboles qui sont dans la ressource de domaine temporel et qui sont utilisés pour les un ou plusieurs signaux de référence R et l'au moins un canal physique D ;
dans lequel
le modèle de transmission de données est l'un d'au moins deux modèles de transmission de données compris dans un ensemble de modèles de transmission de données ; et
des emplacements de symboles dans la ressource de domaine temporel qui correspondent à différents modèles de transmission de données dans l'ensemble de modèles de transmission de données et qui sont utilisés pour les un ou plusieurs signaux de référence R sont différents, et/ou des quantités de symboles dans la ressource de domaine temporel qui correspondent à différents modèles de transmission de données dans l'ensemble de modèles de transmission de données et qui sont utilisées pour les un ou plusieurs signaux de référence R sont différentes ;
**caractérisé en ce que**
**(1)** les au moins deux modèles de transmission de données comprennent au moins deux des éléments suivants :
un modèle utilisé pour indiquer cinq symboles consécutifs à partir du premier symbole dans une première unité de temps, dans lequel les cinq symboles consécutifs sont utilisés successivement pour transmettre R, D, D, D et D ;
un modèle utilisé pour indiquer cinq symboles consécutifs à partir du sixième symbole dans la première unité de temps, dans lequel les cinq symboles consécutifs sont utilisés successivement pour transmettre R, D, D, D et R ; et
un modèle utilisé pour indiquer quatre symboles consécutifs à partir du onzième symbole dans la première unité de temps, dans lequel les quatre symboles consécutifs sont utilisés successivement pour transmettre D, R, D et D ;
**(2)** ou en variante, les au moins deux modèles de transmission de données comprennent au moins deux des éléments suivants :
un modèle utilisé pour indiquer cinq symboles consécutifs à partir du premier symbole dans une première unité de temps, dans lequel les cinq symboles consécutifs sont utilisés successivement pour transmettre R, D, D, D et D ;
un modèle utilisé pour indiquer quatre symboles consécutifs à partir du sixième symbole dans la première unité de temps, dans lequel les quatre symboles consécutifs sont utilisés successivement pour transmettre R, D, D et R ; et
un modèle utilisé pour indiquer cinq symboles consécutifs à partir du dixième symbole dans la première unité de temps, dans lequel les cinq symboles consécutifs sont utilisés successivement pour transmettre R, D, D, D et D ;
**(3)** ou en variante, les au moins deux modèles de transmission de données comprennent au moins deux des éléments suivants :
un modèle utilisé pour indiquer quatre symboles consécutifs à partir du quatrième symbole dans une première unité de temps, dans lequel les quatre symboles consécutifs sont utilisés successivement pour transmettre D, D, R et D ;
un modèle utilisé pour indiquer quatre symboles consécutifs à partir du huitième symbole dans la première unité de temps, dans lequel les quatre symboles consécutifs sont utilisés successivement pour transmettre D, D, R et D ; et
un modèle utilisé pour indiquer six symboles consécutifs à partir du douzième symbole dans la première unité de temps jusqu'au troisième symbole dans une seconde unité de temps, dans lequel les six symboles consécutifs sont utilisés successivement pour transmettre R, D, D, R, D et D, la seconde unité de temps est une unité de temps suivante de la première unité de temps, et la durée de la seconde unité de temps est égale à la durée de la première unité de temps ;
**(4)** ou en variante, les au moins deux modèles de transmission de données comprennent au moins deux des éléments suivants :
un modèle utilisé pour indiquer quatre symboles consécutifs à partir du quatrième symbole dans une première unité de temps, dans lequel les quatre symboles consécutifs sont utilisés successivement pour transmettre R, D, D et D ;
un modèle utilisé pour indiquer quatre symboles consécutifs à partir du huitième symbole dans la première unité de temps, dans lequel les quatre symboles consécutifs sont utilisés successivement pour transmettre R, D, D et D ; et
un modèle utilisé pour indiquer six symboles consécutifs à partir du douzième symbole dans la première unité de temps jusqu'au troisième symbole dans une seconde unité de temps, dans lequel les six symboles consécutifs sont utilisés successivement pour transmettre R, D, D, R, D et D, la seconde unité de temps est une unité de temps suivante de la première unité de temps, et la durée de la seconde unité de temps est égale à la durée de la première unité de temps.

2. Procédé de transmission de données, dans lequel le procédé comprend :
la réception (403), par un second dispositif, d'un ou de plusieurs signaux de référence R ; et
la détermination (404), par le second dispositif, d'un modèle de transmission de données sur la base des un ou plusieurs signaux de référence R, dans lequel le modèle de transmission de données correspond à une ressource de domaine temporel, et
la ressource de domaine temporel comprend les un ou plusieurs signaux de référence R et au moins un canal physique D, dans lequel
le modèle de transmission de données est utilisé pour indiquer des symboles qui sont dans la ressource de domaine temporel et
qui sont utilisés pour les un ou plusieurs signaux de référence R et l'au moins un canal physique D ;
dans lequel
le modèle de transmission de données est l'un d'au moins deux modèles de transmission de données compris dans un ensemble de modèles de transmission de données ; et
des emplacements de symboles dans la ressource de domaine temporel qui correspondent à différents modèles de transmission de données dans l'ensemble de modèles de transmission de données et qui sont utilisés pour les un ou plusieurs signaux de référence R sont différents, et/ou des quantités de symboles dans la ressource de domaine temporel qui correspondent à différents modèles de transmission de données dans l'ensemble de modèles de transmission de données et qui sont utilisées pour les un ou plusieurs signaux de référence R sont différentes ;
**caractérisé en ce que**
**(1)** les au moins deux modèles de transmission de données comprennent au moins deux des éléments suivants :
un modèle utilisé pour indiquer cinq symboles consécutifs à partir du premier symbole dans une première unité de temps, dans lequel les cinq symboles consécutifs sont utilisés successivement pour transmettre R, D, D, D et D ;
un modèle utilisé pour indiquer cinq symboles consécutifs à partir du sixième symbole dans la première unité de temps, dans lequel les cinq symboles consécutifs sont utilisés successivement pour transmettre R, D, D, D et R ; et
un modèle utilisé pour indiquer quatre symboles consécutifs à partir du onzième symbole dans la première unité de temps, dans lequel les quatre symboles consécutifs sont utilisés successivement pour transmettre D, R, D et D ;
**(2)** ou en variante, les au moins deux modèles de transmission de données comprennent au moins deux des éléments suivants :
un modèle utilisé pour indiquer cinq symboles consécutifs à partir du premier symbole dans une première unité de temps, dans lequel les cinq symboles consécutifs sont utilisés successivement pour transmettre R, D, D, D et D ;
un modèle utilisé pour indiquer quatre symboles consécutifs à partir du sixième symbole dans la première unité de temps, dans lequel les quatre symboles consécutifs sont utilisés successivement pour transmettre R, D, D et R ; et
un modèle utilisé pour indiquer cinq symboles consécutifs à partir du dixième symbole dans la première unité de temps, dans lequel les cinq symboles consécutifs sont utilisés successivement pour transmettre R, D, D, D et D ;
**(3)** ou en variante, les au moins deux modèles de transmission de données comprennent au moins deux des éléments suivants :
un modèle utilisé pour indiquer quatre symboles consécutifs à partir du quatrième symbole dans une première unité de temps, dans lequel les quatre symboles consécutifs sont utilisés successivement pour transmettre D, D, R et D ;
un modèle utilisé pour indiquer quatre symboles consécutifs à partir du huitième symbole dans la première unité de temps, dans lequel les quatre symboles consécutifs sont utilisés successivement pour transmettre D, D, R et D ; et
un modèle utilisé pour indiquer six symboles consécutifs à partir du douzième symbole dans la première unité de temps jusqu'au troisième symbole dans une seconde unité de temps, dans lequel les six symboles consécutifs sont utilisés successivement pour transmettre R, D, D, R, D et D, la seconde unité de temps est une unité de temps suivante de la première unité de temps, et la durée de la seconde unité de temps est égale à la durée de la première unité de temps ;
**(4)** ou en variante, les au moins deux modèles de transmission de données comprennent au moins deux des éléments suivants :
un modèle utilisé pour indiquer quatre symboles consécutifs à partir du quatrième symbole dans une première unité de temps, dans lequel les quatre symboles consécutifs sont utilisés successivement pour transmettre R, D, D et D ;
un modèle utilisé pour indiquer quatre symboles consécutifs à partir du huitième symbole dans la première unité de temps, dans lequel les quatre symboles consécutifs sont utilisés successivement pour transmettre R, D, D et D ; et
un modèle utilisé pour indiquer six symboles consécutifs à partir du douzième symbole dans la première unité de temps jusqu'au troisième symbole dans une seconde unité de temps, dans lequel les six symboles consécutifs sont utilisés successivement pour transmettre R, D, D, R, D et D, la seconde unité de temps est une unité de temps suivante de la première unité de temps, et la durée de la seconde unité de temps est égale à la durée de la première unité de temps.

3. Procédé selon la revendication 1 ou 2, dans lequel une quantité et/ou des emplacements de symboles utilisés pour les un ou plusieurs signaux de référence R correspondent uniquement au modèle de transmission de données.

4. Appareil, configuré pour mettre en œuvre le procédé selon l'une quelconque des revendications 1 à 3.

5. Support de stockage lisible par ordinateur comprenant des instructions qui, lorsqu'elles sont exécutées par un ordinateur, amènent l'ordinateur à exécuter le procédé selon l'une quelconque des revendications 1 à 3.
